# EUROPÄISCHE PATENTSCHRIFT

(11) **EP 3 090 017 B1**
(45) Veröffentlichungstag und Bekanntmachung des Hinweises auf die Patenterteilung: **15.07.2020**
(21) Anmeldenummer: 14830391.0
(22) Anmeldetag: 29.12.2014
(51) Int. Cl.: C08L 15/00, C08L 9/02, C08K 5/13, C07C 209/48

(54) **PHENOL-HALTIGE HYDRIERTE NITRILKAUTSCHUKE**
HYDROGENATED NITRILE RUBBERS CONTAINING PHENOL
CAOUTCHOUC DE NITRILE HYDROGÉNÉ CONTENANT DU PHÉNOL

(30) Priorität: 30.12.2013 EP 13199837
(43) Veröffentlichungstag der Anmeldung: 09.11.2016
(73) Patentinhaber: ARLANXEO Deutschland GmbH, 41540 Dormagen (DE)
(72) Erfinder: OBRECHT, Werner, 47447 Moers (DE)
(86) Internationale Anmeldenummer: PCT/EP2014/079368
(87) Internationale Veröffentlichungsnummer: WO 2015/101597

(56) Entgegenhaltungen:
- EP-A1- 0 384 210
- EP-A1- 2 316 860
- EP-A1- 2 418 225
- WO-A1-03/064513
- WO-A1-2011/032832

## Beschreibung

### Phenol-haltige hydrierte Nitrilkautschuke

Die Erfindung betrifft spezielle phenol-haltige hydrierte Nitrilkautschuke, ein Verfahren zu ihrer Herstellung, vulkanisierbare Mischungen auf deren Basis sowie hierbei erhaltene Vulkanisate.

Nitrilkautschuke sind Co- und Terpolymere aus mindestens einem ungesättigten Nitrilmonomeren, mindestens einem konjugierten Dien und gegebenenfalls einem oder weiteren copolymerisierbaren Monomeren. Verfahren zur Herstellung von Nitrilkautschuk (Ullmann's Encyclopedia of Industrial Chemistry, VCH Verlagsgesellschaft, Weinheim, 1993, S. 255-261**)** sowie Verfahren zur Hydrierung von Nitrilkautschuk in geeigneten organischen Lösungsmitteln sind bekannt **(**Ullmann's Encyclopedia of Industrial Chemistry, VCH Verlagsgesellschaft, Weinheim, 1993, S. 320 - 324**).**

Unter hydriertem Nitrilkautschuk, auch abgekürzt "HNBR", werden Kautschuke verstanden, die unter Verwendung von Nitrilkautschuken, auch abgekürzt "NBR", durch Hydrierung erhalten werden. Entsprechend sind in HNBR die C=C Doppelbindungen der einpolymerisierten Dien Einheiten ganz oder teilweise hydriert. Der Hydriergrad der einpolymerisierten Dien Einheiten liegt üblicherweise in einem Bereich von 50 bis 100%. Von sogenannten "vollhydrierten Typen" wird in der Fachwelt jedoch bereits gesprochen, wenn der Restdoppelbindungsgehalt maximal bei ca. 0,9 % liegt. Die am Markt kommerziell erhältlichen HNBR Typen weisen üblicherweise eine Mooney-Viskosität (ML 1+4 bei 100°C) im Bereich von 10 bis 120 Mooney Einheiten auf.

HNBR ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt. Die vorgenannten physikalischen und chemischen Eigenschaften des HNBR gehen einher mit sehr guten mechanischen Eigenschaften, insbesondere einer hohen Abriebfestigkeit. Aufgrund dieses Eigenschaftsprofils hat HNBR breite Verwendung in den verschiedensten Anwendungsgebieten gefunden. HNBR wird z.B. eingesetzt für Dichtungen, Schläuche, Riemen, Kabelmäntel, Walzenbeläge und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Eine besondere Rolle spielen Vulkanisate des HNBR mit hohem Modulniveau sowie niedrigem Druckverformungsrest ("Compression Set"), insbesondere nach langen Lagerzeiten bei hohen Temperaturen. Diese Eigenschaftskombination ist wichtig für Einsatzgebiete, in denen für die Gewährleistung der Funktionsfähigkeit der Gummiartikel sowohl bei statischer als auch dynamischer Belastung insbesondere nach langen Zeiten und gegebenenfalls hohen Temperaturen hohe Rückstellkräfte gefordert werden. Dies trifft vor allem auf unterschiedliche Dichtungen wie O-Ringe, Flanschdichtungen, Wellendichtringe, Statoren in Rotor/Statorpumpen, Ventilschaftdichtungen, Dichtungsmanschetten wie Achsmanschetten, Schlauchdichtungen, Motorlager, Brückenlager und Bohrlochdichtungen (blow-out-preventer) zu. Des Weiteren sind Vulkanisate mit hohem Modul wichtig für dynamisch belastete Artikel insbesondere für Riemen wie Antriebs- und Steuerriemen insbesondere Zahnriemen und für Walzenbeläge.

Nicht nur der Optimierung der Eigenschaften des hydrierten Nitrilkautschuks und darauf basierender Vulkanisate kommt hohe Bedeutung zu, sondern auch das Verfahren zur Herstellung hydrierter Nitrilkautschuke unter Optimierung der Verfahrensbedingungen ist kontinuierlicher Gegenstand von Forschungs- und Entwicklungsaktivitäten.

In US 4,503,196 wird ein Verfahren zur Hydrierung von Nitrilkautschuk unter Verwendung von Rhodium-Katalysatoren des Typs (H)Rh(L)₃ oder (H)Rh(L)₄ beschrieben. Bei L handelt es sich um phosphan- oder arsinhaltige Liganden. Die Hydrierung wird bei relativ hohen Katalysatormengen (2,5 bis 40 Gew.%) ohne Zusätze der Liganden durchgeführt. Für die Isolierung des hydrierten Nitrilkautschuks aus der chlorbenzolischen Lösung wird die hydrierte Lösung abgekühlt und der Kautschuk wird durch Zugabe von Isopropanol koaguliert. Angaben über die Vulkanisateigenschaften der bei diesem Verfahren resultierenden hydrierten Nitrilkautschuke werden nicht gemacht. Somit kann aus US 4,503,196 keine Lehre zur Optimierung des Hydrierverfahrens von Nitrilkautschuk entnommen werden und auch Hinweise zur Optimierung der Moduli sowie Compression Set Werte von Vulkanisate auf Basis von HNBR fehlen.

DE-A-3 921 264 beschreibt die Herstellung von hydriertem Nitrilkautschuk der nach peroxidischer Vernetzung Vulkanisate mit niedrigem Compression Set liefert. Bei der Hydrierung werden Ruthenium Katalysatoren unterschiedlichster chemischer Konstitution eingesetzt unter Verwendung eines Lösungsmittelgemischs aus einem C₃-C₆-Keton und einem sekundären oder tertiären C₃-C₆-Alkohol. Der Anteil des sekundären bzw. tertiären Alkohols im Lösungsmittelgemisch soll 2 bis 60 Gew.% betragen. Beschrieben wird, dass es während der Hydrierung oder bei der Abkühlung der Lösung nach Hydrierung zur Bildung von zwei Phasen kommen kann. Als Folge werden die gewünschten Hydriergrade nicht erzielt und/oder der hydrierte Nitrilkautschuk vergelt während der Hydrierung. Das in DE-A- 3 921 264 beschriebene Verfahren ist nicht breit anwendbar, da die bei der Hydrierung stattfindende Phasentrennung und die Vergelung in unvorhersehbarer Weise von einer Reihe von Parametern abhängt. Hierzu gehören der Acrylnitrilgehalt und die Molmasse des Nitrilkautschuk-Feedstocks, die Zusammensetzung des Lösungsmittelgemischs, der Feststoffgehalt der Polymerlösung bei der Hydrierung, der Hydriergrad sowie die Temperatur bei der Hydrierung. Auch bei der Abkühlung der Polymerlösung im Anschluss an die Hydrierung oder bei der Lagerung der Polymerlösung kann es zu einer unvorhergesehen Phasentrennung und zu einer Kontamination der entsprechenden Anlagenteile oder Behälter kommen. DE-A-3 921 264 gibt keine Lehre zur Verbesserung des Modulniveaus und des Compression Sets bei der Herstellung des Nitrilkautschuk-Feedstocks und auch zum Hydrierverfahren werden keine weiteren Optimierungsvorschläge gemacht.

In EP-A-0 134 023 wird ein Verfahren zur Hydrierung von NBR mit geringen Mengen an Tris-(triphenylphosphan)-rhodium(I)halogenid, vorzugsweise 0,08 bis 0,2 Gew.%, höchstens 2 Gew.% Triphenylphosphan innerhalb ausgewählter Druck- (vorzugsweise 30 bis 350 bar) und Temperaturbereiche (100°C bis 145 °C) beschrieben. In den Beispielen der Tabelle 3 wird gezeigt, dass eine Erhöhung der Triphenylphosphan Menge von 0 auf 5 Gew. % zu einer Verschlechterung wichtiger Eigenschaften peroxidisch vulkanisierter hydrierter Nitrilkautschuke führt. So nehmen die Modulwerte bei 100%, 200% und 300% Dehnung sowie die Härte bei 23°C ab. Die Bruchdehnung und der Compression-Set nach einer Alterung über 70h bei 23°C, über 70h bei 125°C sowie über 70h bei 150°C nehmen zu. Um den schädlichen Einfluss von Triphenylphosphan niedrig zu halten, wird nach der Lehre von EP-A-0 134 023 die bei der Hydrierung eingesetzte Triphenylphosphan Menge auf < 0,6 Gew.% begrenzt. Unvorteilhaft bei einer Hydrierung in Gegenwart von Triphenylphosphan Mengen < 0,6 Gew. % ist, dass für die Erzielung unveränderter Hydrierzeiten höhere Mengen an teurem Rhodium Metall eingesetzt werden müssen oder dass bei unveränderten Katalysatormengen sehr viel längere Hydrierzeiten in Kauf genommen werden müssen. EP-A-0 134 023 gibt weder eine Lehre zur Reduktion der Hydrierzeiten ohne Erhöhung der Triphenylphosphan Mengen noch zur Reduktion der Hydrierzeiten ohne negative Auswirkungen auf das Modul- und Compression-Set-Niveau der Vulkanisate der hierbei resultierenden hydrierten Nitrilkautschuke.

In EP 2 238 177 A wird die Herstellung von Nitrilkautschuk mit hoher Lagerstabilität beschrieben, indem die Latexkoagulation mit **Erdalkalisalzen in Kombination mit Gelatine** durchgeführt wird. Die Nitrilkautschuke weisen eine besondere Ionenkennzahl bezüglich der im Nitrilkautschuk enthaltenen Gehalte an Natrium-, Kalium, Magnesium- und Calciumionen auf. Im allgemeinen Teil von EP 2 238 177 A werden einige Alterungsschutzmittel auf-gezählt, die dem Nitrilkautschuklatex vor der Koagulation zugesetzt werden, wobei Mengenangaben fehlen. Aus den Beispielen geht hervor, dass 2,2-Methylen-bis-(4-methyl-6-tert.butyl-phenol) verwendet wurde, dessen Menge in einem Bereich von 0,1 bis 0,8 Gew.% bezogen auf Festkautschuk variierte. Es wird gezeigt, dass die Lagerstabilität des Nitrilkautschuks nicht von der Menge an 2,2-Methylen-bis-(4-methyl-6-tert.butylphenol) abhängt und selbst bei Einsatz der niedrigsten Menge (0,1 Gew.%) an 2,2-Methylen-bis-(4-methyl-6-tert.butylphenol) ausreichende Lagerstabilitäten erzielt werden. Daraus kann der Schluss gezogen werden, dass die Menge an 2,2-Methylen-bis-(4-methyl-6-tert.butylphenol) nur einen untergeordneten (wenn überhaupt) Einfluss auf die Eigenschaften von Nitrilkautschuk hat. Weitergehende Schlüsse bezüglich des Einflusses von 2,2-Methylen-bis-(4-methyl-6-tert.butylphenol) auf die Eigenschaften von hydriertem Nitrilkautschuk, der ausgehend von derartigen Nitrilkautschuken durch Hydrierung erhalten wird, sind nicht möglich.

### Aufgabe der vorliegenden Erfindung:

Die **Aufgabe der vorliegenden Erfindung** bestand somit in der Bereitstellung eines Hydrierverfahrens für Nitrilkautschuke in Gegenwart aktivitätssteigernder Zusätze, die nach der Hydrierung im hydrierten Nitrilkautschuk verbleiben können, ohne aber im Folgenden negative Auswirkungen auf die Vulkanisateigenschaften zu haben. Die **Aufgabe der vorliegenden Erfindung** bestand ferner darin, hydrierte Nitrilkautschuke mit sehr guten Vulkanisateigenschaften zugänglich zu machen.

### Lösung:

**Diese Aufgabe wurde überraschend dadurch gelöst,** dass die Hydrierung von Nitrilkautschuken in Gegenwart spezieller Phenole durchgeführt wird. Diese können entweder bereits im Nitrilkautschuk enthalten sein, der als Feedstock für die Hydrierung verwendet wird, oder aber erst bei der Hydrierung dem Reaktionssystem zugesetzt werden. Diese speziellen Phenole zeigen einen unerwarteten beschleunigenden Einfluss auf die Hydrierung und können im hydrierten Nitrilkautschuk verbleiben, ohne dass dies zu negativen Auswirkungen auf die Eigenschaften von Vulkanisaten auf Basis derart hergestellter hydrierter Nitrilkautschuke führt.

**Gegenstand der vorliegenden Erfindung** ist somit **ein Verfahren zur Herstellung hydrierter Nitrilkautschuke** durch Hydrierung von Nitrilkautschuken in Lösung, dadurch gekennzeichnet, dass die Hydrierung in Gegenwart von mindestens einem Phenol der allgemeinen Formel (I) erfolgt, 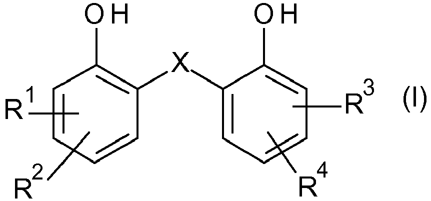 worin
- X: Schwefel, eine divalente, geradkettige oder verzweigte, acyclische oder cyclische Kohlenwasserstoffgruppe, bevorzugt ein divalenter C₁-C₈ Alkylenrest, besonders bevorzugt Methylen, Ethylen, oder n-Propylen, oder ein Rest der Formel (II) ist, worin n = 0 bis 9 bedeutet, 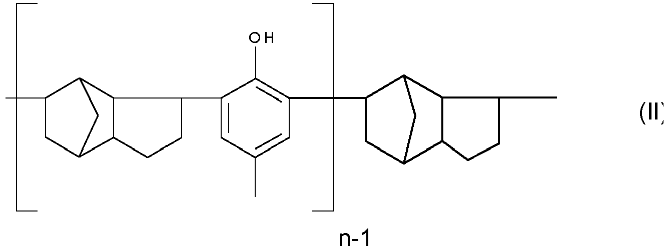
R¹, R², R³ und R⁴ gleich oder verschieden sind und geradkettige oder verzweigte, unsubstituierte oder substituierte C₁-C₈ Alkylgruppen, bevorzugt geradkettige oder verzweigte, unsubstituierte oder substituierte C₁-C₆ Alkylgruppen bedeuten,
wobei das Phenol der allgemeinen Formel (I) in einer **Menge von 0,01 bis 0,25 Gew.%,** bevorzugt **0,05 bis 0,2 Gew.%,** besonders bevorzugt **0,05 bis 0,19 Gew.%** und insbesondere bevorzugt **0,05 bis 0,18 Gew.%,** bezogen auf den eingesetzten Nitrilkautschuk zugegen ist.

**Gegenstand der vorliegenden Erfindung** sind ferner **hydrierte Nitrilkautschuke** enthaltend mindestens ein Phenol der allgemeinen Formel (I) 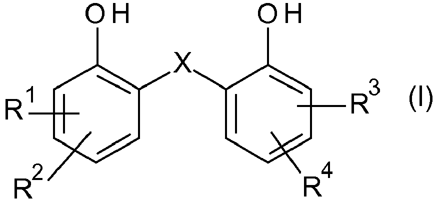 worin
- X: Schwefel, eine divalente, geradkettige oder verzweigte, acyclische oder cyclische Kohlenwasserstoffgruppe, bevorzugt ein divalenter C₁-C₈ Alkylenrest, besonders bevorzugt Methylen, Ethylen, oder n-Propylen, oder ein Rest der Formel (II) ist, worin n = 0 bis 9 bedeutet, 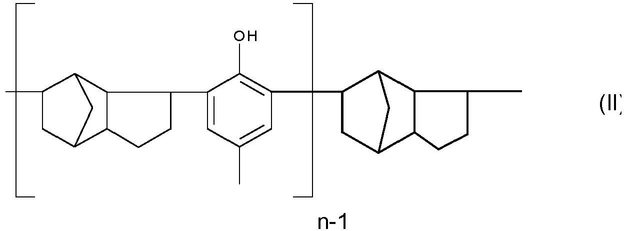
R¹, R², R³ und R⁴ gleich oder verschieden sind und geradkettige oder verzweigte, unsubstituierte oder substituierte C₁-C₈ Alkylgruppen, bevorzugt geradkettige oder verzweigte, unsubstituierte oder substituierte C₁-C₆ Alkylgruppen bedeuten,
in einer Menge im Bereich von **0,01 bis 0,25 Gew.%,** bevorzugt **0,05 bis 0,2 Gew.%,** besonders bevorzugt **0,05 bis 0,19 Gew.%** und insbesondere bevorzugt **0,05 bis 0,18 Gew.%,** bezogen auf den hydrierten Nitrilkautschuk.

**Gegenstand der vorliegenden Erfindung** sind ferner **vulkanisierbare Mischungen** dieser hydrierten Nitrilkautschuke, **Verfahren zur Herstellung darauf basierender Vulkanisate,** sowie die dabei erhältlichen **Vulkanisate,** insbesondere als Formkörper.

### Erfindungsgemäße hydrierte Nitrilkautschuke:

Die erfindungsgemäßen **hydrierten Nitrilkautschuke** enthalten mindestens ein Phenol der allgemeinen Formel (I) in einer Menge im Bereich von **0,01 bis 0,25 Gew.%,** bevorzugt **0,05 bis 0,2 Gew.%,** besonders bevorzugt **0,05 bis 0,19 Gew.%** und insbesondere bevorzugt **0,05 bis 0,18 Gew.%,** jeweils bezogen auf den hydrierten Nitrilkautschuk.

In einer alternativen Ausführungsform enthalten die erfindungsgemäßen hydrierten Nitrilkautschuke mindestens ein Phenol der allgemeinen Formel (I) in einer Menge im Bereich von **0,01 bis 0,19 Gew.%** und bevorzugt **0,01 bis 0,18 Gew.%,** jeweils bezogen auf den hydrierten Nitrilkautschuk.

In einer besonderen Ausführungsform betrifft die vorliegende Erfindung hydrierte Nitrilkautschuke, die als Phenol der allgemeinen Formel (I) eine Verbindung ausgewählt aus der Gruppe bestehend aus 2,2-Methylen-bis-(4-methyl-6-tert.butylphenol), 2,2-Thio-bis(6-tert-butyl-p-kresol) und einem butylierten Reaktionsprodukt von p-Kresol und Dicyclopentadien.

### 2-2-Methylen-bis-(4-methyl-6-tert.butylphenol) der Formel

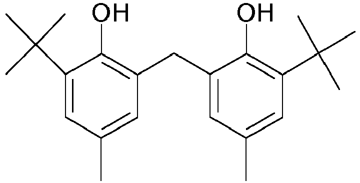

ist z.B. in Form von **Vulkanox® BKF** von Lanxess Deutschland GmbH kommerziell erhältlich.

### 2,2-Thiobis(6-tert-burtyl-p-kresol) der Formel

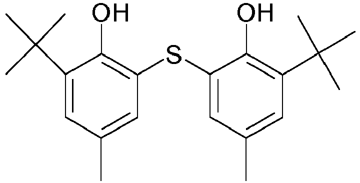

ist z.B. in Form von z.B. **Lowinox® TBP-6** von Chemtura kommerziell erhältlich.

Das butylierte Reaktionsprodukt von p-Kresol und Dicyclopentadien der Formel 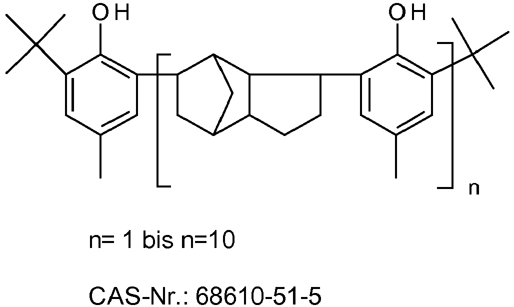 ist z.B. in Form von **Wingstay® L** von Eliokem kommerziell erhältlich.

### Wiederholungseinheiten des hydrierten Nitrilkautschuks:

Die erfindungsgemäßen hydrierten Nitrilkautschuke weisen Wiederholungseinheiten mindestens eines α,β-ungesättigten Nitril-Monomeren und mindestens eines konjugierten Dien-Monomeren auf. Sie können darüber hinaus noch Wiederholungseinheiten von einem oder mehreren weiteren copolymerisierbaren Monomeren aufweisen.

Die erfindungsgemäßen hydrierten Nitrilkautschuken umfassen ganz oder teilweise hydrierte Nitrilkautschuke. Der Hydriergrad liegt üblicherweise in einem Bereich von 50 bis 100%, bevorzugt im Bereich von 75 bis 100%, besonders bevorzugt im Bereich von 80 bis 100%, ganz besonders bevorzugt im Bereich von 90 bis 100%, insbesondere im Bereich von größer 94,5 bis 100%, insbesondere bevorzugt im Bereich von 95 bis 100%. Von sogenannten "vollhydrierten Typen" wird in der Fachwelt bereits gesprochen, wenn der Restdoppelbindungsgehalt (auch als "RDB" abgekürzt) maximal bei ca. 0,9 % liegt, d.h. der Hydriergrad größer gleich 99.1% beträgt.

In einer Ausführungsform der Erfindung besitzen die erfindungsgemäßen **hydrierten Nitrilkautschuke** einen Hydriergrad im Bereich von 95 bis 100%, bevorzugt im Bereich von 96% bis 100% oder stellen besonders bevorzugt vollhydrierte Typen mit einem Hydriergrad größer gleich 99.1% dar und enthalten mindestens ein Phenol der allgemeinen Formel (I) in einer Menge im Bereich von 0,01 bis 0,19 Gew.%, bevorzugt im Bereich von 0,01 bis 0,18 Gew.% und besonders bevorzugt im Bereich von 0,05 bis 0,18 Gew.%, bezogen auf den hydrierten Nitrilkautschuk.

Die Wiederholungseinheiten des mindestens einen **konjugierten Diens** gehen bevorzugt auf (C₄-C₆) konjugierte Diene oder Mischungen davon zurück. Besonders bevorzugt sind 1,2-Butadien, 1,3-Butadien, Isopren, 2,3-Dimethylbutadien, Piperylen und Gemische daraus. Insbesondere bevorzugt sind 1,3-Butadien, Isopren und Gemische daraus. Ganz besonders bevorzugt ist 1,3-Butadien.

Als **α,β-ungesättigtes Nitril** kann jedes bekannte α,β-ungesättigte Nitril zur Herstellung der erfindungsgemäßen Nitrilkautschuke eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Soweit ein oder mehrere weitere copolymerisierbare Monomere eingesetzt werden, können dies z.B. **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamid, N-(4-anilinophenyl) crotonamid, N-phenyl-4-(3-vinylbenzyloxy) anilin und N-phenyl-4-(4-vinylbenzyloxy) anilin sein sowie **nicht-konjugierte Diene,** wie 4-Cyanocyclohexen und 4-Vinylcyclohexen, oder auch **Alkine,** wie 1- oder 2-Butin.

Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamide eingesetzt werden.

Beispiele geeigneter Hydroxyalkylacrylatmonomere sind 2-Hydroxyethyl(meth)acrylat, 2-Hydroxy-propyl(meth)acrylat, 3 -Hydroxypropyl(meth)acrylat, 3 -Chlor-2-hydroxypropyl(meth)acrylat, 3-Phenoxy-2-hydroxypropyl(meth)acrylat, Glycerinmono(meth)acrylat, Hydroxybutyl(meth)acrylat, 3-Chlor-2-hydroxypropyl(meth)acrylat, Hydroxyhexyl-(meth)acrylat, Hydroxyoctyl(meth)acrylat, Hydroxymethyl(meth)acrylamid, 2-Hydroxypropyl(meth)acrylat, 3-Hydroxypropyl(meth)acrylamid, Di-(Ethylenglykol)itaconat, Di-(Propylenglykol)itaconat, Bis(2-Hydroxypropyl)itaconat, Bis(2-Hydroxyethyl)itaconat, Bis(2-Hydroxyethyl)fumarat, Bis(2-Hydroxyethyl)maleat und Hydroxy-methylvinylketon.

Weiterhin können als copolymerisierbare Termonomere Epoxygruppen-haltige Monomere eingesetzt werden, vorzugsweise Glycidyl(meth)acrylate.

Beispiele Epoxygruppen-haltiger Monomere sind Diglycidylitaconat, Glycidyl-p-styrolcarboxylat, 2-Ethylglycidylacrylat, 2-Ethylglycidylmethacrylat, 2-(n-Propyl)glycidylacrylat, 2-(n-Propyl) glycidylmethacrylat, 2-(n-Butyl)glycidylacrylat, 2-(n-Butyl)glycidylmethacrylat, Glycidylmethylacrylat, Glycidylmethylmethacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether und 3-Vinylcyclohexenoxid.

Alternativ können als weitere copolymerisierbare Monomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexylmethacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Ethoxyethyl(meth)acrylat und Methoxyethyl(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylat, und Fluorobenzylmethacrylat. Einsetzbar sind auch Fluoroalkylgruppen haltige Acrylate und Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethylacrylat und Diethylaminoethylacrylat.

Als weitere Monomere können **α,β-ungesättigte Dicarbonsäuren,** bevorzugt Maleinsäure, Fumarsäure, Crotonsäure, Itaconsäure, Citraconsäure und Mesaconsäure, eingesetzt werden. Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich z.B. handeln um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈- Alkoxy-alkyl, **Hydroxyalkyl,** bevorzugt C₁-C₁₂ Hydroxyalkyl-, besonders bevorzugt C₂-C₈- Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, **Aryl-,** bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamid, N-(2-Hydroxymethyl)acrylamid und Urethan(meth)acrylat eingesetzt.

Beispiele von **α,β-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat;
- Mesaconsäuremonoalkylester, bevorzugt Mesaconsäuremonoethylester.

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder - methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamintris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und α,β-ungesättigtem Nitril in den im erfindungsgemäßen Verfahren einzusetzenden Nitrilkautschuken bzw. den erfindungsgemäßen hydrierten Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.%, besonders bevorzugt im Bereich von 50 bis 85 Gew.%, bezogen auf das Gesamtpolymer. Der Anteil des oder der Summe der α,β-ungesättigten Nitrile liegt üblicherweise bei 5 bis 80 Gew.%, bevorzugt bei 10 bis 55 Gew.%, besonders bevorzugt bei 15 bis 50 Gew.%, bezogen auf das Gesamtpolymer. Die Anteile der Wiederholungseinheiten an konjugiertem Dien und α,β-ungesättigtem Nitril in den erfindungsgemäßen Nitrilkautschuken bzw. den erfindungsgemäßen ganz oder teilweise hydrierten Nitrilkautschuken summieren sich jeweils zu 100 Gew.% auf.

Die zusätzlichen Monomere können in Mengen von 0 bis 40 Gew.%, bevorzugt 0 bis 30 Gew.%, besonders bevorzugt 0 bis 26 Gew.%, bezogen auf das Gesamtpolymer, vorliegen. In diesem Fall werden entsprechende Anteile der Wiederholungseinheiten des oder der konjugierten Diene und/oder der Wiederholungseinheiten des oder der α,β-ungesättigten Nitrile durch die Anteile dieser zusätzlichen Monomere ersetzt, wobei sich die Anteile aller Wiederholungseinheiten der Monomere weiterhin jeweils zu 100 Gew.% aufsummieren müssen.

Werden als zusätzliche Monomere Ester der (Meth)acrylsäure eingesetzt, so erfolgt dies üblicherweise in Mengen von 1 bis 25 Gew.%. Werden als zusätzliche Monomere α,β-ungesättigte Mono- oder Dicarbonsäuren eingesetzt, so erfolgt dies üblicherweise in Mengen von weniger als 10 Gew. %.

Bevorzugt sind erfindungsgemäße Nitrilkautschuke, die Wiederholungseinheiten von Acrylnitril, und 1,3-Butadien aufweisen. Bevorzugt sind ferner Nitrilkautschuke, die Wiederholungseinheiten von Acrylnitril, 1,3-Butadien und einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

Der Stickstoffgehalt wird in den erfindungsgemäßen hydrierten Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

In einer Ausführungsform der Erfindung handelt es sich bei den erfindungsgemäßen **hydrierten Nitrilkautschuken** um Copolymere, die ausschließlich Wiederholungseinheiten abgeleitet von Acrylnitril und 1,3-Butadien aufweisen und mindestens ein Phenol der allgemeinen Formel (I) in einer Menge im Bereich von 0,01 bis 0,19 Gew.%, bevorzugt im Bereich von 0,01 bis 0,18 Gew.% und besonders bevorzugt im Bereich von 0,05 bis 0,18 Gew.% enthalten, jeweils bezogen auf den hydrierten Nitrilkautschuk. Üblicherweise haben diese hydrierten AcrylnitrilButadien Copolymeren einen Hydriergrad von 90 bis 100%, bevorzugt 92 bis 100%, besonders bevorzugt 95 bis 100%.

Die erfindungsgemäßen hydrierten Nitrilkautschuke weisen Mooney-Viskositäten ML 1+4 bei 100°C von 10 bis 150 Mooney Einheiten (MU), vorzugsweise von 20 bis 100 MU auf.

Die Glastemperaturen der erfindungsgemäßen Nitrilkautschuke bzw. der erfindungsgemäßen ganz oder teilweise hydrierten Nitrilkautschuken liegen im Bereich -70°C bis +10°C, vorzugsweise im Bereich -60°C bis 0°C.

### Verfahren zur Herstellung der erfindungsgemäßen hydrierten Nitrilkautschuke:

Erfindungsgemäß erfolgt die Herstellung der hydrierten Nitrilkautschuke durch Hydrierung von Nitrilkautschuken in Lösung in Gegenwart mindestens eines Phenols der allgemeinen Formel (I), wobei das Phenol der allgemeinen Formel (I) in einer Menge von 0,01 bis 0,25 Gew.%, vorzugsweise 0,05 bis 0,2 Gew.%, besonders bevorzugt 0,05 bis 0,19 Gew.% und insbesondere bevorzugt 0,05 bis 0,18 Gew.%, jeweils bezogen auf den eingesetzten Nitrilkautschuk zugegen ist.

**In einer Ausführungsform** wird hierbei ein Nitrilkautschuk eingesetzt, der bereits die genannte Menge des mindestens einen Phenols der allgemeinen Formel (I) enthält. Die Herstellung von Nitrilkautschuken erfolgt typischerweise über Emulsionspolymerisation unter Bildung eines Nitrilkautschuk-Latex und eine anschließende Koagulation des Nitrilkautschuks. Dies ist dem Fachmann hinreichend bekannt. Bevorzugt erfolgt die Latexkoagulation des Nitrilkautschuks nach dem in EP-A-1 369 436 allgemein beschriebenen Verfahren. Die Zugabe mindestens eines Phenols der allgemeinen Formel (I) kann beispielsweise in den nach der Emulsionspolymerisation gebildeten Nitrilkautschuk-Latex vor der Koagulation erfolgen. Es hat sich bewährt, das Phenol der allgemeinen Formel (I) als wässrige Dispersion zuzugeben. Die Konzentration dieser wässrigen Dispersion liegt typischerweise in einem Bereich von 2,5-70 Gew.%, bevorzugt 5-60 Gew.%.

**In einer alternativen Ausführungsform** wird das Phenol der allgemeinen Formel (I) erst in das Reaktionsgemisch der Hydrierung separat zugesetzt.

### Hydrierung:

Die Hydrierung wird üblicherweise in Gegenwart mindestens eines Hydrierkatalysators typischerweise basierend auf den Edelmetallen Rhodium, Ruthenium, Osmium, Palladium, Platin oder Iridium, wobei Rhodium, Ruthenium und Osmium bevorzugt sind, durchgeführt.

Einsetzbar sind **rhodiumhaltige Komplexkatalysatoren** der allgemeinen Formel (A),

Rh(X)ₙ(L)ₘ (A)

wobei
- **X**: gleich oder verschieden sind und Wasserstoff, Halogen, Pseudohalogen, SnCl₃ oder Carboxylat bedeutet,
- **n**: gleich 1, 2 oder 3 ist, bevorzugt 1 oder 3,
- **L**: gleich oder verschieden sind und für mono- oder bidentate Liganden auf der Basis von Phosphor, Arsen oder Antimon stehen,
- **m**: soweit L für monodentate Liganden steht, gleich 2, 3 oder 4 ist, oder soweit L für bidentate Liganden steht, gleich 1 oder 1,5 oder 2 oder 3 oder 4 ist.

In der allgemeinen Formel (A) sind X gleich oder verschieden und bedeuten bevorzugt Wasserstoff oder Chlor.

**L** steht in der allgemeinen Formel (A) bevorzugt für ein Phosphan oder Diphosphan entsprechend den weiter oben dargestellten allgemeinen Formeln (I-a) und (I-b) inklusive der dort genannten allgemeinen, bevorzugten und besonders bevorzugten Bedeutungen.

Besonders bevorzugte Katalysatoren der allgemeinen Formel (A) sind Tris(triphenylphosphan)rhodium-(I)-chlorid, Tris(tripenylphosphan)rhodium-(III)-chlorid, Tris(dimethylsulfoxid)rhodium-(III)-chlorid, Hydridorhodiumtetrakis(triphenylphosphan) und die entsprechenden Verbindungen, in denen Triphenylphosphin ganz oder teilweise durch Tricyclohexylphosphin ersetzt ist.

Einsetzbar sind ferner **Ruthenium haltige Komplexkatalysatoren.** Diese sind z.B. in DE-A 39 21 264 und EP-A-0 298 386 beschrieben. Sie weisen typischerweise die allgemeine Formel (B) auf,

RuXₙ[(L¹)ₘ(L²)_{5-z}] (B)

worin
- **X**: gleich oder verschieden sind und für Wasserstoff, Halogen, SnCl₃, CO, NO oder R⁶-COO stehen,
- **L¹**: gleich oder verschieden sind und für Wasserstoff, Halogen, R⁶-COO, NO, CO oder ein Cyclopentadienyl-Ligand der folgenden allgemeinen Formel (2)stehen, 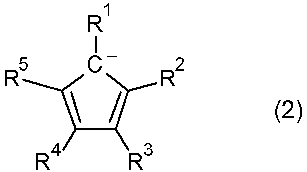 worin
**R¹ bis R⁵** gleich oder verschieden sind und Wasserstoff, Methyl, Ethyl, Propyl, Butyl, Hexyl oder Phenyl bedeuten oder alternativ zwei benachbarte Reste aus R¹ bis R⁵ verbrückt sind, so dass ein Indenyl oder Fluorenylsystem resultiert,
- **L²**: ein Phosphan, Diphosphan oder Arsan und
- **n**: 0, 1 oder 2 ist,
- **m**: 0, 1, 2 oder 3,
- **z**: 1, 2, 3 oder 4 ist, und
- **R⁶**: einen Rest mit 1 bis 20 C-Atome darstellt, der verzweigt oder unverzweigt, verbrückt oder unverbrückt und/oder teilweise aromatisch sein kann, und bevorzugt C₁-C₄ Alkyl bedeutet.

Beispiele für **L¹ Liganden** in der allgemeinen Formel (B) vom Typ des Cyclopentadienyl Liganden der allgemeinen Formel (2) umfassen Cyclopentadienyl, Pentamethylcyclopentadienyl, Ethyltetramethylcyclopentadienyl, Pentaphenylcyclopentadienyl, Dimethyltriphenylcyclo-pentadienyl, Indenyl und Fluorenyl. Die Benzolringe in den L¹-Liganden vom Indenyl- und Fluorenyl-Typ können durch C₁-C₆-Alkylreste, insbesondere Methyl, Ethyl und Isopropyl, C₁-C₄-Alkoxyreste, insbesondere Methoxy und Ethoxy, Arylreste, insbesondere Phenyl, und Halogene, insbesondere Fluor und Chlor, substituiert sein. Bevorzugte L¹-Liganden vom Typ Cyclopentadienyl sind die jeweils unsubstituierten Reste Cyclopentadienyl, Indenyl und Fluorenyl.

Im **L¹-Liganden** in der allgemeinen Formel (B) vom Typ (R⁶-COO) umfasst R⁶ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, ferner aromatische Kohlenwasserstoffreste mit 6 bis 18, bevorzugt 6 bis 10 C-Atomen, oder Aryl-substituierte Alkylreste, die bevorzugt einen geradkettigen oder verzweigten C₁-C₆ Alkylrest und einen C₆-C₁₈ Arylrest, vorzugsweise Phenyl, aufweisen.

Die vorstehend erläuterten **Reste R⁶** in (R⁶-COO) im Liganden L¹ der allgemeinen Formel (B) können gegebenenfalls durch Hydroxy, C₁-C₆-Alkoxy, C₁-C₆-Carbalkoxy, Fluor, Chlor oder Di-C₁-C₄-alkylamino, substituiert sein, die Cycloalkyl-, Aryl- und Aralkylreste darüber hinaus durch C₁-C₆-Alkyl, Alkyl-, Cycloalkyl- und Aralkylgruppen können Ketogruppen enthalten. Beispiele für den Rest R⁶ sind Methyl, Ethyl, Propyl, iso-Propyl, tert.-Butyl, Cyclohexyl, Phenyl, Benzyl und Trifluormethyl. Bevorzugte Reste R⁶ sind Methyl, Ethyl und tert.-Butyl.

Der **L² Ligand** steht in der allgemeinen Formel (B) bevorzugt für ein Phosphan oder Diphosphan entsprechend den oben dargestellten allgemeinen Formeln (1-a) und (1-b) inklusive der dort genannten allgemeinen, bevorzugten und besonders bevorzugten Bedeutungen oder für ein Arsan der allgemeinen Formel (3)

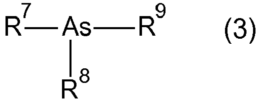

Bevorzugte **Liganden L²** der allgemeinen Formel (3) sind Triphenylarsan, Ditolylphenylarsan, Tris-(4-ethoxyphenyl)-arsan, Diphenylcyclohexylarsan, Dibutylphenylarsan und Diethylphenylarsan.

Bevorzugte **Ruthenium haltige Katalysatoren der allgemeinen Formel (B)** sind aus der nachfolgenden Gruppe ausgewählt, wobei "Cp" für Cyclopentadienyl, d.h. C₅H₅⁻, "Ph" für Phenyl, "Cy" für Cyclohexyl und "dppe" für 1,2-bis(diphenylphosphino)ethan steht: RuCl₂(PPh₃)₃; RuHCl(PPh₃)₃; RuH₂(PPh₃)₃; RuH₂(PPh₃)₄; RuH₄(PPh₃)₃; RuH(CH₃COO)(PPh₃)₃; RuH(C₂H₅COO)(PPh₃)₃; RuH(CH₃COO)₂(PPh₃)₂; RuH(NO)₂(PPh₃)₂; Ru(NO)₂(PPh₃)₂; RuCl(Cp)(PPh₃)₂; RuH(Cp)(PPh₃)₂; Ru(SnCl₃)(Cp)(PPh₃)₂; RuCl(µ⁵-C₉H₇)(PPh₃)₂; RuH(µ⁵-C₉H₇)(PPh₃)₂; Ru(SnCl₃)(µ⁵-C₉H₇)(PPh₃)₂; RuCl(µ⁵-C₁₃H₉)(PPh₃)₂; RuH(µ⁵-C₁₃H₉)(PPh₃)₂; Ru(SnCl₃)(µ⁵-C₁₃H₉)(PPh₃)₂; RuCl(µ⁵-C₉H₇)(dppe); RuHCl(CO)(PCy₃); RuH(NO)(CO)(PCy₃)₃; RuHCl(CO)₂(PPh₃)₂; RuCl₂(CO)(dppe) RuHCl(CO)(PCy₃), RuHCl(CO)(dppe)₂, RuH(CH₃COO)(PPh₃)₃; RuH(CH₃COO)₂(PPh₃)₂; und RuH(CH₃COO)(PPh₃)₃.

Als Katalysatoren sind ferner solche der **allgemeinen Formel (C)** geeignet, 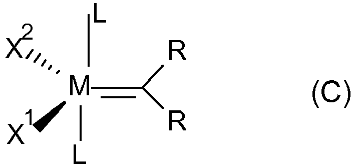 worin
- M: Osmium oder Ruthenium bedeutet,
- X¹ und X²: gleich oder verschieden und zwei Liganden, bevorzugt anionische Liganden, sind,
- L: gleiche oder verschiedene Liganden, bevorzugt neutrale Elektronen-Donoren sind,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl, darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In einer Ausführungsform der Katalysatoren der allgemeinen Formel (C) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (C) sind **X¹ und X²** gleich oder verschieden und stellen zwei Liganden, bevorzugt anionische Liganden, dar.

X¹ und X² können z.B. Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl, C₁-C₂₀-Alkylsulfinyl, Mono- oder Dialkylamid, Mono- oder Dialkylcarbamat, Mono- oder Dialkylthiocarbamat, Mono-oder Dialkyldithiocarbamat oder Mono- oder Dialkylsulfonamid Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer weiteren Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer weiteren Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (CH₃SO₃) oder CF₃SO₃ (Trifluormethansulfonat).

In der allgemeinen Formel (C) sind **L** gleiche oder verschiedene Liganden und sind bevorzugt neutrale Elektronen-Donoren.

Die beiden Liganden L können beispielsweise unabhängig voneinander einen Phosphan-, sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-, Thioether-, einen Imidazolin- oder einen Imidazolidin-Liganden darstellen.
Bevorzugt bedeuten die beiden Liganden L unabhängig voneinander einen C₆-C₂₄-Aryl-, C₁-C₁₀-Alkyl- oder C₃-C₂₀-Cycloalkyl-Phosphan-Liganden, einen sulfonierten C₆-C₂₄-Aryl- oder sulfonierten C₁-C₁₀-Alkyl-Phosphan-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsan-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-AlkylEther-Liganden oder einen C₆-C₂₄-Aryl- oder C₁-C₁₀-Alkylamid-Liganden, die alle jeweils durch eine Phenylgruppe substituiert sein können, die wiederum entweder unsubstituiert oder durch einen oder mehrere Halogen-, C₁-C₅-Alkyl- oder C₁-C₅-Alkoxy-Rest(e) substituiert ist. Die Bezeichnung "Phosphan" schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein, wobei "Ph" für Phenyl und "Tol" für Tolyl steht.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stiban" schließt Triphenylstiban, Tricyclohexylstiban und Trimethylstiban ein.

Die Bezeichnung "Sulfonat" schließt z.B. Trifluoromethansulfonat, Tosylat und Mesylat ein.

Die Bezeichnung "Sulfoxid" schließt beispielsweise (CH₃)₂S(=O) und (C₆H₅)₂S=O ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche Liganden auf Basis von Pyridin einschließen, wie sie z.B. von Grubbs in der WO-A-03/011455 genannt werden. Hierzu gehören, Pyridin sowie Pyridin, welches ein- oder mehrfach substituiert ist in Form der Picoline (a-, β-, und γ-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L in Formel (C) um einen Imidazolin- und/oder Imidazolidinrest (nachfolgend auch gemeinsam als "Im"-Ligand(en) bezeichnet), so weist dieser üblicherweise eine Struktur der allgemeinen Formeln (4a) oder (4b) auf, 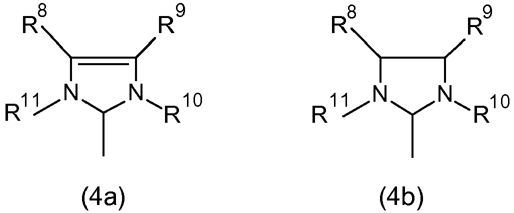 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann/können einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Fluor, Chlor oder Brom, C₁-C₅-Alkyl, C₁-C₅-Alkoxy und Phenyl substituiert sein können.

Nur zur Klarstellung sei hinzugefügt, dass die in den allgemeinen Formeln (4a) und (4b) im Rahmen dieser Anmeldung dargestellten Strukturen mit den in der Literatur für diesen Rest häufig auch zu findenden Strukturen (4a') und (4b'), die den Carben-Charakter des Rests hervorheben, gleichbedeutend sind. Dies gilt entsprechend auch für die zugehörigen bevorzugten, nachfolgend noch dargestellten Strukturen (5a)-(5f). Nachfolgend werden diese Reste zusammengefasst alle als "Im"-Rest bezeichnet.

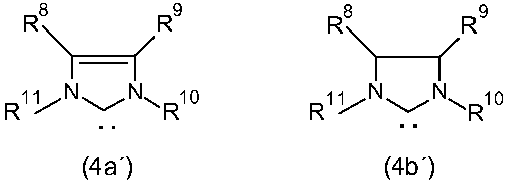

In einer bevorzugten Ausführungsform der Katalysatoren der allgemeinen Formel (C) bedeuten R⁸ und R⁹ unabhängig voneinander H, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (C) sind ferner die Reste R¹⁰ und R¹¹ gleich oder verschieden und bedeuten geradkettiges oder verzweigtes C₁-C₁₀-Alkyl, besonders bevorzugt Methyl, i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen, insbesondere Fluor, Chlor und Brom.

Insbesondere können die Reste R¹⁰ und R¹¹ gleich oder verschieden sein und bedeuten i-Propyl, Neopentyl, Adamantyl, Mesityl (2,4,6-Trimethylphenyl), 2,6-Difluorphenyl, 2,4,6-Trifluorphenyl oder 2,6-Diisopropylphenyl.

Besonders bevorzugte Im-Reste haben die nachfolgenden Strukturen (5a) bis (5f), wobei Ph jeweils für einen Phenyl-Rest, Bu für einen Butyl-Rest und Mes jeweils für einen 2,4,6-Trimethylphenyl-Rest steht oder Mes alternativ in allen Fällen für 2,6-Diisopropylphenyl steht.

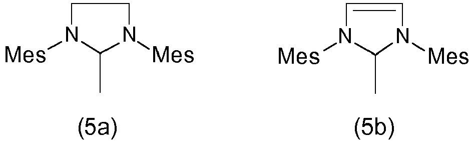

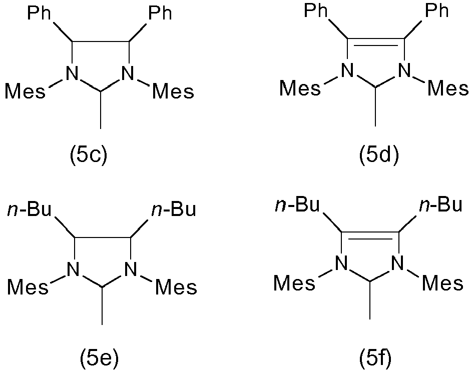

Verschiedenste Vertreter der Katalysatoren der Formel (C) sind prinzipiell bekannt, so z.B. aus der WO-A-96/04289 **und der** WO-A-97/06185.

Alternativ zu den bevorzugten Im-Resten steht einer oder beide Liganden L in der allgemeinen Formel (C) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (C) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (C) fallen, und die Strukturen (6) (Grubbs (I)-Katalysator) und (7) (Grubbs (II)-Katalysator), wobei Cy für Cyclohexyl steht, besitzen.

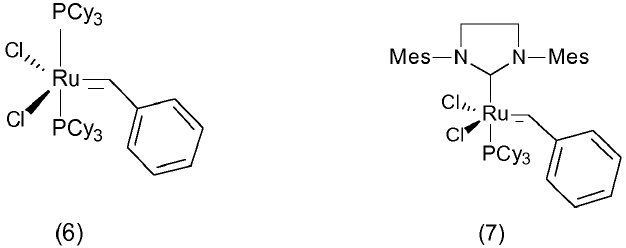

Als Katalysatoren sind ferner bevorzugt solche **der allgemeinen Formel (C1)** einsetzbar, 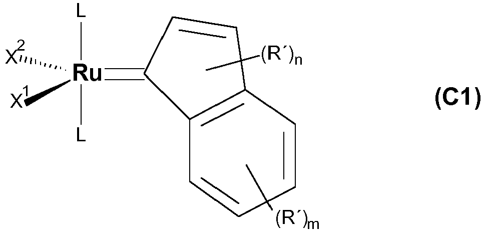 worin
- X¹, X² und L: die gleichen allgemeinen, bevorzugten und besonders bevorzugten Bedeutungen haben können wie in der allgemeinen Formel (C),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können.

Als bevorzugter Katalysator, der unter die allgemeine Formel (C1) fällt, kann beispielsweise der- jenige der folgenden Formeln (8a) und (8b) eingesetzt werden, wobei Mes jeweils für 2,4,6-Trimethylphenyl und Ph für Phenyl steht.

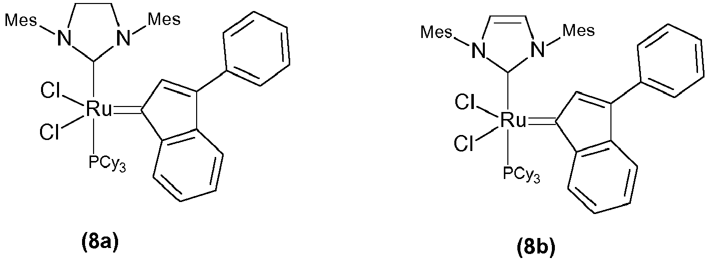

Diese Katalysatoren sind z.B. aus WO-A-2004/112951 bekannt. Katalysator (8a) wird auch als Nolan Katalysator bezeichnet.

Als Katalysatoren sind ferner bevorzugt solche **der allgemeinen Formel (D)** einsetzbar, 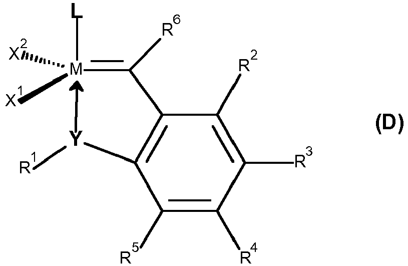 worin
- M: Ruthenium oder Osmium bedeutet,
- X¹ und X²: gleiche oder verschiedene Liganden, bevorzugt anionische Liganden sind,
- Y: Sauerstoff (O), Schwefel (S), einen Rest N-R¹ oder einen Rest P-R¹ bedeutet, wobei R¹ die nachfolgend genannten Bedeutungen besitzt,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist, der die gleichen Bedeutungen besitzt wie für die Formel (C) genannt.

Die Katalysatoren der allgemeinen Formel (D) sind prinzipiell bekannt und z.B. von Hoveyda et al. in US 2002/0107138 A1 und Angew. Chem. Int. Ed. 2003, 42, 4592 beschrieben, bzw. von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 sowie in US 2007/043180**.** Die Katalysatoren sind käuflich erhältlich bzw. gemäß den angegebenen Literaturstellen herstellbar.

In den Katalysatoren der allgemeinen Formel (D) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (C). Darüber hinaus gilt, dass L in der allgemeinen Formel (D) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolin oder Imidazolidinrest ("Im") darstellt.

**C₁-C₆-Alkyl** steht z.B. für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen, bevorzugte mono-, bi- oder tricyclische carbocyclische aromatische Reste mit 6 bis 10 Gerüstkohlenstoffatomen, insbesondere Phenyl, Biphenyl, Naphthyl, Phenanthrenyl oder Anthracenyl.

Der Imidazolin bzw. Imidazolidinrest **(Im)** weist die gleiche allgemeinen, bevorzugten und besonders bevorzugten Strukturen auf wie bei den Katalysatoren der allgemeinen Formel (C).

Besonders geeignet sind Katalysatoren der allgemeinen Formel (D), worin die Reste R¹⁰ und R¹¹ gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl oder Mesityl.

Besonders bevorzugte Imidazolin- bzw. Imidazolidinreste (Im) haben die bereits zuvor genannten Strukturen (5a-5f), wobei Mes jeweils für 2,4,6-Trimethylphenyl steht.

In den Katalysatoren der allgemeinen Formel (D) besitzen **X¹ und X²** die gleichen allgemeinen, bevorzugten und besonders bevorzugten Bedeutungen wie in den Katalysatoren der allgemeinen Formel (C).

In der allgemeinen Formel (D) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (D) sind die **Reste R², R³, R⁴ und R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (D) gebunden sind, einen ankondensierten Phenylring bilden, so dass insgesamt eine Naphthylstruktur resultiert.

In der allgemeinen Formel (D) bedeutet der **Rest R⁶** Wasserstoff, einen Alkyl-, Alkenyl-, Alkinyl- oder einen Aryl-Rest, bevorzugt Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet sind **Katalysatoren der allgemeinen Formel (D1),** 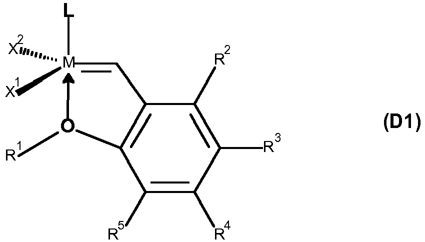 worin M, L, X¹, X², R¹, R², R³, R⁴ und R⁵ die für die allgemeine Formel (D) genannten allgemeinen, bevorzugten und besonders bevorzugten Bedeutungen besitzen können.

Die Katalysatoren der allgemeinen Formel (D1) sind z.B. aus US 2002/0107138 A1 (Hoveyda et al.) prinzipiell bekannt und können nach dort angegebenen Herstellverfahren erhalten werden.

Besonders geeignet sind Katalysatoren der allgemeinen Formel (D1), wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (D) genannten allgemeinen und bevorzugten Bedeutungen besitzen und
- L: die für die allgemeine Formel (D) genannten allgemeinen und bevorzugten Bedeutungen besitzt.

Insbesondere geeignet sind Katalysatoren der allgemeinen Formel (D1), wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (4a) oder (4b) darstellt, 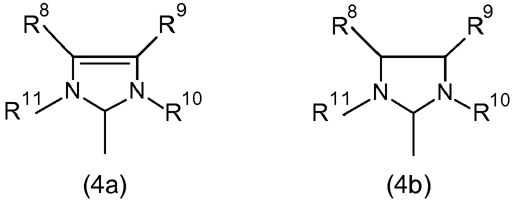
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten, wobei die vorgenannten Reste jeweils durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Ganz besonders geeignet ist ein Katalysator, der unter die allgemeine Strukturformel (D1) fällt und die Formel (9) besitzt, wobei Mes jeweils für 2,4,6-Trimethylphenyl steht.

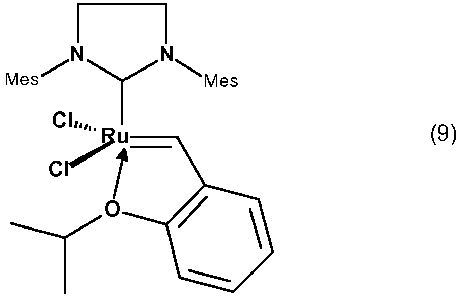

Dieser Katalysator (9) wird in der Literatur auch als "Hoveyda-Katalysator" bezeichnet.

Weiterhin geeignete Katalysatoren sind solche, die unter die allgemeine Strukturformel (D1) fallen und die Formeln (10), (11), (12), (13), (14), (15), (16) oder (17) besitzen, wobei Mes jeweils 2,4,6-Trimethylphenyl bedeutet.

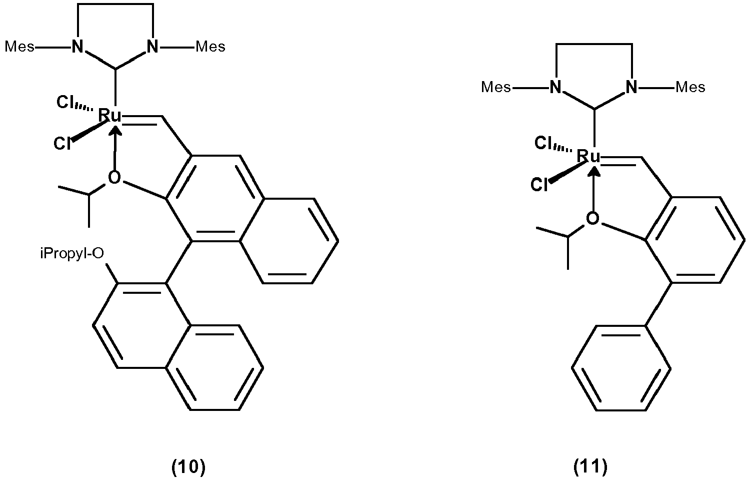

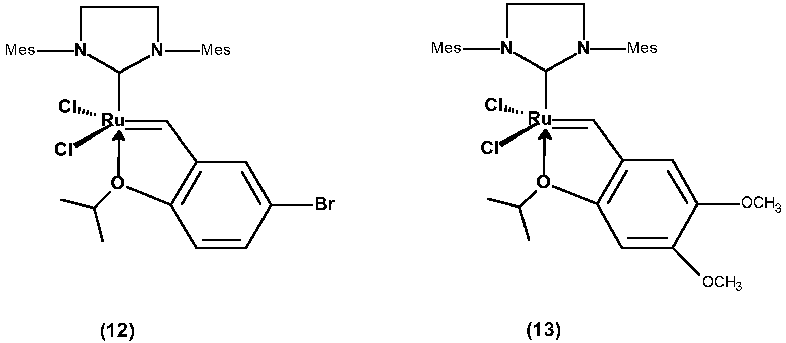

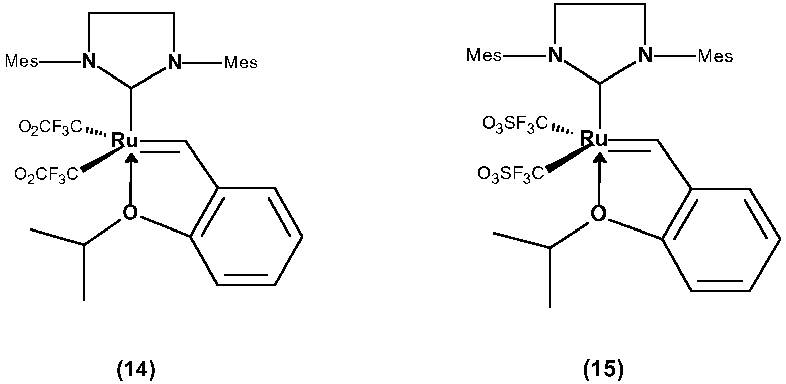

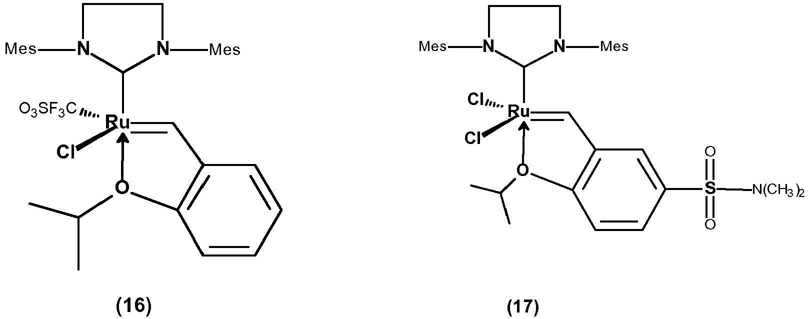

Geeignet ist weiterhin ein **Katalysator der allgemeinen Formel (D2),** 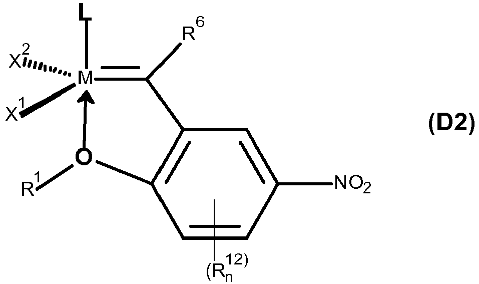 worin
- M, L, X¹, X², R¹ und R⁶: die für die Formel (D) genannten allgemeinen und bevorzugten Bedeutungen haben,
- R¹²: gleich oder verschieden sind und die für R², R³, R⁴ und R⁵ in Formel (D) genannten allgemeinen und bevorzugten Bedeutungen, ausgenommen Wasserstoff, besitzen und
- n: gleich 0, 1, 2 oder 3 ist.

Die Katalysatoren der allgemeinen Formel (D2) sind beispielsweise aus WO-A-2004/035596 (Grela) prinzipiell bekannt und können nach dort angegebenen Herstellverfahren erhalten werden.

Besonders geeignet sind Katalysatoren der allgemeinen Formel (D2), worin
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (D2) genannten Bedeutungen besitzt,
- n: gleich 0, 1, 2 oder 3 ist,
- R⁶: Wasserstoff bedeutet und
- L: die für die allgemeine Formel (D) genannten Bedeutungen besitzt.

Insbesondere geeignet sind Katalysatoren der allgemeinen Formel (D2), worin
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (4a) oder (4b) darstellt, worin R⁸, R⁹, R¹⁰, R¹¹ gleich oder verschieden sind und die für die insbesondere bevorzugten Katalysatoren der allgemeinen Formel (D1) genannten Bedeutungen besitzen.

Besonders geeignet sind Katalysatoren der nachfolgenden Strukturen (18) ("Grela-Katalysator") sowie (19), wobei Mes jeweils für 2,4,6-Trimethylphenyl steht.

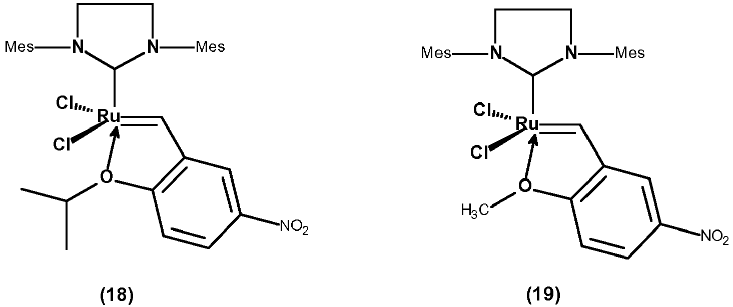

Geeignet ist auch ein dendritisch aufgebauter **Katalysator der allgemeinen Formel (D3),** 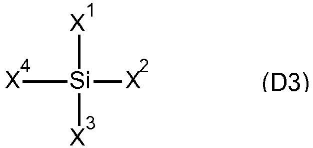 worin X¹, X², X³ und X⁴ jeweils eine Struktur der allgemeinen Formel (20) aufweisen, die über die rechts dargestellte Methylengruppe an das Silicium der Formel (D3) angebunden ist und 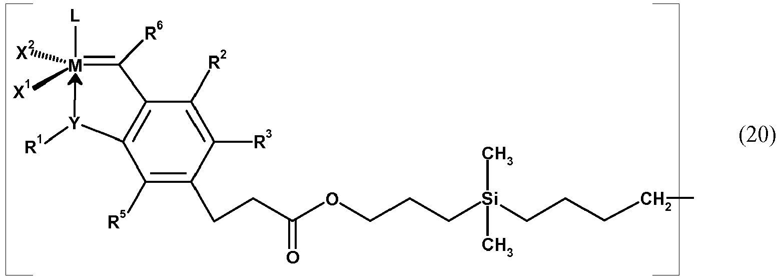 worin
- M, L, X¹, X², R¹, R², R³, R⁵ und R⁶: die für die allgemeine Formel (D) genannten allgemeinen und bevorzugten Bedeutungen besitzen können.

Die Katalysatoren der allgemeinen Formel (D3) sind aus US 2002/0107138 A1 bekannt und gemäß den dort gemachten Angaben herstellbar.

Geeignet ist auch ein Katalysator der Formel (D4), 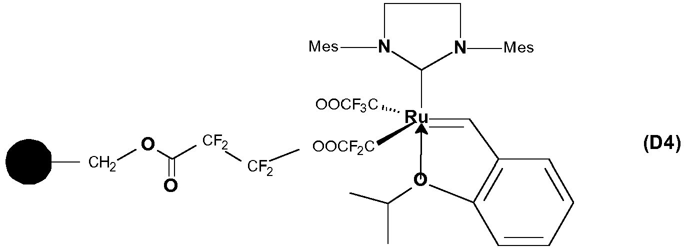 worin das Symbol ● für einen Träger steht.

Bevorzugt handelt es sich bei dem Träger um ein Poly(styroldivinylbenzol)-Copolymer (PS-DVB).

Die Katalysatoren gemäß Formel (D4) sind aus Chem. Eur. J. 2004 10, 777-784 prinzipiell bekannt und nach dort beschriebenen Herstellmethoden erhältlich.

Alle vorgenannten Katalysatoren des Typs (D), (D1), (D2), (D3) und (D4) können entweder als solche in der Hydrierreaktion eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Geeignet sind auch **Katalysatoren der allgemeinen Formel (E),** 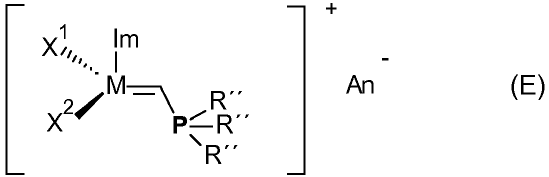 wobei
- M: Ruthenium oder Osmium bedeutet,
- X¹ und X²: gleich oder verschieden sind und anionische Liganden darstellen,
- R": gleich oder verschieden sind und organische Reste darstellen,
- Im: einen gegebenenfalls substituierten Imidazolin oder Imidazolidinrest darstellt und
- An: ein Anion darstellt.

Die Katalysatoren der allgemeinen Formel (E) sind prinzipiell bekannt (siehe z.B. Angew. Chem. Int. Ed. 2004,43, 6161-6165).
X¹ und X² können in der allgemeinen Formel (E) die gleichen allgemeinen, bevorzugten und besonders bevorzugten Bedeutungen besitzen wie in den Formeln (C) und (D).

Der Im-Rest weist üblicherweise eine Struktur der allgemeinen Formeln (4a) oder (4b) auf, die bereits für den Katalysator-Typ der Formeln (C) und (D) genannt wurden und kann auch alle dort als bevorzugt genannten Strukturen, insbesondere die der Formeln (5a)-(5f) aufweisen.

Die Reste R" sind in der allgemeinen Formel (E) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R" in der allgemeinen Formel (E) gleich und bedeuten Phenyl, Cyclohexyl, Cyclopentyl, Isopropyl, o-Tolyl, o-Xylyl oder Mesityl.

Geeignet sind weiterhin **Katalysatoren der allgemeinen Formel (F),** 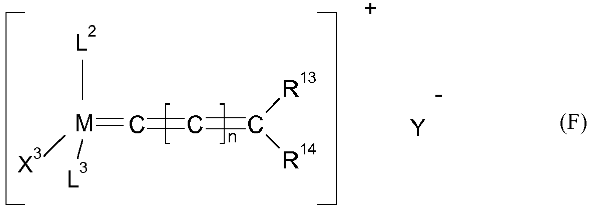 worin
- M: Ruthenium oder Osmium bedeutet,
- R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- X³: ein anionischer Ligand ist,
- L²: ein neutraler π-gebundener Ligand ist, unabhängig davon, ob mono- oder polycyclisch,
- L³: einen Ligand aus der Gruppe der Phosphane, sulfonierten Phosphane, fluorierten Phosphane, funktionalisierten Phosphane mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsane, Stibane, Ether, Amine, Amide, Imine, Sulfoxide, Thioether und Pyridine darstellt,
- Y⁻: ein nicht-koordinierendes Anion ist und
- n: 0, 1, 2, 3, 4 oder 5 ist.

Geeignet sind weiterhin **Katalysatoren der allgemeinen Formel (G),** 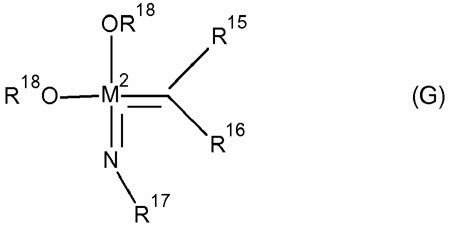 worin
- M²: Molybdän bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
- R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen.

Geeignet sind weiterhin **Katalysatoren der allgemeinen Formel (H),** 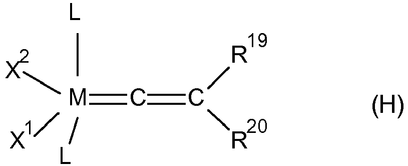 worin
- M: Ruthenium oder Osmium bedeutet,
- X¹ und X²: gleich oder verschieden sind und anionische Liganden darstellen, die alle in den allgemeinen Formeln (C) und (D) genannte für X¹ und X² genannte Bedeutungen annehmen können,
- L: gleiche oder verschiedene Liganden darstellt, die alle in den allgemeinen Formeln (C) und (D) genannten Bedeutungen von L annehmen können,
- R¹⁹ and R²⁰: gleich oder verschieden sind und Wasserstoff oder substituiertes oder unsubstituiertes Alkyl bedeuten.

Geeignet sind weiterhin **Katalysatoren der allgemeinen Formeln (K), (N) oder (Q),** 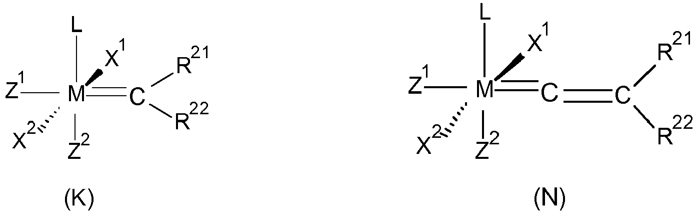 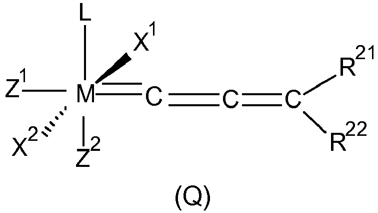 wobei
- M: Osmium oder Ruthenium bedeutet,
- X¹ und X²: gleich oder verschieden und zwei Liganden, bevorzugt anionische Liganden, sind,
- L: einen Liganden, bevorzugt einen neutralen Elektronen-Donor darstellt,
- Z¹ und Z²: gleich oder verschieden sind und neutrale Elektronen-Donoren darstellen,
- R²¹ und R²²: unabhängig voneinander H, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (K), (N) und (Q) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den Katalysatoren der allgemeinen Formeln (K), (N) und (Q) sind **Z¹ und Z²** gleich oder verschieden und stellen neutrale Elektronen-Donoren dar. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können.

Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

In den Katalysatoren der allgemeinen Formeln (K), (N) und (Q) kann L die gleichen allgemeinen, bevorzugten und besonders bevorzugten Bedeutungen annehmen wie L in den allgemeinen Formeln (C) und (D).

In den Katalysatoren der allgemeinen Formeln (K), (N) und (Q) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkynyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (K), (N) und (Q) sind **X¹ und X²** gleich oder verschieden und können die gleichen allgemeinen, bevorzugten und besonders bevorzugten Bedeutungen haben wie zuvor für X¹ und X² in der allgemeinen Formel (C) angegeben. Besonders geeignet sind Katalysatoren der allgemeinen Formeln (K), (N) und (Q), worin
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkynyl, C₆-C₂₄-Aryl, C₁-C₂₀-Carboxylat, C₁-C₂₀-Alkoxy, C₂-C₂₀-Alkenyloxy, C₂-C₂₀-Alkynyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulphonyl, C₁-C₂₀-Alkylsulphinyl darstellen, und
- L: eine Struktur der bereits zuvor beschriebenen allgemeinen Formeln (4a) oder (4b), inbesondere der Formeln (5a) bis (5f) besitzt.

Ganz besonders geeignet ist ein Katalysator, der unter die allgemeine Formel (K) fällt und die Struktur (21) besitzt, 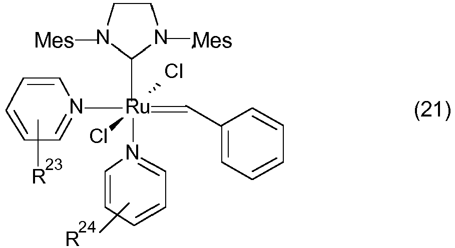 worin
- R²³ und R²⁴: gleich oder verschieden sind und H, Halogen, geradkettiges oder verzweigtes C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die vorgenannten Reste C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Ganz besonders geeignet ist ein Katalysator, bei dem R²³ und R²⁴ Wasserstoff bedeuten ("Grubbs III-Katalysator").

Ganz besonders geeignet sind ferner Katalysatoren der Strukturen (22a) oder (22b), wobei R²³ und R²⁴ die gleichen Bedeutungen besitzen wie in der Formel (21) angegeben, außer Wasserstoff.

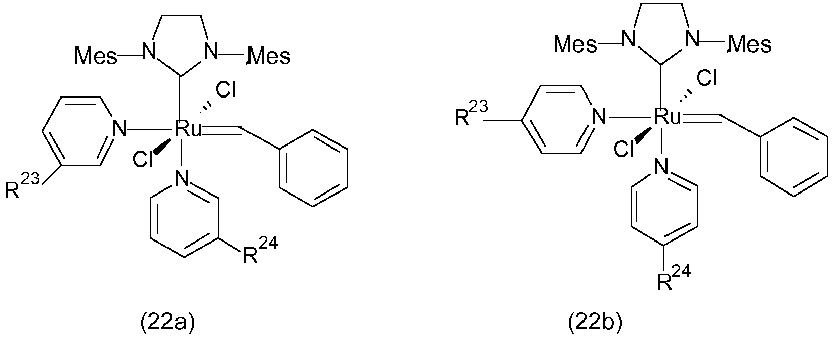

Geeignete Katalysatoren, die unter die allgemeinen Formeln (K), (N) und (Q) fallen, besitzen die nachfolgenden Strukturformen (23) bis (34), wobei Mes für 2,4,6-Trimethylphenyl steht.

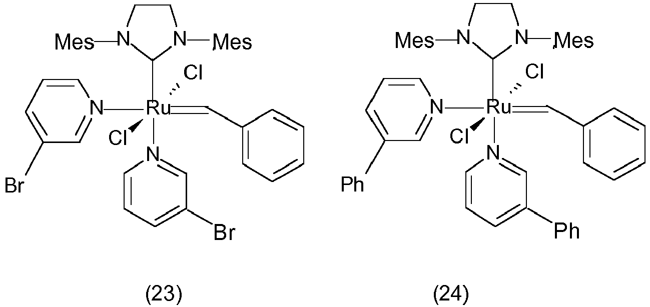

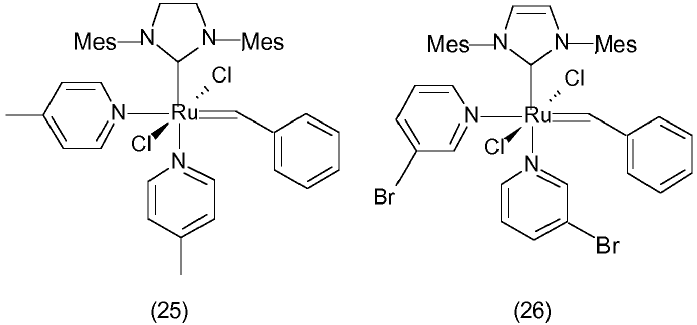

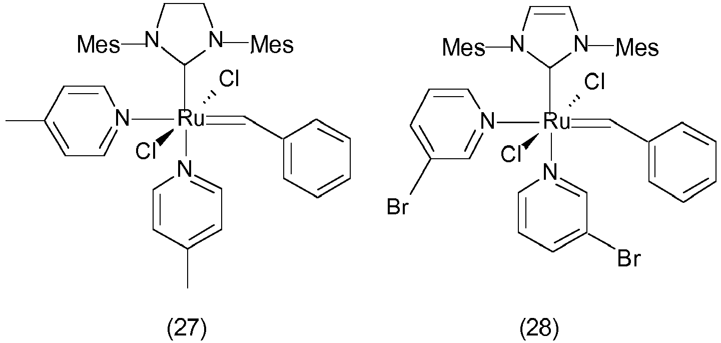

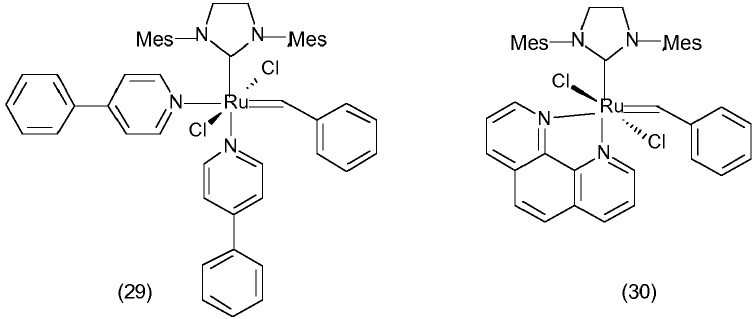

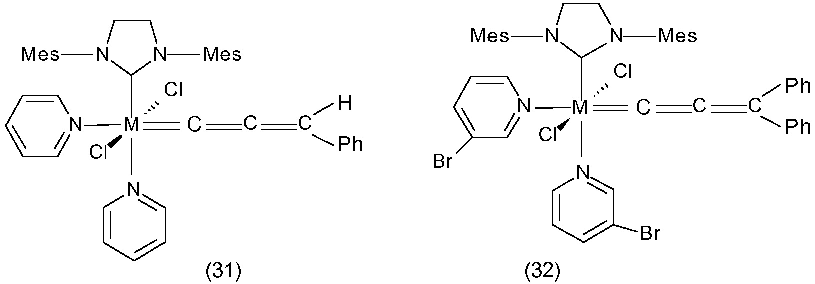

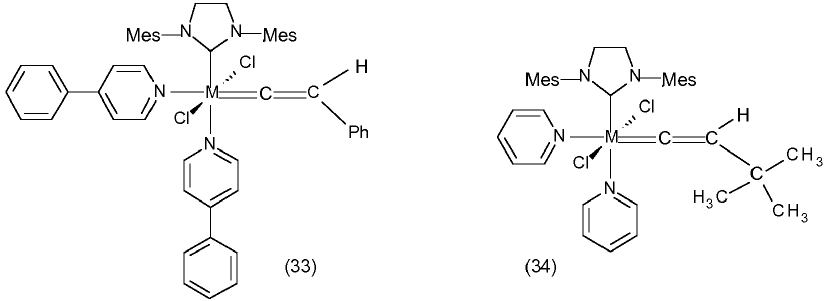

Geeignet sind ferner **Katalysatoren (R),** die das allgemeine Strukturelement (R1) aufweisen, wobei das mit einem "*" gekennzeichnete Kohlenstoff-Atom über eine oder mehrere Doppelbindungen an das Katalysator-Grundgerüst gebunden ist, 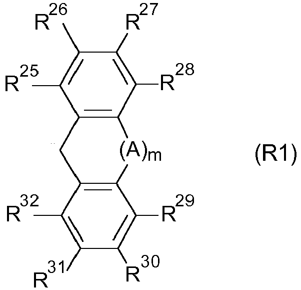 und worin
- R²⁵-R³²: gleich oder verschieden sind und Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻),-OSO₃⁻, -PO₃⁻ oder OPO₃⁻ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist,
- m: 0 oder 1 ist und
- A: Sauerstoff, Schwefel, C(R³³R³⁴), N-R³⁵, -C(R³⁶)=C(R³⁷)-, -C(R³⁶)(R³⁸)-C(R³⁷)(R³⁹)-bedeutet, worin R³³-R³⁹ gleich oder verschieden sind und jeweils die gleichen Bedeutungen besitzen können wie die Reste R²⁵-R³².

Die erfindungsgemäßen Katalysatoren weisen das Strukturelement der allgemeinen Formel (R1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (R) sind in EP-A-2 027 920 beschrieben. Zu den Katalysatoren (R) mit einem Strukturelement der allgemeinen Formel (R1) zählen beispielsweise solche der nachfolgenden **allgemeinen Formeln (R2a) und (R2b),** 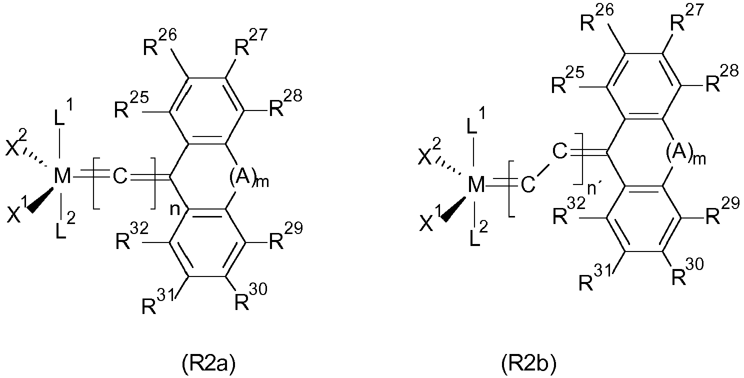 worin
- M: Ruthenium oder Osmium ist,
- X¹ und X²: gleich oder verschieden sind und zwei Liganden, bevorzugt anionische Liganden, darstellen,
- L¹ und L²: gleiche oder verschiedene Liganden, bevorzugt neutrale Elektronen-Donoren darstellen, wobei L² alternativ auch mit dem Rest R⁸ verbrückt sein kann,
- n: 0, 1, 2 oder 3, bevorzugt 0, 1 oder 2, ist,
- n': 1 oder 2, bevorzugt 1 ist, und
- R²⁵-R³², m und A: die gleichen Bedeutungen besitzen wie in der allgemeinen Formel (R1).

Bei den Katalysatoren der allgemeinen Formel (R2a) ist das Strukturelement der allgemeinen Formel (R1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungs-gemäßen Katalysatoren der allgemeinen Formel (R2b) ist das Strukturelement der allgemeinen Formel (R1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (R2a) und (R2b) umfassen somit Katalysatoren, bei denen die folgenden **allgemeinen Strukturelemente (R3)-(R9)** 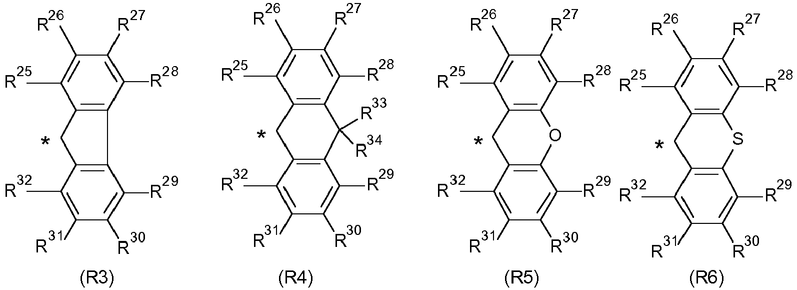 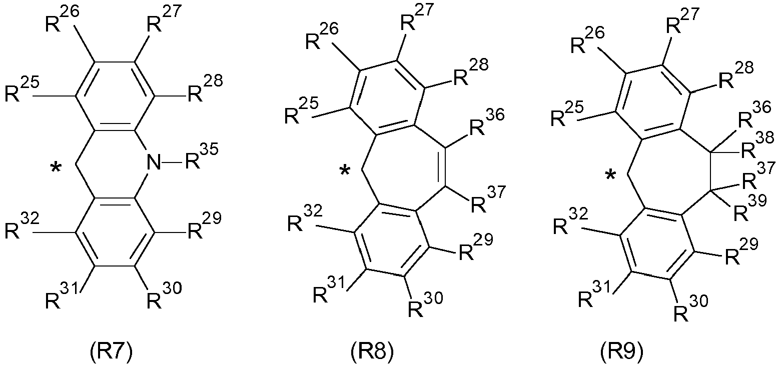 über das mit einem "*" gekennzeichnete C-Atom über ein oder mehrere Doppelbindungen an das Katalysator-Grundgerüst der **allgemeinen Formel (R10a) bzw. (R10b)** 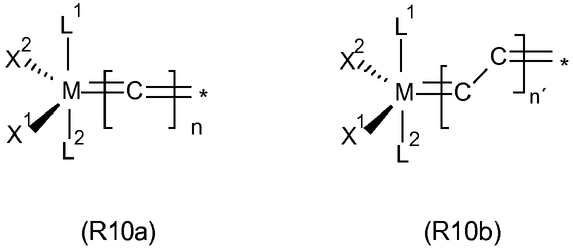 gebunden sind, wobei X¹ und X², L¹ und L², n, n' und R²⁵-R³⁹ die für die allgemeine Formeln (R2a) und (R2b) genannten Bedeutungen besitzen.

Typischerweise sind diese Ruthenium- oder Osmium Carben-Katalysatoren fünffach koordiniert.

Im **Strukturelement der allgemeinen Formel (R1)** sind
- R¹⁵-R³²: gleich oder verschieden und bedeuten Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃⁻ oder stehen für Alkyl, bevorzugt C₁-C₂₀-Alkyl, insbesondere C₁-C₆-Alkyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀-alkyl)amino, Alkylsilyl, bevorzugt C₁-C₂₀-Alkylsilyl, oder Alkoxysilyl, bevorzugt C₁-C₂₀-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist,
- m: ist 0 oder 1 und
- A: bedeutet Sauerstoff, Schwefel, C(R³³)(R³⁴), N-R³⁵, -C(R³⁶)=C(R³⁷)- oder -C(R³⁶)(R³⁸)-C(R³⁷)(R³⁹)-, worin R³³-R³⁹ gleich oder verschieden sind und jeweils die gleichen bevorzugten Bedeutungen besitzen können wie die Reste R¹-R⁸.

**C₁-C₆-Alkyl** steht im **Strukturelement der allgemeinen Formel (R1)** beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** steht im **Strukturelement der allgemeinen Formel (R1)** beispielsweise für Cyclopropyl, Cyclobutyl, Cylopentyl, Cyclohexyl, Cycloheptyl und Cyclooctyl.

**C₆-C₂₄-Aryl** umfasst im **Strukturelement der allgemeinen Formel (R1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste X¹ und X² im Strukturelement der allgemeinen Formel **(R1)** besitzen die gleichen allgemeinen, bevorzugten und besonders bevorzugten Bedeutungen, die für Katalysatoren der allgemeinen Formel (C) genannt werden.

In den allgemeinen Formeln (R2a) und (R2b) bzw. analog (R10a) und (R10b) stehen die Reste L¹ und L² für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel (C) genannt werden.

Bevorzugt sind Katalysatoren der allgemeinen Formeln (R2a) oder (R2b) mit einer allgemeinen Struktureinheit (N1), wobei
- M: Ruthenium darstellt,
- X¹ und X²: gleichzeitig Halogen bedeuten,
- n: 0,1 oder 2 ist in der allgemeinen Formel (R2a) bzw.
- n': 1 ist in der allgemeinen Formel (R2b)
- L¹ und L²: gleich oder verschieden sind und die für die allgemeinen Formeln (R2a) und (R2b) genannten allgemeinen oder bevorzugten Bedeutungen besitzen,
- R²⁵-R³²: gleich oder verschieden sind und die für die allgemeinen Formeln (R2a) und (R2b) genannten allgemeinen oder bevorzugten Bedeutungen besitzen,
- m: entweder 0 oder 1 ist,
und, wenn m = 1 ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Ganz besonders bevorzugt sind Katalysatoren der Formeln (R2a) oder (R2b) mit einer allgemeinen Struktureinheit (R1), wobei
- M: Ruthenium darstellt,
- X¹ und X²: beide Chlor bedeuten,
- n: 0,1 oder 2 ist in der allgemeinen Formel (R2a)bzw.
- n': 1 ist in der allgemeinen Formel (R2b)
- L¹: einen Imidazolidin-Rest der Formeln (5a) bis (5f) darstellt,
- L²: einen sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-Rest, einen Imidazolin- oder Imidazolidin-Rest der Formeln (5a) bis (5f) oder einen Phosphan-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
- R²⁵-R³²: die für die allgemeinen Formeln (R2a) und (R2b) genannten allgemeinen oder bevorzugten Bedeutungen besitzen,
- m: entweder 0 oder 1 ist,
und, wenn m = 1 ist
A für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Für den Fall, dass der Rest R²⁵ mit einem anderen Liganden des Katalysators der Formel R verbrückt ist, ergeben sich beispielsweise für die Katalysatoren der allgemeinen Formeln (R2a) und (R2b) die folgenden Strukturen der allgemeinen Formeln (R13a) und (R13b) 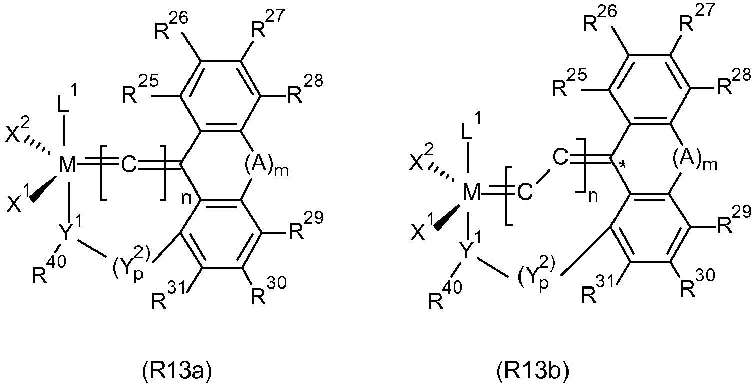 worin
- Y¹: Sauerstoff, Schwefel, einen Rest N-R⁴¹ oder einen Rest P-R⁴¹ bedeutet, wobei R⁴¹ die nachfolgend genannten Bedeutungen besitzt,
- R⁴⁰ und R⁴¹: gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können,
- p: 0 oder 1 ist und
- Y²: wenn p = 1 ist, für -(CH₂)ᵣ- mit r = 1, 2 oder 3, -C(=O)-CH₂-, -C(=O)-, -N=CH-, -N(H)-C(=O)- oder aber alternativ die gesamte Struktureinheit "-Y¹ (R⁴⁰)- (Y²)ₚ-" für (-N(R⁴⁰)=CH-CH₂-), (-N(R⁴⁰,R⁴¹)=CH-CH₂-), steht und
wobei M, X¹, X², L¹, R²⁵-R³², A, m und n die gleichen Bedeutungen besitzen wie in den allgemeinen Formeln (R10a) und (R10b).

Als **Beispiele für Katalysatoren der allgemeinen Formel (R)** seien die folgenden Strukturen (35) bis (45) genannt:

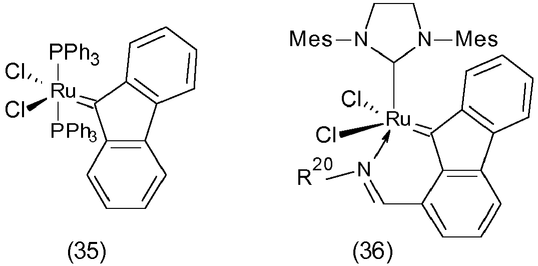

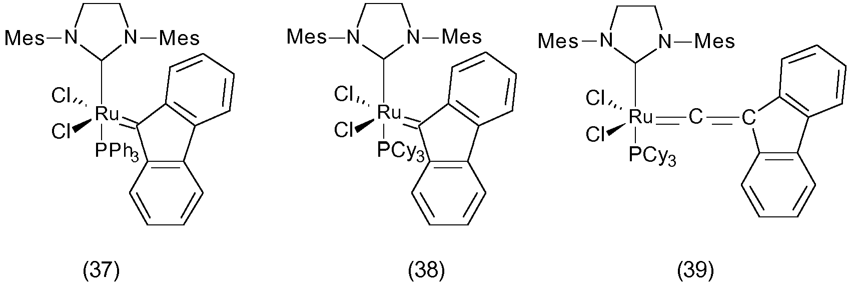

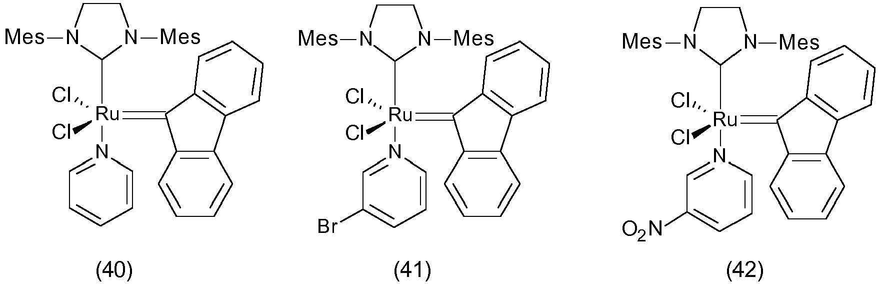

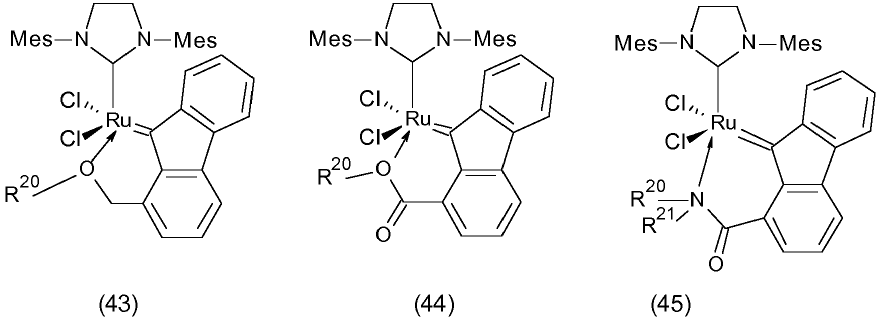

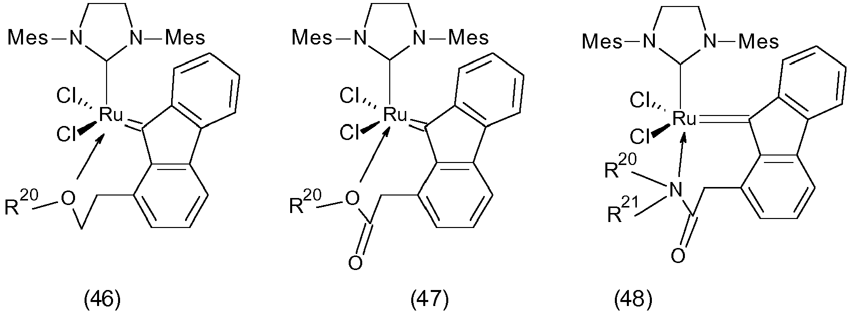

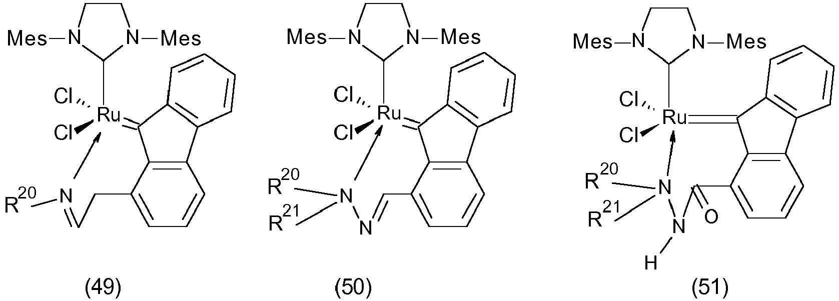

Die Herstellung von Katalysatoren der allgemeinen Formel (R) ist aus der EP-A-2 027 920 bekannt.

Geeignet sind ferner **Katalysatoren gemäß der allgemeinen Formel (T).** 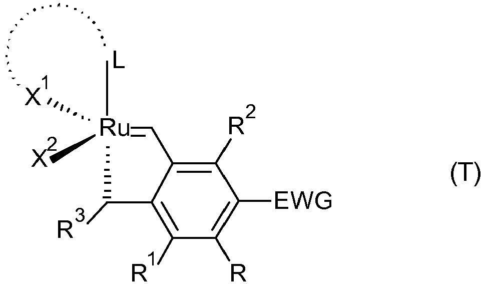 worin
- X¹ und X²: gleich oder verschieden sind und anionische Liganden darstellen, oder alternativ miteinander verknüpft sind über Kohlenstoff-Kohlenstoff und/oder Kohlenstoff-Heteroatom-Bindungen,
- Y: ein neutraler zwei-Elektronen Donor ist ausgewählt aus O, S, N und P,
- R: für H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl (RCO₂⁻), Cyano, Nitro, Amido, Amino, Aminosulfonyl, N-heteroarylsulfonyl, Alkylsulfonyl, Arylsulfonyl, Alkylsulfinyl, Arylsulfinyl, Alkylthio, Arylthio oder Sulfonamid stehen,
- R¹ und R²: für H, Br, I, Alkyl, Alkoxy, Aryl, Aryloxy, Alkylcarbonyl, Arylcarbonyl, Alkoxycarbonyl, Aryloxycarbonyl, Carboxyl, Amido, Amino, Heteroaryl, Alkylthio, Arylthio, oder Sulfonamido stehen,
- R³: für Alkyl, Aryl, Heteroaryl, Alkylcarbonyl, Arylcarbonyl, Thiocarbonyl, oder Aminocarbonyl stehen,
- EWG: eine elektronenziehende Gruppe ist die ausgewählt ist aus der Gruppe bestehend aus Aminosulfonyl, Amidosulfonyl, N-heteroarylsulfonyl, Arylsulfonyl, Arylsulfinyl, Arylcarbonyl, Alkylcarbonyl, Aryloxycarbonyl, Aminocarbonyl, Amido, Sulfonamido, Chlor, Fluor, H, oder Haloalkyl und
- L: ein elektronenliefernder Ligand ist, der an X¹ über Kohlenstoff-Kohlenstoff und/oder Kohlenstoff-Heteroatom-Bindungen geknüpft sein kann.

Diese Katalysatoren der allgemeinen Formel (T) sind aus US 2007/0043180 bekannt.

Bevorzugt sind Katalysatoren der allgemeinen Formel (T), worin X¹ und X² ausgewählt sind aus einem ionischen Ligand in Form von Halogeniden, Carboxylaten und Aryloxiden. Besonders bevorzugt stehen X¹ und X² beide für Halogenide, insbesondere sind beide Chloride. In der allgemeinen Formel (T) steht Y bevorzugt für Sauerstoff. R steht bevorzugt für H, Halogen, Alkoxycarbonyl, Aryloxycarbonyl, Heteroaryl, Carboxyl, Amido, Alkylsulfonyl, Arylsulfonyl, Alkylthio, Arylthio oder Sulfonamido. Insbesondere steht R für H, Cl, F oder eine C₁₋₈ Alkoxycarbonyl Gruppe. R¹ und R² sind gleich oder verschieden und stehen bevorzugt für H, Alkoxy, Aryl, Aryloxy, Alkoxycarbonyl, Amido, Alkylthio, Arylthio oder eine Sulfonamido-Gruppe. Insbesondere steht R¹ für H oder eine Alkoxy-Gruppe und R² ist Wasserstoff. In der allgemeinen Formel (T) steht R³ bevorzugt für eine Alkyl, Aryl, Heteroaryl, Alkylcarbonyl oder Arylcarbonyl-Gruppe. Besonders bevorzugt steht R³ für Isopropyl, sec-Butyl und Methoxyethyl. In der allgemeinen Formel (T) steht EWG bevorzugt für eine Aminosulfonyl, Amidosulfonyl, N-Heteroarylsulfonyl, Arylsulfonyl, Aminocarbonyl, Arylsulfonyl, Alkylcarbonyl, Aryloxycarbonyl, Halogen oder Haloalkyl-Gruppe. Besonders bevorzugt steht EWG für eine C₁₋₁₂ N-alkylaminosulfonyl, C₂₋₁₂ N-Heteroarylsulfonyl, C₁₋₁₂ Aminocarbonyl, C₆₋₁₂ Arylsulfonyl, C₁₋₁₂ Alkylcarbonyl, C₆₋₁₂ Arylcarbonyl, C₆₋₁₂ Aryloxycarbonyl, Cl, F oder Trifluoromethyl-Gruppe. In der allgemeinen Formel (T) steht L für einen elektronliefernden Liganden ausgewählt aus Phosphinen, Amino, Aryloxiden, Carboxylaten oder heterocyclischen Carben-Resten, die an X¹ über Kohlenstoff-Kohlenstoff und/oder Kohlenstoff-Heteroatom-Bindungen gebunden sein können.

Besonders geeignet ist ein Katalysator der allgemeinen Formel (T), worin L ein heterocyclischer Carben-Ligand oder ein Phosphin (P(R⁸)₂(R⁹) darstellt mit den folgenden Strukturen: 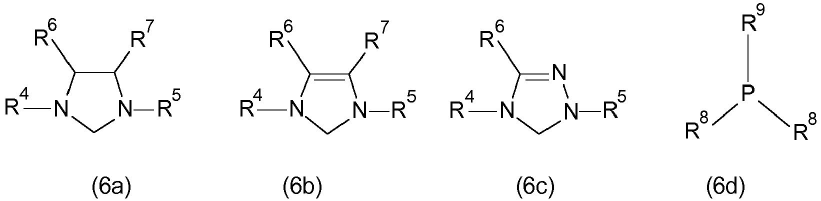 worin
- R⁴ und R⁵: gleich oder verschieden sind und C₆₋₁₂ Aryl darstellen und
- R⁶ und R⁷: gleich oder verschieden sind und H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl, Cyano, Nitro, Amido, Amino, Alkylsulfonyl, Arylsulfonyl, Alkylsulfinyl, Arylsulfinyl, Alkylthio oder Sulfonamido bedeuten und
- R⁸ und R⁹: gleich oder verschieden sind und C₁₋₈ Alkyl oder C₆₋₁₂ Aryl darstellen.

Geeignet sind ferner **bimetallische Komplexe der allgemeinen Formel (U),**

M¹ₐM²_{b}Xₘ(L¹)ₙ (U)

worin
- M¹: Rhodium (Rh) oder Ruthenium (Ru) darstellt,
- M²: Ruthenium (Ru) oder ein Lanthanid darstellt,
wobei dann, wenn M¹ für Rhodium (Rh) steht, M² Ruthenium (Ru) oder ein Lanthanid darstellt und dann, wenn M¹ für Ruthenium (Ru) steht, M² ein Lanthanid darstellt,
- X: gleich oder verschieden sind und H, Cl oder Br bedeuten,
- L¹: ein Organophosphan (PR¹R²R³), Diphosphan (R¹R²P(CH₂)ₙPR³R⁴), Organoarsan (ASR¹R²R³) oder andere organische Verbindungen enthaltend Stickstoff, Schwefel, Sauerstoff Atome oder Mischungen davon darstellt, wobei R¹, R², R³ und R⁴ gleich oder verschieden sind und C₁-C₆ Alkyl, C₆-C₁₂ Cycloalkyl, Aryl, C₇-C₁₂ Aralkyl oder Aryloxy Gruppen darstellen,
1 ≦ a ≦ 4,
1 ≦ b ≦ 2,
3 ≤ m ≤ 6 und
6 ≦ n ≦ 15 ist.

Diese Katalysatoren der allgemeinen Formel (U) sind aus US-A-6,084,033 prinzipiell bekannt. Besonders geeignet sind Katalysatoren der allgemeinen Formel (U), worin M¹ Rhodium bedeutet und M² Ruthenium. Besonders geeignet sind ferner Katalysatoren der allgemeinen Formel (U), worin M² ein Lanthanid darstellt, insbesondere Ce oder La. In besonders geeigneten Katalysatoren der allgemeinen Formel (U) sind X gleich oder verschieden und H oder Cl. Besonders geeignet sind Katalysatoren der allgemeinen Formel (U), worin L¹ ausgewählt ist aus Trimethylphosphan, Triethylphosphan, Triphenylphosphan, Triphenoxyphosphan, Tri(p-methoxyphenyl)phosphan, Diphenylethylphosphan, 1,4-Di-(diphenylphosphano)butan, 1,2-Di-(diphenylphosphano)ethan, Triphenylarsan, Dibutylphenylarsan, Diphenylethylarsan, Triphenylamin, Triethylamin, N,N-Dimethylanilin, Diphenylthioether, Dipropylthioether, N,N'-Tetramethylethylendiamin, Acetylaceton, Diphenylketone und Mischungen davon.

**Weitere Katalysatoren, die eingesetzt werden können,** sind in folgenden Schriften beschrieben US-A-37 00 637, DE-A-25 39 132, EP-A 134 023, DE-A 35 41 689, DE 3540918, EP-A-0 298 386, DE-A 3529252, DE-A 3433 392, US-A 4,464,515, US 4,503,196 sowie EP-A-1 720 920.

### Menge Hydrierkatalysator:

Für die Hydrierung des Nitrilkautschuks kann der Hydrierkatalysator in einem breiten Mengenbereich eingesetzt werden. Üblicherweise wird der Katalysator in einer Menge von 0,001 bis 1,0 Gew.%, bevorzugt von 0,01 bis 0,5 Gew.%, insbesondere 0,05 bis 0,3 Gew.-%, bezogen auf den zu hydrierenden Nitrilkautschuk eingesetzt.

### Sonstige Hydrierbedingungen:

Die Durchführung der Hydrierung ist dem Fachmann hinlänglich bekannt, z.B. aus US 6,683,136A**.**

### Lösungsmittel:

Die Hydrierung erfolgt üblicherweise in einem Lösungsmittel, bevorzugt einem organischen Lösungsmittel. Als organische Lösungsmittel sind z.B. Aceton, Methylethylketon, Essigsäureethylester, Tetrahydrofuran, 1,3-Dioxan, Benzol, Toluol, Methylenchlorid, Chloroform, Monochlorbenzol und Dichlorbenzol geeignet. Besonders bewährt hat sich Monochlorbenzol, da es sowohl für Nitrilkautschuke mit unterschiedlichen Nitrilgehalten als auch für die entsprechenden resultierenden hydrierten Nitrilkautschuke ein gutes Lösungsmittel ist.

### Konzentration Nitrilkautschuk:

Für die Hydrierung löst man Nitrilkautschuk üblicherweise in mindestens einem Lösungsmittel. Die Konzentration des Nitrilkautschuks bei der Hydrierung liegt i.d.R. im Bereich 1 - 30 Gew. %, bevorzugt im Bereich 5 - 25 Gew. %, besonders bevorzugt im Bereich 7 - 20 Gew. %.

Der Druck liegt bei der Hydrierung üblicherweise im Bereich von 0,1 bar bis 250 bar, bevorzugt von 5 bar bis 200 bar, besonders bevorzugt von 50 bar bis 150 bar. Die Temperatur liegt typischerweise im Bereich von 0°C bis 180°C, bevorzugt von 20°C bis 160°C, besonders bevorzugt von 50°C bis 150°C. Die Reaktionszeit liegt in der Regel bei 2 bis 10 h.

Im Rahmen der Hydrierung werden die im eingesetzten Nitrilkautschuk vorhandenen Doppelbindungen zu mindestens 50 %, bevorzugt 70-100%, besonders bevorzugt 80-100% und insbesondere 90 bis 100%, insbesondere bevorzugt zu größer 94,5 bis 100%, ganz besonders bevorzugt zu 95 bis 100%. hydriert. Auch hydrierte Nitrilkautschuke mit einem Restgehalt von Doppelbindungen ("RDB") im Bereich von 0 bis 0,9% sind zugänglich. Die Verfolgung der Hydrierung erfolgt on-line durch Bestimmung der Wasserstoffaufnahme oder durch Raman-**(**EP-A-0 897 933**)** oder IR-Spektroskopie **(**US-A-6,522,408**).** Eine geeignete IR-Methode zur off-line Bestimmung des Hydriergrades ist weiterhin beschreiben durch D. Brück in Kautschuke + Gummi, Kunststoffe, Vol. 42. (1989), No. 2, S. 107-110 **(part 1)** sowie in Kautschuke + Gummi, Kunststoffe, Vol. 42. (1989), No. 3, S. 194-197**.**

Nach Erreichen des gewünschten Hydriergrades wird der Reaktor entspannt. Restmengen an Wasserstoff werden üblicherweise durch eine Stickstoffspülung entfernt.

Vor der Entfernung des Lösungsmittels sowie Isolierung des hydrierten Nitrilkautschuks aus der organischen Phase kann der Hydrierkatalysator entfernt werden, muss es aber nicht. Ein bevorzugtes Verfahren zur Rhodium Rückgewinnung ist beispielsweise in US-A-4,985,540 beschrieben.

### Co-Katalysatoren:

Die Hydrierung kann unter Zusatz eines Phosphan bzw. Diphosphans als Co-Katalysator erfolgen. Dieses werden i.d.R. in Mengen von 0,1 bis 10 Gew.- %, bevorzugt von 0,25 bis 5 Gew. %, besonders bevorzugt 0,5 bis 4 Gew.%, ganz besonders bevorzugt 0,75 bis 3,5 Gew.% und insbesondere 1 bis 3 Gew.-%, bezogen auf den zu hydrierenden Nitrilkautschuk eingesetzt.

Als Phosphan Co-Katalysator eignen sich solche der allgemeinen Formel (1-a), 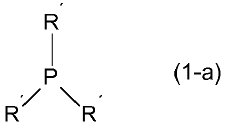 wobei
- R': gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,
und als Diphosphan Co-Katalysator eignen sich solche der allgemeinen Formel (1-b), 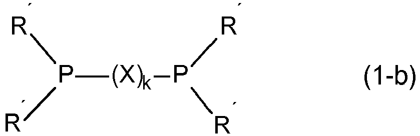 worin
- R': gleich oder verschieden sind und die gleichen Bedeutungen besitzen wie in der allgemeinen Formel (1-a),
- k: 0 oder 1 ist und
- X: für eine geradkettige oder verzweigte Alkandiyl-, Alkendiyl- oder Alkindiylgruppe steht.

Die Reste R' können dabei sowohl in Formel (1-a) als auch (1-b) unsubstituiert, einfach oder mehrfach substituiert sein.

Derartige Phosphane oder Diphosphane der allgemeinen Formeln (1-a) und (1-b) sind nach dem Fachmann bekannten Methoden herstellbar oder aber käuflich erhältlich.

Unter **Alkyl-Resten** in den Resten R' der Phosphane bzw. Diphosphane der allgemeinen Formeln (1-a) und (1-b) versteht man üblicherweise geradkettige oder verzweigte C₁-C₃₀-Alkylreste, bevorzugt C₁-C₂₄-Alkylreste, besonders bevorzugt C₁-C₁₈-Alkylreste. C₁-C₁₈-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl und n-Octadecyl.

Unter **Alkenyl-Resten** in den Resten R' der Phosphane bzw. Diphosphane der allgemeinen Formeln (1-a) und (1-b) versteht man üblicherweise C₂-C₃₀-Alkenyl-Reste, bevorzugt C₂-C₂₀-Alkenyl-Reste. Besonders bevorzugt handelt es sich bei einem Alkenylrest um einen Vinylrest oder einen Allylrest.

Unter **Alkadienyl-Resten** in den Resten R' der Phosphane bzw. Diphosphane der allgemeinen Formeln (1-a) und (1-b) versteht man üblicherweise C₄-C₃₀-Alkadienyl-Reste, bevorzugt C₄-C₂₀-Alkadienyl-Reste. Besonders bevorzugt handelt es sich bei einem Alkadienylrest um Butadienyl oder Pentadienyl.

Unter **Alkoxy-Resten** in den Resten R' der Phosphane bzw. Diphosphane der allgemeinen Formeln (1-a) und (1-b) versteht man üblicherweise C₁-C₂₀-Alkoxy-Reste, bevorzugt C₁-C₁₀-Alkoxy-Reste, besonders bevorzugt Methoxy, Ethoxy, n-Propoxy, iso-Propoxy, n-Butoxy, sec.-Butoxy, tert.-Butoxy, n-Pentoxy und n-Hexoxy.

Unter **Aryl-Resten** in den Resten R' der Phosphane bzw. Diphosphane der allgemeinen Formeln (1-a) und (1-b) versteht man üblicherweise C₅-C₂₄-Arylreste, bevorzugt C₆-C₁₄-Arylreste, besonders bevorzugt C₆-C₁₂-Arylreste. Beispiele für C₅-C₂₄-Aryl sind Phenyl, o-, p-, m-Tolyl, Naphthyl, Phenanthrenyl, Anthracenyl und Fluorenyl.

**Heteroaryl-Reste** in den Resten R" der Phosphane bzw. Diphosphane der allgemeinen Formeln (1-a) und (1-b) besitzen die gleiche Bedeutung wie zuvor für Aryl-Reste angegeben, wobei jedoch ein- oder mehrere der Gerüstkohlenstoff-Atome durch ein Heteroatom, ausgewählt aus der Gruppe Stickstoff, Schwefel und Sauerstoff, ersetzt sind. Beispiele für solche Heteroaryl- Reste sind Pyridinyl, Oxazolyl, Benzofuranyl, Dibenzofuranyl und Chinolinyl.

Alle vorgenannten **Alkyl, Alkenyl, Alkadienyl, und Alkoxy-Reste** können unsubstituiert, ein- oder mehrfach substituiert sein, beispielsweise durch C₅-C₂₄-Aryl-Reste, bevorzugt Phenyl (bei Alkylresten resultiert hierbei z.B. Arylalkyl, bevorzugt ein Phenylalkyl-Rest), Halogen, bevorzugt Fluor, Chlor oder Brom, CN, OH, NH₂ oder NR"₂-Reste, wobei R" wiederum C₁-C₃₀-Alkyl oder C₅-C₂₄-Aryl bedeutet.

Sowohl die **Arylreste als auch die Heteroarylreste** sind entweder unsubstituiert, ein- oder mehrfach substituiert, z.B. durch geradkettiges oder verzweigtes C₁-C₃₀-Alkyl (es resultieren sogenannte Alkylaryl-Reste), Halogen, bevorzugt Fluor, Chlor oder Brom, Sulfonat (SO₃Na), geradkettiges oder verweigtes C₁-C₃₀-Alkoxy, bevorzugt Methoxy oder Ethoxy, Hydroxy, NH₂ oder N(R")₂-Reste, wobei R" wiederum geradkettiges oder verzweigtes C₁-C₃₀-Alkyl oder C₅-C₂₄-Aryl bedeutet, oder durch weitere C₅-C₂₄-Aryl- oder -Heteroarylreste, womit Bisarylreste, bevorzugt Biphenyl oder Binaphthyl, Heteroaryl-Aryl-Reste, Aryl-heteroaryl-Reste oder Bisheteroarylreste resultieren. Auch diese C₅-C₂₄-Aryl- oder -Heteroaryl-Substituenten sind erneut wiederum entweder unsubstituiert oder ein- oder mehrfach durch alle vorgenannten Substituenten substituiert.

Unter **Cycloalkyl-Resten** in den Resten R' der Phosphane bzw. Diphosphane der allgemeinen Formeln (1-a) und (1-b) versteht man üblicherweise einen C₃-C₂₀-Cycloalkylrest, bevorzugt einen C₃-C₈-Cycloalkylrest, besonders bevorzugt Cyclopentyl und Cyclohexyl.

**Cycloalkenyl-Reste** in den Resten R der Phosphane bzw. Diphosphane der allgemeinen Formeln (1-a) und (1-b) sind gleich oder verschieden, weisen im Ringgerüst eine C=C Doppelbindung auf und bedeuten üblicherweise C₅-C₈ Cycloalkenyl, bevorzugt Cyclopentenyl und Cyclohexenyl.

**Cycloalkadienyl-Reste** in den Resten R' der Phosphane bzw. Diphosphane der allgemeinen Formeln (1-a) und (1-b) sind gleich oder verschieden, weisen im Ringgerüst zwei C=C Doppelbindungen auf und stehen üblicherweise für C₅-C₈ Cycloalkadienyl, bevorzugt für Cyclopentadienyl oder Cyclohexadienyl.

Auch die vorgenannten **Cycloalkyl, Cycloalkenyl und Cycloalkadienyl-Reste** sind entweder unsubstituiert, ein- oder mehrfach substituiert, z.B. durch geradkettiges oder verzweigtes C₁-C₃₀-Alkyl (dann resultieren sogenannte Alkylaryl-Reste), Halogen, bevorzugt Fluor, Chlor oder Brom, Sulfonat (SO₃Na), geradkettiges oder verzweigtes C₁-C₃₀-Alkoxy, bevorzugt Methoxy oder Ethoxy, Hydroxy, NH₂ oder NR"₂-Reste, wobei R" wiederum geradkettiges oder verzweigtes C₁-C₃₀-Alkyl oder C₅-C₂₄-Aryl bedeutet, oder durch C₅-C₂₄-Aryl- oder Heteroarylreste, die wiederum entweder unsubstituiert oder ein.- oder mehrfach durch alle vorgenannten Substituenten substituiert sind.

Die **Halogen Reste** in den Resten R' der Phosphane bzw. Diphosphane der allgemeinen Formeln (1-a) und (1-b) sind gleich oder verschieden und bedeuten Fluor, Chlor oder Brom.

Besonders bevorzugt sind als Phosphane der allgemeinen Formel (1-a) Trialkyl-, Tricycloalkyl-, Triaryl-, Trialkaryl-, Triaralkyl-, Diaryl-monoalkyl-, Diaryl-monocycloalkyl-, Dialkylmonoaryl-, Dialkyl-monocycloalkyl- oder Dicycloalkyl-monoaryl-Phosphane, wobei alle vorgenannten Reste wiederum entweder unsubstituiert, ein- oder mehrfach durch die zuvor genannten Substituenten substituiert sind.

Inbesondere bevorzugt sind Phosphane der allgemeinen Formel (1-a), bei denen die Reste R' gleich oder verschieden sind und für Phenyl, Cyclohexyl, Cyclohexenyl, Cyclopentyl, Cyclopentadienyl, Phenylsulfonat oder Cyclohexylsulfonat stehen.

Ganz besonders bevorzugt werden als Phosphane der allgemeinen Formel (1-a) PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclopentyl)₃, P(cyclohexyl)₃, P(neopentyl)₃, P(C₆H₅CH₂)(C₆H₅)₂, P(NCCH₂CH₂)₂(C₆H₅), P[(CH₃)₃C]₂Cl, P[(CH₃)₃C]₂(CH₃), P(tert.-Bu)₂(biph), P(C₆H₁₁)₂Cl, P(CH₃)(OCH₂CH₃)₂, P(CH₂=CHCH₂)₃, P(C₄H₃O)₃, P(CH₂OH)₃, P(m-CH₃OC₆H₄)₃, P(C₆F₅)₃, P[(CH₃)₃Si]₃, P[(CH₃O)₃C₆H₂]₃ eingesetzt, wobei Ph für Phenyl, Tol für Tolyl, biph für Biphenyl, Bu für Butyl und Pr für Propyl stehen. Insbesondere bevorzugt ist Triphenylphosphan.

In den Diphosphanen der allgemeinen Formel (1-b) steht k für 0 oder 1, bevorzugt für 1.

X steht in der allgemeinen Formel (1-b) für eine geradkettige oder verzweigte Alkandiyl-, Alkendiyl- oder Alkindiylgruppe, bevorzugt für eine geradkettige oder verzweigte C₁-C₂₀-Alkandiyl-, C₂-C₂₀-Alkendiyl- oder C₂-C₂₀-Alkindiylgruppe, besonders bevorzugt für eine geradkettige oder verzweigte C₁-C₈-Alkandiyl-, C₂-C₆-Alkendiyl- oder C₂-C₆-Alkindiylgruppe.

**C₁-C₈-Alkandiyl** steht für einen geradkettigen oder verzweigten Alkandiylrest mit 1 bis 8 Kohlenstoffatomen. Besonders bevorzugt ist ein geradkettiger oder verzweigter Alkandiylrest mit 1 bis 6 Kohlenstoffatomen, insbesondere mit 2 bis 4 Kohlenstoffatomen. Bevorzugt sind Methylen, Ethylen, Propylen, Propan-1,2-diyl, Propan-2,2-diyl, Butan-1,3-diyl, Butan-2,4-diyl, Pentan-2,4-diyl und 2-Methyl-pentan-2,4-diyl.

**C₂-C₆-Alkendiyl** steht für einen geradkettigen oder verzweigten Alkendiylrest mit 2 bis 6 Kohlenstoffatomen. Bevorzugt ist ein geradkettiger oder verzweigter Alkendiylrest mit 2 bis 4, besonders bevorzugt 2 bis 3 Kohlenstoffatomen. Vorzugsweise seien genannt: Vinylen, Allylen, Prop-1-en-1,2-diyl und But-2-en-1,4-diyl.

**C₂-C₆-Alkindiyl** steht für einen geradkettigen oder verzweigten Alkindiylrest mit 2 bis 6 C-Atomen. Bevorzugt ist ein geradkettiger oder verzweigter Alkindiylrest mit 2 bis 4, besonders bevorzugt mit 2 bis 3 C-Atomen. Vorzugsweise seien genannt: Ethindiyl und Propindiyl.

Besonders bevorzugte Diphosphane der allgemeinen Formel (1-b) sind Cl₂PCH₂CH₂PCl₂, (C₆H₁₁)₂PCH₂P(C₆H₁₁), (CH₃)₂PCH₂CH₂P(CH₃)₂, (C₆H₅)₂PCCP(C₆H₅)₂, (C₆H₅)₂PCH=CHP(C₆H₅)₂, (C₆F₅)₂P(CH₂)₂P(C₆F₅)₂, (C₆H₅)₂P(CH₂)₂P(C₆H₅)₂, (C₆H₅)₂P(CH₂)₃P(C₆H₅)₂, (C₆H₅)₂P(CH₂)₄P(C₆H₅)₂, (C₆H₅)₂P(CH₂)₅P(C₆H₅)₂, (C₆H₅)₂PCH(CH₃)CH(CH₃)P(C₆H₅)₂ und (C₆H₅)₂PCH(CH₃)CH₂P(C₆H₅)₂.

Besondere, ebenfalls erfindungsgemäß einsetzbare Diphosphane sind ferner publiziert in Chem. Eur. J. 2008, 14, 9491-9494**.** Zu nennen sind beispielsweise:

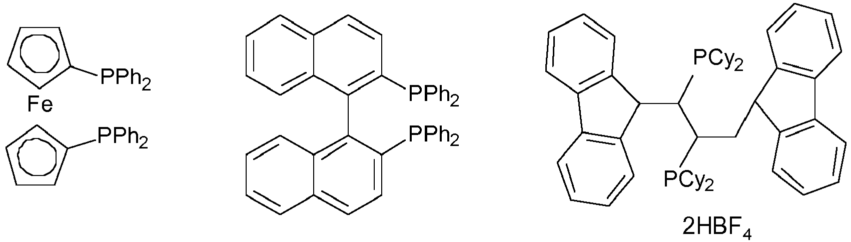

Sofern die Hydrierung im Rahmen des erfindungsgemäßen Verfahrens unter Zusatz eines Phosphans bzw. Diphosphans erfolgt, so werden diese typischerweise in Mengen von 0,1 bis 10 Gew.- %, bevorzugt von 0,25 bis 5 Gew. %, besonders bevorzugt 0,5 bis 4 Gew.%, ganz besonders bevorzugt 0,75 bis 3,5 Gew.% und insbesondere 1 bis 3 Gew.-%, bezogen auf den zu hydrierenden Nitrilkautschuk eingesetzt.

Bezogen auf 1 Äquivalent des Hydrierkatalysators wird das Phosphan bzw. Diphosphan bewährterweise in einer Menge im Bereich von 0,1 bis 10 Äquivalenten, bevorzugt im Bereich von 0,2 bis 5 Äquivalenten und besonders bevorzugt im Bereich von 0,3 bis 3 Äquivalenten eingesetzt.

Das Gewichtsverhältnis des zugesetzten Phosphans bzw. Diphosphans zum Hydrierkatalysator beträgt üblicherweise (1-100):1, bevorzugt (3-30):1, insbesondere (5-15):1.

Es ist ferner möglich, den Nitrilkautschuk vor der Hydrierung einer Metathese Reaktion zu unter-ziehen, um das Molekulargewicht des Nitrilkautschuks abzubauen. Die Metathese von Nitril-kautschuken ist dem Fachmann hinlänglich bekannt. Sofern eine Metathese erfolgt, ist ferner möglich, die anschließende Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

Im Anschluss an die Hydrierung erfolgt die Abtrennung des Lösungsmittels entweder durch eine trockene Aufarbeitung, bevorzugt über ein Walzentrocknungsverfahren oder ein Schneckenverfahren, oder durch eine nasse Aufarbeitung, bevorzugt über eine Wasserdampfdestillation.

**Trockene Aufarbeitungsverfahren** sind beispielsweise das in DE 4032598 beschriebene Walzentrocknungsverfahren sowie die in WO-A-2011/023763 sowie in EP-A-2368917 beschriebenen Schneckenverfahren.

Auch eine **nasse Aufarbeitung über eine Wasserdampfdestillation** eignet sich für die Abtrennung des bei der Hydrierung eingesetzten Lösungsmittels. Im Falle einer Lösungsmittelentfernung durch Wasserdampfdestillation wird der hierbei anfallende Kautschuk aus der wässrigen Krümeldispersion mit Sieben wie z.B. Rüttel- oder Bogensieben entfernt und anschließend mechanisch entwässert und dann getrocknet. Für die mechanische Entwässerung der wasserfeuchten Kautschukkrümel eignen sich Schneckenaggregate wie. z.B. Seiher- oder Expellerschnecken. Die sich anschließende thermische Trocknung kann in Expanderschnecken oder in Fließbett-Trocknern, Bandtrocknern oder anderen geeigneten Trocknern durchgeführt werden.

Bei der Aufarbeitung verbleiben 90-100% des eingesetzten Phenols der allgemeinen Formel (II) im Kautschuk.

In einer besonderen Ausführungsform weist der erfindungsgemäße ganz oder teilweise hydrierte Nitrilkautschuk im getrockneten Zustand flüchtige Anteile < 1,0 Gew. % auf, wobei das mindestens eine substituierte Phenol der allgemeinen Formel (I) in einer Menge im Bereich von 0,1 Gew.% bis 0,25 Gew.% bezogen auf den hydrierten Nitrilkautschuk vorhanden ist.

### Vulkanisierbare Mischungen:

**Gegenstand der Erfindung sind** ferner vulkanisierbaren Mischungen enthaltend mindestens einen erfindungsgemäßen hydrierten Nitrilkautschuk und mindestens ein Vernetzungssystem. Bevorzugt können diese vulkanisierbaren Mischungen noch ein oder mehrere weitere typische Kautschukadditive enthalten.

Die Herstellung dieser vulkanisierbaren Mischungen erfolgt durch Mischen mindestens eines erfindungsgemäßen hydrierten Nitrilkautschuks (i) mit mindestens einem Vernetzungssystem (ii) und gegebenenfalls einem oder mehreren weiteren Additive.

Das Vernetzungssystem enthält mindestens einen Vernetzer und optional ein oder mehrere Vernetzungsbeschleuniger.

Üblicherweise wird der erfindungsgemäße hydrierte Nitrilkautschuk zunächst mit allen gewählten Additiven gemischt und erst als letztes das Vernetzungssystem aus mindestens einem Vernetzer sowie optional einem Vernetzungsbeschleuniger zugemischt.

Die Herstellung dieser vulkanisierbaren Mischungen erfolgt durch Mischen mindestens eines erfindungsgemäßen hydrierten Nitrilkautschuks und mindestens eines Vernetzers. Soweit ein oder mehreren Füllstoffe und/oder ein oder mehrere weitere Additive eingesetzt werden, werden auch diese zugemischt.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyl-trimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den unhydrierten, ganz oder teilweise hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen unhydrierten, ganz oder teilweise hydrierten Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen unhydrierten, ganz oder teilweise hydrierten Nitrilkautschuks aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyl-dithiocarbamat (ZDMC), Zinkdiethyldithiocarbamat (ZDEC), Zinkdibutyl-dithiocarbamat (ZDBC), Zinkethylphenyldithiocarbamat (ZEPC), Zinkdibenzyldithiocarbamat (ZBEC), Zinkpenta- methylendithiocarbamat (Z5MC), Tellurdiethyldithiocarbamat, Nickeldibutyldithiocarbamat, Nickeldimethyldithiocarbamat und Zinkdiisononyldithiocarbamat.

Als Thiurame können z.B. Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuram-tetrasulfid oder Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) oder Kupfer-2-mercaptobenzothiazol eingesetzt werden.

Als Sulfenamidderivate können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können z.B. Zinkdi(C₂-C₁₆)alkyldithiophosphate Kupferdi(C₂-C₁₆)alkyldithiophosphate und Dithiophosphorylpolysulfid eingesetzt werden.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.
Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze und Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiuram-monosulfid, Zinkdibenzyldithiocarbamat, Dipentamethylenthiuram-tetrasulfid, Zinkdialkyl-dithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannte Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei einer Schwefelvernetzung ist es möglich, zusätzlich zu den Vernetzungsmitteln und oben genannten Zusätzen auch weitere anorganische bzw. organische Substanzen mit zu verwenden, wie Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen aufweist. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=O)NHNH₂")

Beispiele für derartige Polyamin-Vernetzer (ii) sind:
- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamin-dibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin);
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzers in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydamin-Vernetzungsbeschleuniger wie z.B. n-Butylaldehydanilin. Besonders bevorzugt wird als Vernetzungsbeschleuniger mindestens eine bi- oder polycyclische aminische Base eingesetzt. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des hydrierten Nitrilkautschuks.

Die vulkanisierbare Mischung basierend auf dem erfindungsgemäßen hydrierten Nitrilkautschuk kann prinzipiell auch Anvulkanisationsverzögerer enthalten, die sich bei einer Vulkanisation mit Schwefel oder mit Peroxiden unterscheiden:
Bei einer Vulkanisation mit Schwefel werden eingesetzt: Cyclohexylthiophthalimid (CTP), N,N' Dinitrosopentamethlyentetramin (DNPT), Phthal-säureanhydrid (PTA) und Diphenylnitrosamin. Bevorzugt ist Cyclohexylthiophthalimid (CTP).

Bei einer Vulkanisation mit Peroxiden werden zur Verzögerung der Anvulkanisation Verbindungen wie sie in WO-A-97/01597 und US-A-4,857,571 genannt sind, eingesetzt. Bevorzugt sind sterisch gehinderte p-Dialkylaminophenole, insbesondere Ethanox 703 (Sartomer).

Die weiteren üblichen Kautschukadditive umfassen z.B. die typischen und dem Fachmann bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform) oder Silikate eingesetzt werden. Die Füllstoffe werden üblicherweise in Mengen im Bereich von 5 bis 350 Gew.Teilen, bevorzugt von 5 bis 300 Gew.Teilen, bezogen auf 100 Gew.Teile des hydrierten Nitrilkautschuks eingesetzt.

Als **Füllstoffaktivatoren** kommen insbesondere organische Silane, wie beispielsweise Bis(tri-ethoxy-silyl-propyl-tetrasulfid), Bis(tri-ethoxy-silyl-propyl-disulfid), Vinyltrimethyloxysilan, Vinyldimethoxymethylsilan, Vinyltriethoxysilan, Vinyltris(2-methoxy-ethoxy)silan, N-Cyclohexyl-3 -aminopropyltrimethoxysilan, 3 -Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen in Betracht.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem erfindungsgemäßen Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe der Additive und typischerweise am Schluss des Vernetzungssystems.. Das Mischen erfolgt unter Kontrolle der Temperatur mit der Maßgabe, dass das Mischgut für eine geeignete Zeit bei einer Temperatur im Bereich von 100 bis 150°C verbleibt. Nach einem geeigneten Mischzeitraum wird der Innenmischer gelüftet und der Schacht gereinigt. Nach einem weiteren Zeitraum wird der Innenmischer unter Erhalt der vulkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden.

**Gegenstand der Erfindung** ist ferner ein **Verfahren zur Herstellung von Vulkanisaten** auf Basis der erfindungsgemäßen hydrierten Nitrilkautschuke, dadurch gekennzeichnet, dass die vulkanisierbaren Mischungen enthaltend den erfindungsgemäßen hydrierten Nitrilkautschuk der Vulkanisation unterworfen werden. Üblicherweise erfolgt die Vulkanisation bei Temperaturen im Bereich von 100°C bis 200°C, bevorzugt bei Temperaturen von 120°C bis 190°C und ganz besonders bevorzugt von 130°C bis 180°C.

Bevorzugt erfolgt die Vulkanisation in einem Formgebungsverfahren.

Die vulkanisierbare Mischung wird dafür mittels Extrudern, Spritzgussanlagen, Walzen oder Kalandern weiterverarbeitet. Die so erhältliche vorgeformte Masse wird anschließend typischerweise in Pressen, Autoklaven, Heißluftanlagen oder in sogenannten automatischen Matten-vulkanisationsanlagen ausvulkanisiert, wobei sich Temperaturen im Bereich von 120°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine Nachvulkanisation notwendig sein, um eine vollständige Vulkanisation zu erreichen.

**Gegenstand der Erfindung** sind entsprechend die so erhältlichen **Vulkanisate auf Basis der erfindungsgemäßen hydrierten Nitrilkautschuke.** Diese Vulkanisate können die Form von Riemen, von Walzenbelägen, einer Dichtung, einer Kappe, eines Stopfen, eines Schlauchs, von Bodenbelag, von Dichtungsmatten oder -platten, Profilen oder Membranen aufweisen. Speziell kann es sich um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch, eine Schuhsohle oder - teile davon oder eine Pumpenmembran handeln.

### Beispiele:

### I Analytische Bestimmungsmethoden

Die quantitative **Bestimmung von 2,6-Di-tert.butyl-p-kresol** (Vulkanox® KB) in Nitrilkautschuk bzw. in hydriertem Nitrilkautschuk erfolgt gaschromatographisch unter Verwendung eines internen Standards (Naphthalin). Für die Bestimmung werden 3 bis 5 g Polymer mit einer Genauigkeit von 0,01 g in 40 mL eines Toluol/THF-Gemisches (Volumenverhältnis 1:1) unter Rühren in einem verschließbaren Erlenmeyerkolben gelöst. Der Lösung werden als interner Standard 20,0 mg Naphthalin (gelöst in 5 mL Toluol) zugesetzt und durch Rühren gleichmäßig verteilt. Durch Zugabe von 80 mL Methanol wird das Polymeren ausgefällt. Das Serum wird gaschromatographisch (Agilent Technologies in Waldbronn, Germany, Gerät 6890) mit folgenden Geräteeinstellungen untersucht:

| | |
|---|---|
| Kapillarsäule: | HP-5, Länge: 30 m; Innendurchmesser 0,32 mm; |
| | Filmdicke: 0,25 µm |
| Injektionsmenge: | 1 µL |
| Injektionstemperatur: | 320°C |
| Ofen-Temperaturprogramm: | 100°C, Aufheizgeschwindigkeit: 10°C/min > 300°C |
| Detektortemperatur: | 300 °C |

Unter diesen Bedingungen wird für **2,6-Di-tert.butyl-p-kresol** eine Retentionszeit von 3,4 min und für Naphthalin eine Retentionszeit von 6,44 min gefunden.

In unabhängigen Messungen wird unter denselben Bedingungen das Responseverhältnis von **2,6-Di-tert.butyl-p-kresol** zu Naphthalin als Basis für die Berechnung des Gehalts an 2,6-Di-**tert.butyl-p-kresol** bestimmt.

Die quantitative **Bestimmung von 2,2-Methylen-bis-(4-methyl-6-tert.butylphenol)** (Vulkanox® BKF) in Nitrilkautschuk erfolgt gaschromatographisch unter Verwendung eines internen Standards (n-Docosan). Für die Bestimmung werden 3 bis 5 g Polymer mit einer Genauigkeit von 0,01 g in 40 mL eines Toluol/THF-Gemisches (Volumenverhältnis 1:1) unter Rühren in einem verschließbaren Erlenmeyerkolben gelöst. Der Lösung werden als interner Standard 50,0 mg n-Docosan (gelöst in 5 mL Toluol) zugesetzt und durch Rühren gleichmäßig verteilt. Durch Zugabe von 80 mL Methanol wird das Polymeren ausgefällt. Das Serum wird gaschromatographisch (Agilent Technologies in Waldbronn, Germany, Gerät 6890) mit folgenden Geräteeinstellungen untersucht:

| | |
|---|---|
| Kapillarsäule: | HP-5, Länge: 30 m; Innendurchmesser 0,32 mm; |
| | Filmdicke: 0,25 µm |
| Injektionsmenge: | 1 µL |
| Injektionstemperatur: | 320 °C |
| Ofen-Temperaturprogramm: | 240°C, 10 min., Aufheizgeschwindigkeit: 20°C/min > 300°C |
| Detektortemperatur: | 300 °C |

Unter diesen Bedingungen wird für 2,2-Methylen-bis-(4-methyl-6-tert.butylphenol) eine Retentionszeit von 5,96 min und für n-Docosan eine Retentionszeit von 3,70 min gefunden.

In unabhängigen Messungen wird unter denselben Bedingungen das Responseverhältnis von 2,2-Methylen-bis-(4-methyl-6-tert.butylphenol) zu n-Docosan als Basis für die Berechnung des Gehalts an 2,2-Methylen-bis-(4-methyl-6-tert.butylphenol) bestimmt.

Die Bestimmung des Gehaltes an **Triphenylphosphan** im hydrierten Nitrilkautschuk erfolgt mittels Gaschromatographie unter Verwendung eines internen Standards. Für die Bestimmung werden jeweils 2 bis 3 g ±0,01 hydrierter Nitrilkautschuk in ein Probengläschen eingewogen, mit 25 ml Aceton gelöst, mit einer bekannten Menge internen Standards (Docosan von Sigma-Aldrich; CA: 629-97-0) versetzt und nach gründlicher Durchmischung durch Zusatz von 50 ml Methanol ausgefällt. Das Fällserum wird gaschromatographisch mittels einer Kapillarsäule aufgetrennt (z.B.: HP-5, 0,25 µm Film, 30 m x 0,32 mm ID):

| | |
|---|---|
| Injektionsmenge: | 1 µL |
| Injektionstemperatur: | 300 °C |
| Ofen-Temperaturprogramm: | 150°C; 10min > 300 °C, 5 min |
| Detektortemperatur: | 300 °C |

Zur Detektion wird ein Flammenionisations-Detektor (FID) eingesetzt.
Unter den angegebenen Bedingungen weisen Triphenylphosphan und der interne Standard folgende Retentionszeiten auf:

| | |
|---|---|
| Triphenylphosphan: | 8,47 min |
| Docosan: | 8,65 min |

Zur quantitativen Bestimmung der im hydrierten Nitrilkautschuk vorliegenden Mengen an Triphenylphosphan (TPP) wird der Responsefaktor für TPP/n-Docosan verwendet, der in einer unabhängigen Messung bestimmt wurde.

Die **flüchtigen Anteile** wurden bestimmt gemäß ISO 248, 4th edition in der Fassung vom 15.06.2005.

### II. NBR-Herstellung

### II.1 Emulsionspolymerisation

Auf Basis der in der folgenden **Tabelle 1** angegebenen Rezeptur wurde ein NBR-Latex hergestellt. Sämtliche Einsatzstoffe sind in Gew.-Teilen bezogen auf 100 Gew.-Teile der Monomer Mischung angegeben. Die Polymerisation erfolgte bei einer Temperatur von 20 °C für eine Dauer von 7 Stunden bis zum Erreichen eines Polymerisationsumsatzes von 74%.

**Tabelle 1: Einsatzstoffe für die Herstellung des Nitrilkautschuks**

| **Latexherstellung** | **Gew.-Teile** |
|---|---|
| Butadien | 56 |
| Acrylnitril | 44 |
| Gesamt-Wassermenge | 200 |
| Erkantol® BXG¹⁾ | 2,8 |
| Baykanol® PQ²⁾ | 0,84 |
| K-Salz der Kokosfettsäure | 0,56 |
| KOH | 0,05 |
| t-DDM⁶⁾ | 0,33/0,33 |
| Kaliumperoxodisulfat³⁾ | 0,27 |
| Tris-(α-hydroxy-ethyl)-amin ⁴⁾ | 0,15 |
| Na-Dithionit ⁵⁾ | 1,19 |
| Diethylhydroxylamin | 0,5 |
| Kaliumhydroxid | 1,28 |

| | |
|---|---|
| ¹⁾ Natriumsalz einer Mischung von mono- und disulfonierten Naphthalinsulfonsäuren mit Isobutylenoligomersubstituenten Erkantol® BXG) ²⁾ Natriumsalz von Methylen-bis-Naphthalinssulfonat (Baykanol® PQ, Lanxess Deutschland GmbH) ³⁾ Kaliumperoxodisulfat (Aldrich-Bestellnummer : 21,622-4) ⁴⁾ Tris-(α-hydroxy-ethyl)-amin (Aldrich-Bestellnummer : T5,830-0) ⁵⁾ Natrium-Dithionit(Aldrich-Bestellnummer : 15,795-3) ⁶⁾ t-DDM (Tertiäres Dodecylmercaptan): C₁₂-Mercaptangemisch der Lanxess Deutschland GmbH | |

In **Tabelle 1** sind für das zur Molekulargewichtsregelung eingesetzte t-DDM⁶⁾ zwei Zahlenwerte angegeben, da die gesamte Menge nicht in einer einzigen Portion zudosiert wurde. Die erste Hälfte wurde bei Polymerisationsbeginn im Reaktor vorgelegt; die zweite Hälfte wurde bei 15% Umsatz nachdosiert.

Die Herstellung des NBR-Latex erfolgte diskontinuierlich in einem 2 m³-Autoklaven mit Rührwerk. Bei dem Ansatz wurden 350 kg der Monomermischung und eine Gesamtwassermenge von 700 kg verwendet. In 600 kg dieser Wassermenge wurden die Emulgatoren Erkantol® BXG (9,8 kg), Baykanol® PQ (2,94 kg) und das Kaliumsalz der Kokosfettsäure (1,96 kg) mit 180 g Kaliumhydroxid im Autoklaven vorgelegt und mit einem Stickstoffstrom gespült. Nach Beendigung der Stickstoffspülung wurden die entstabilisierten Monomeren (196 kg Butadien und 154 kg Acrylnitril) und eine Teilmenge des Reglers t-DDM (1,16 kg) in den Reaktor gegeben. Danach wurde der Reaktor verschlossen. Die Restmenge an Wasser (100 kg) wurde für die Herstellung der wässrigen Lösungen von Tris-(a-hydroxy-ethyl)-amin, Kaliumperoxodisulfat und der Abstopperlösungen verwendet. Durch Zugabe wässriger Lösungen von 950 g Kaliumperoxodisulfat (entsprechend den 0,27 Gew.-Teilen gemäß Tabelle 1) und 530 g Tris-(a-hydroxy-ethyl)-amin (entsprechend den 0,15 Gew.-Teilen gemäß Tabelle 1) wurde die Polymerisation bei 20°C gestartet und über die gesamte Laufzeit bei dieser Temperatur gehalten. Der Polymerisationsverlauf wurde durch gravimetrische Umsatzbestimmungen verfolgt. Bei einem Polymerisationsumsatz von 15 % wurden 1,16 kg Regler t-DDM (entsprechend 0,33 Gew.-Teilen gemäß Tabelle 1) nachdosiert. Bei Erreichen von 74 % Umsatz (7 h) wurde die Polymerisation durch Zugabe einer wässrigen Lösung von Natriumdithionit/(N,N-Diethylhydroxylamin (DEHA) und Kaliumhydroxid abgestoppt. Nicht umgesetzte Monomere und sonstige flüchtigen Bestandteile wurden mittels Wasserdampfdestillation entfernt.

Nach der Polymerisation wies der Latex folgende Eigenschaften **(Tabelle 2)** auf:

**Tabelle 2: Eigenschaften des NBR-Latex**

| **NBR-Latex** | |
|---|---|
| Feststoffgehalt [Gew.%] | 22,1 |
| pH-Wert | 10,6 |
| Acrylnitrilgehalt [Gew. %] | 38,5 % |

### II.2 Stabilisierung und Aufarbeitung des NBR-Latex, der im Folgenden zur Hydrierung eingesetzt wird (s. Tabelle 5)

Vor der Koagulation wurden jeweils 25 kg des Latex mit **4-Methyl-2,6-*tert*-Butylphenol** (Vulkanox® KB der Lanxess Deutschland GmbH) oder mit **2,2-Methylen-bis-(4-methyl-6-tert.butylphenol)** (Vulkanox® BKF der Lanxess Deutschland GmbH) versetzt. Hierfür wurden 50%ige Dispersionen von Vulkanox® KB bzw. Vulkanox® BKF in Wasser eingesetzt.

Die wässrigen **Dispersionen von Vulkanox**® **KB** bzw. von **Vulkanox® BKF** basierten auf folgender Rezeptur, wobei die Herstellung bei 95 bis 98 °C mit Hilfe eines Ultraturrax erfolgte:

| | |
|---|---|
| 360 g | Entionisiertes Wasser (DW-Wasser) |
| 40 g | Alkylphenolpolyglykolether (Emulgator NP® 10 der Lanxess Deutschland GmbH) |
| 400 g | Vulkanox® KB bzw. Vulkanox® BKF der Lanxess Deutschland GmbH |

Die Zusätze an 4-Methyl-2,6-*tert*-Butylphenol bzw. 2,2-Methylen-bis-(4-methyl-6-tert. butylphenol) wurden auf den im Latex enthaltenen Feststoff bezogen und in Gew. % angegeben.

Einen Überblick über die bei den verschiedenen Beispielen eingesetzten Alterungsschutzmittel und deren Menge gibt **Tabelle 3.**

**Tabelle 3: Zur Stabilisierung des Nitrilkautschuks eingesetzte Alterungsschutzmittel und deren Menge**

| | **Beispiel** | **1** | **2** | **3** | **4** | **5** | **6** | **7** | **8** |
|---|---|---|---|---|---|---|---|---|---|
| Vulkanox® KB | [Gew. %] | - | 0,7 | 0,7 | - | 0,7 | 0,7 | 0,7 | 0,7 |
| Vulkanox® BKF | [Gew. %] | 0,06 | - | - | 0,18 | - | - | - | |

Die Latexkoagulation der in **Tabelle 3** aufgeführten Beispiele erfolgte, indem jeweils 25 kg Latex zum Feststoff aufgearbeitet wurden. Hierfür wurde ein rührbarer, offener Behälter mit 100 1 Fassungsvermögen verwendet. In diesem Behälter wurde der Latex vorgelegt, auf 90°C unter Rühren aufgeheizt und durch langsame Zugabe einer 20%igen wässrigen Kochsalzlösung unter Rühren koaguliert. Die für die Latexkoagulation eingesetzte Kochsalzlösung wurde mit normalem Brauchwasser (nicht deionisiert und damit Calcium-Ionen enthaltend) hergestellt. Für die Koagulation wurden jeweils 20 Gew. % Kochsalz bezogen auf Feststoff eingesetzt.

Für die Krümelwäsche war der Koagulationsbehälter mit einem Zu- und Abfluss ausgerüstet. An der Innenseite des Behälters waren zwei Schienen so angebracht, dass der Abfluss mittels eines Siebes (Maschenweite 2 mm) vor der Durchführung der Wäsche abgesperrt werden konnte, so dass die koagulierten Kautschukkrümel bei der Wäsche nicht ausgeschwemmt wurden. Bei den Beispielen wurde das bei der Latex-Koagulation anfallende Latexserum vor Beginn der Wäsche nicht aus dem Koagulationsbehälter entfernt; d. h. das Latexserum wurde durch Verdünnungswäsche entfernt. Die Wäsche wurde mit normalem Brauchwasser (nicht deionisiert und damit Calcium-Ionen enthaltend) bei einem konstanten Wasserdurchsatz von 200 1/h bei 60°C durchgeführt.

Nach Beendigung der Wäsche wurden die Kautschukkrümel mit einem Sieb entnommen, in einer Weldingschnecke auf Restfeuchten von 10-15 Gew. % mechanisch entwässert und diskontinuierlich in einem Vakuumtrockenschrank bei 70°C auf eine Restfeuchte von < 1,5 Gew. % thermisch getrocknet. Die nach der Trocknung in den Nitrilkautschuken vorliegenden Gehalte an Alterungsschutzmitteln sind in **Tabelle 4** zusammengefasst.

**Tabelle 4: Gehalte verschiedener Phenole im Nitrilkautschuk**

| **Beispiel** | | **1** | **2** | **3** | **4** | **5** | **6** | **7** | **8** |
|---|---|---|---|---|---|---|---|---|---|
| Vulkanox® KB | Gew. % | - | 0,69 | 0,7 | - | 0,70 | 0,69 | 0,7 | 0,68 |
| Vulkanox® BKF | Gew. % | 0,06 | - | - | 0,18 | - | - | - | - |
| Wiederauffindungsrate von 2,6-Di-tert.butyl-p-kresol im NBR | % | - | 99 | 100 | - | 97 | 99 | 100 | 97 |
| Wiederauffindungsrate von 2,2-Methylen-bis-(4-methyl-6-tert.butylphenol) im NBR | % | 100 | - | - | 100 | - | - | - | - |

### III. Herstellung hydrierter Nitrilkautschuke

### III.1 Hydrierung von Nitrilkautschuken

Die **Hydrierungen** wurden unter folgenden Rahmenbedingungen durchgeführt:

| | |
|---|---|
| NBR-Konzentration: | 11,8 Gew.% |
| Wasserstoffdruck: | 80 bar |
| Rührgeschwindigkeit: | 600 min⁻¹ |
| Temperatur: | 120-130°C |
| Tris-(triphenylphosphan)rhodium(I)-chlorid (Evonik-Degussa): | 0,08 Gew.% |
| Triphenylphosphan (BASF): | siehe **Tabelle 5** |
| 2,2-Methylen-bis-(4-methyl-6-tert.butylphenol) | siehe **Tabelle 5** |

Bei den Hydrierungen wurden jeweils 4,0 kg des wie in Punkt II.2 beschrieben hergestellten Nitrilkautschuks in einem 40 1-Autoklaven in 29,50 kg Chlorbenzol gelöst. Vor der Hydrierung wurde die Polymerlösung unter Rühren (170 U/min) sukzessive einmal mit Stickstoff (20 bar) und zwei Mal mit Wasserstoff (20 bar) beaufschlagt und anschließend entspannt. Der Reaktionsansatz wurde auf 120°C erwärmt und mit 80 bar Wasserstoff beaufschlagt. Im nächsten Schritt wurde der Cokatalysator Triphenylphosphan bezogen auf Nitrilkautschuk als Lösung in 250 g Chlorbenzol in den Reaktor dosiert, wobei bei den **erfindungsgemäßen Beispielen 2* und 3*** die triphenylphosphanhaltige Lösung zusätzlich Vulkanox® BKF **(Tabelle 5)** enthielt. Die Hydrierung wurde gestartet, indem Tris-(triphenylphosphan)rhodium(I)-chlorid (gelöst in 250 g Chlorbenzol) zugegeben wurde. Mit nachlassender Reaktion wurde die Innentemperatur sukzessive auf 130°C erhöht. Der Verlauf der Hydrierung erfolgte IR-spektroskopisch entsprechend der in Kautschuk + Gummi.Kunststoff, Vol. 42 (1989), No.3, Seiten 194-197 beschriebenen Methode. Die Hydrierungen wurden jeweils bei Erreichung eines Restdoppelbindungsgehalts <1% nach den in **Tabelle 5** angegebenen Reaktionszeiten durch Abkühlung abgestoppt. Anschließend wurden die Ansätze entspannt. Restmengen an Wasserstoff wurden durch Durchleitung von Stickstoff entfernt.

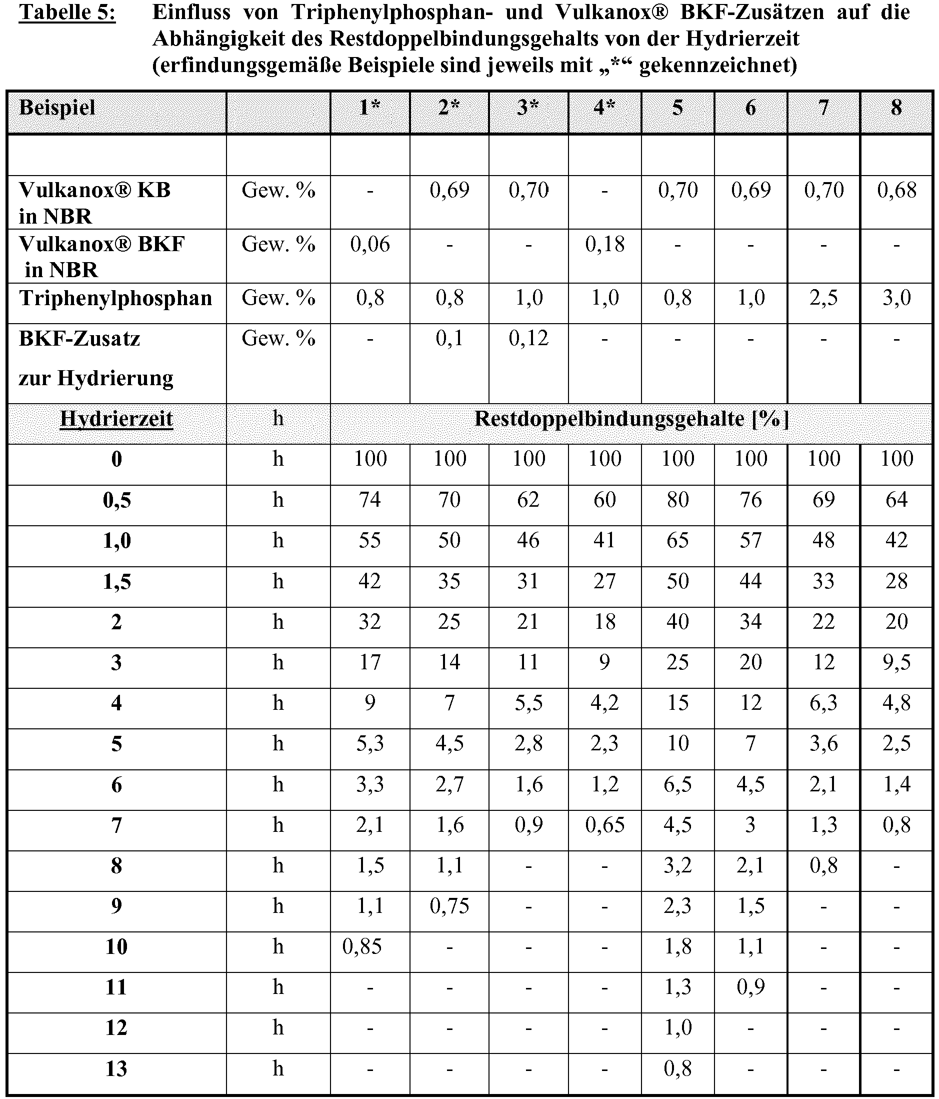

In **Tabelle 5** wird deutlich, dass durch Erhöhung der Triphenylphosphanmenge von 0,8 bis 3,0 phr die Hydriergeschwindigkeit zunimmt **(nicht erfindungsgemäße Beispiele 5 bis 8).** Durch Vergleich der **erfindungsgemäßen Beispiele 1* und 2* mit Beispiel 5** sowie durch Vergleich der **erfindungsgemäßen Beispiele 3* und 4* mit Beispiel 6** wird deutlich, dass die erfindungsgemäßen Zusätze von 2,2-Methylen-bis-(4-methyl-6-tert.butylphenol) (Vulkanox® BKF von Lanxess Deutschland GmbH) unabhängig von der bei der Hydrierung eingesetzten Menge an Triphenylphosphan (0,8 bzw. 1,0 Gew.%) eine substanzielle Beschleunigung der Hydriergeschwindigkeit bewirken. Es ist unerheblich, ob 2,2-Methylen-bis-(4-methyl-6-tert.butylphenol) zusammen mit dem Nitrilkautschuk **(erfindungsgemäße Beispiele 1* und 4*)** oder separat **(erfindungsgemäße Beispiele 2* und 3*)** in den Hydrieransatz gegeben wird.

### III.2 Aufarbeitung der chlorbenzolischen HNBR-Lösungen

Die Isolierung der hydrierten Nitrilkautschuke **der Beispiele 1-8 aus der oben unter III.1** beschriebenen Hydrierung aus der chlorbenzolischen Lösung erfolgte durch Wasserdampfdestillation in semikontinuierlicher Fahrweise ohne vorhergehende Rhodium-Abtrennung. Für die Wasserdampfdestillation wurde ein rührbarer 20 L-Planschliffbehälter aus Glas mit Mantelheizung eingesetzt. Die Einspeisung von Wasserdampf erfolgte über ein Bodenventil. Des Weiteren verfügte das Strippgefäß über Vorrichtungen zur kontinuierlichen Eindosierung einer chlorbenzolischen HNBR-Lösung, einer 2%igen wässrigen Lösung eines wasserlöslichen carboxylgruppenhaltigen Polymers (Orotan®/Firma Rohm und Haas), einer 2%igen wässrigen Calciumchloridlösung sowie von verdünnter Natronlauge (0,5%ig).

In dem Strippgefäß wurden 8,5 L entionisiertes Wasser vorgelegt und durch Mantelheizung auf 98-100°C erwärmt. Nach Beginn der Wasserdampfeinleitung wurde mit der separaten Zudosierung der auf 95-100°C erwärmten chlorbenzolischen Lösung des hydrierten Nitrilkautschuks (0,5 kg HNBR/h) sowie der wässrigen Lösungen von Orotan® und Calciumchlorid bei einer Rührgeschwindigkeit von 2000 U/min begonnen. Die Geschwindigkeiten der Orotan®- und Calciumchlorid-Dosierungen wurden so eingestellt, dass zu jedem Zeitpunkt 0,3 Gew.-Teile Orotan® und 0,15 Gew.-Teile Calciumchlorid jeweils bezogen auf 100 Gew.-Teile der im Strippgefäß vorliegenden Menge an hydriertem Nitilkautschuk vorlagen. Des Weiteren wurde durch Zugabe verdünnter Natronlauge (0,5%ig) der pH-Wert der wässrigen Phase während des gesamten Stripprozesses in einem pH-Bereich von 7,7 bis 8,3 gehalten. Die aus Chlorbenzol und Wasserdampf bestehenden Brüden wurden bei Atmosphärendruck bei 98-100°C abdestilliert und kondensiert. Die Dosierung der HNBR-Lösung wurde beendet, sobald 1,5 kg HNBR im Strippkessel vorlagen. Danach wurde die Wasserdampfdestillation noch 0,5 h fortgesetzt. Nach Beendigung der Wasserdampfdestillation lag der hydrierte Nitrilkautschuk in der Form von Kautschukkrümeln im Durchmesserbereich 3 bis 10 mm in der wässrigen Dispersion vor. Nach Öffnung des Planschliffbehälters wurden die Kautschukkrümel mittels eines Siebes entnommen. Das anhaftende Wasser wurde durch Abtropfen und Abquetschen mechanisch entfernt. Die Restfeuchte lag zwischen 15-20 Gew. %.

Die anschließende Trocknung der wasserfeuchten HNBR-Krümel erfolgte in einem Fließbett-Trockner (Schnelltrockner TG 200 der Firma Kurt Retsch (Haan/Düsseldorf) mit einem Inhalt von 6L. Es wurden jeweils 0,5 kg des feuchten hydrierten Nitrilkautschuke 5 Minuten bei 120-130°C getrocknet Die Strömungsgeschwindigkeit der heißen Luft wurde bei allen Versuchen bei 100 m³/h konstant gehalten. An dem getrockneten hydrierten Nitrilkautschuk wurden die Gehalte an 2,6-Di-tert.butyl-p-kresol und 2,2-Methylen-bis-(4-methyl-6-tert.butylphenol) bestimmt **(Tabelle 6).**

**Tabelle 6: Eigenschaften der unvulkanisierten hydrierten Nitrilkautschuke (erfindungsgemäße Produkte sind mit "*" gekennzeichnet)**

| **Beispiel** | | **1*** | **2*** | **3*** | **4*** | **5** | **6** | **7** | **8** |
|---|---|---|---|---|---|---|---|---|---|
| Triphenylphosphan | Gew % | 0,52 | 0,52 | 0,73 | 0,72 | 0,53 | 0,72 | 2,1 | 2,6 |
| 2,6-Di-tert.butyl-p-kresol im HNBR | Gew.% | - | 0,37 | 0,34 | - | 0,52 | 0,46 | 0,35 | 0,37 |
| 2,2-Methylen-bis-(4-methyl-6-tert.butylphenol) im HNBR | Gew.% | 0,06 | 0,10 | 0,12 | 0,18 | - | - | - | - |

**Tabelle 6** zeigt, dass die erfindungsgemäß hergestellten hydrierten Nitrilkautschuke Triphenylphosphan in Mengen von 0,52 bis 0,73 Gew. % und Methylen-bis-(4-methyl-6-tert.butylphenol) in Mengen von 0,06 bis 0,18 Gew. % enthalten **(Beispiele 1* bis 4*).** Die nicht **erfindungsgemäßen hydrierten Nitrilkautschuke 5 bis 8** enthalten Triphenylphosphan in Mengen von 0,53 bis 2,6 Gew. % und kein Methylen-bis-(4-methyl-6-tert.butylphenol).

Zur Bestimmung der Vulkanisateigenschaften wurden von den hydrierten Nitrilkautschuken der **Tabelle 6** Kautschukmischungen hergestellt, vulkanisiert und das Vulkanisations-verhalten sowie die -eigenschaften bestimmt. Für die Herstellung der Gummimischungen wurde die in **Tabelle 7** aufgeführte Mischung eingesetzt.

**Tabelle 7: Zusammensetzung der Kautschukmischungen**

| **Mischungsbestandteile** | | **Mengen [Gew.-Teile]** |
|---|---|---|
| Hydrierter Nitrilkautschuk | siehe **Tabelle 6** | 100 |
| Ruß | Corax® N 550 (Degussa) | 45 |
| Octyliertes Diphenylamin | Rhenofit® DDA-70 (RheinChemie Rheinau GmbH) | 1,43 |
| Zinksalz des 2-Merc**aptob**enzimidazols | Vulkanox® ZMB-2 (Lanxess Deutschland GmbH) | 0,4 |
| Zinkoxid | Zinkoxid aktiv (Lanxess Deutschland GmbH) | 2,0 |
| Magnesiumoxid | Maglite® DE (Merck & Co. Inc. USA) | 2,0 |
| Triallylisocyanurat | Kettlitz® TAIC 50 | 1,5 |
| Bis(tert-butylperoxyiso-propyl)benzol) (40%ig) | Perkadox® 14-40 B-PD (Akzo-Nobel Chemicals GmbH) | 7,0 |

Die Herstellung der Kautschukmischungen mit den in **Tabelle 7** aufgeführten Komponenten erfolgte in einem Innenmischer (1,5 L Inhalt) mit "intermeshing rotor geometry" (GK1.5E von Werner & Pfleiderer). Bei der Mischungsherstellung wurde die Rotordrehzahl (40 U/min) und der Stempeldruck (8 bar) konstant gehalten. Im ersten Schritt wurde der hydrierte Nitrilkautschuk in den Mischer gegeben. Nach 30 s wurden die anderen Mischungsbestandteile in der in **Tabelle 7** angegebenen Reihenfolge (außer dem Peroxid) zugegeben. Nach einer Mischzeit von 4 min wurde die Mischung ausgeworfen. Das Peroxid wurden kurz vor der Vulkanisation auf einer gekühlten Walze bei einer Temperatur <50°C eingemischt.

### IV. Eigenschaften der unvulkanisierten Kautschukmischungen

Zur Beurteilung des Verarbeitungsverhaltens der unvulkanisierten Kautschukmischungen wurden die Mooney-Viskosität (ML1+4/100°C) nach **ASTM D1646** bestimmt.

Das Vulkanisationsverhalten der Mischungen wurde nach **ASTM D 5289** bei 180°C mit Hilfe eines Moving Die Rheometers (MDR2000 der Firma Alpha Technology) untersucht. Auf diese Weise wurden die charakteristische Vulkameterwerte Fₐ, Fₘₐₓ, Fₘₐₓ.-Fₐ, t₁₀, t₅₀, t₉₀ und t₉₅, bestimmt.

Nach DIN 53 529, Teil 3 bedeuten diese Kennwerte:
- F_{min.}:: Vulkameteranzeige im Minimum der Vernetzungsisotherme
- Fₘₐₓ:: Maximum der Vulkameteranzeige
- Fₘₐₓ - Fₐ:: Differenz der Vulkameteranzeigen zwischen Maximum und Minimum
- t₁₀:: Zeitpunkt, bei dem 10% des Endumsatzes erreicht sind
- t₅₀:: Zeitpunkt, bei dem 50% des Endumsatzes erreicht sind
- t₉₀:: Zeitpunkt, bei dem 90% des Endumsatzes erreicht sind
- t₉₅:: Zeitpunkt, bei dem 95% des Endumsatzes erreicht sind

Die an den unvulkanisierten Kautschukmischungen ermittelten Eigenschaften sind in **Tabelle 8** zusammengefasst.

**Tabelle 8: Eigenschaften der unvulkanisierten Kautschukmischungen**

| **Beispiel** | | **1*** | **2*** | **3*** | **4*** | **5** | **6** | **7** | **8** |
|---|---|---|---|---|---|---|---|---|---|
| **Mischungs-Eigenschaften** | | | | | | | | | |
| ML1+4 at 100°C | ME | 123,0 | 122,3 | 124,7 | 125,5 | 126,7 | 123,8 | 120,8 | 118,1 |

| **Vulkameter bei 180°C (Moving Die Rheometer)** | | | | | | | | | |
|---|---|---|---|---|---|---|---|---|---|
| t₁₀ | sec | 37 | 39 | 39 | 36 | 38 | 37 | 37 | 37 |
| t₅₀ | sec | 106 | 113 | 118 | 105 | 114 | 115 | 114 | 115 |
| t₉₀ | sec | 335 | 331 | 336 | 301 | 322 | 328 | 334 | 336 |
| t₉₅ | sec | 446 | 435 | 434 | 389 | 416 | 425 | 429 | 430 |
| t₉₀-t₁₀ | sec | 298 | 292 | 297 | 265 | 284 | 291 | 297 | 299 |
| Fₘᵢₙ | dNm | 1,96 | 1,73 | 1,85 | 1,93 | 1,94 | 1,88 | 1,85 | 1,73 |
| Fₘₐₓ | dNm | 26,20 | 23,40 | 22,28 | 25,43 | 25,83 | 24,26 | 19,86 | 18,19 |
| Fₘₐₓ - Fₘₐₓ | dNm | 24,24 | 21,67 | 20,43 | 23,50 | 23,89 | 22,38 | 18,01 | 16,46 |

Wie aus **Tabelle 8** hervorgeht, unterscheiden sich die Vulkanisationsgeschwindigkeiten der Kautschukmischungen auf Basis der erfindungsgemäß hergestellten Kautschuke **(Beispiele 1* bis 4*)** nicht signifikant von denen der Kautschukmischungen auf Basis der nicht erfindungsgemäßen Vergleichsbeispiele **4 bis 8.**

Auf Basis der Kautschukmischungen wurden Prüfkörper durch Vulkanisation bei 180°C/26 min. in einer Presse bei einem Hydraulikdruck von 120 bar hergestellt und (ohne Wärmelagerun) auf Raumtemperatur abgekühlt.

**Die Vulkanisateigenschaften wurden auf Basis der nachfolgend genannten Normen bestimmt:**

| | |
|---|---|
| DIN 53505: | Shore A-Härte bei 23°C und 70°C ("Shore A/23°C" und "Shore A/70°C") |
| DIN 53512: | Rückprallelastizität bei 23°C und 70°C ("R23" bzw. "R70") |
| DIN 53504: | Spannungswerte bei 10%, 25%, 50%, 100%, 200% und 300 % Dehnung (σ₁₀, σ₂₅, σ₅₀, σ₁₀₀, σ₂₀₀ und σ₃₀₀) , Zugfestigkeit sowie Bruchdehnung |
| DIN 53516: | Abrieb |
| DIN 53517 | Compression Set (CS) oder Rückverformungsrest; Bestimmung an zylindrischem Prüfkörper 1 (Höhe: 6,3; Durchmesser: 13 mm) nach Lagerung bei 70h/23°C: CS (70 h/023°C) nach Lagerung bei 70h/150°C CS (70 h/150°C). |

Die Vulkanisateigenschaften der Kautschukmischungen sind in **Tabelle 9** zusammengestellt.

**Tabelle 9: Vulkanisateigenschaften (erfindungsgemäße Beispiele sind mit "*" gekennzeichnet)**

| **Beispiel** | | **1*** | **2*** | **3*** | **4*** | **5** | **6** | **7** | **8** |
|---|---|---|---|---|---|---|---|---|---|
| Shore A Härte (23°C) | | 69,1 | 68,5 | 68,9 | 68,9 | 69,1 | 68,9 | 68,4 | 67,5 |
| Shore A Härte (70°C) | | 63,2 | 61,5 | 62,0 | 64,0 | 62,1 | 61,8 | 59,7 | 59,8 |
| R23 | % | 38,9 | 39,6 | 39,8 | 39,1 | 39,4 | 40,1 | 39,7 | 39,4 |
| R70 | % | 59,1 | 58,2 | 57,2 | 57,9 | 58,0 | 58,8 | 57,0 | 54,9 |
| S₅₀ | MPa | 2,3 | 2,0 | 2,0 | 2,2 | 2,0 | 1,9 | 2,0 | 1,9 |
| S₁₀₀ | MPa | 5,8 | 4,9 | 4,9 | 5,6 | 4,8 | 4,3 | 4,1 | 4,0 |
| S₂₀₀ | MPa | 17,4 | 14,8 | 15,1 | 16,8 | 14,1 | 13,9 | 12,4 | 12,0 |
| S₃₀₀ | MPa | 25,5 | 23,5 | 23,7 | 24,7 | 22,9 | 22,5 | 20,1 | 18,7 |
| Zugfestigkeit | MPa | 27,6 | 27,0 | 27,1 | 27,8 | 26,8 | 28,0 | 26,2 | 25,1 |
| ε_{b} | % | 335 | 375 | 372 | 368 | 385 | 410 | 429 | 488 |
| CS (70 h/023°C) | % | 14,0 | 16,2 | 16,2 | 15,4 | 16,4 | 18,6 | 20,2 | 22,0 |
| CS (70 h/150°C) | % | 34,8 | 39,7 | 40,7 | 35,7 | 40,9 | 41,7 | 45,4 | 49,7 |
| Abrieb | mm³ | 45 | 48 | 48 | 46 | 48 | 50 | 53 | 53 |

In **Tabelle 9** wird gezeigt, dass die Vulkanisate auf Basis der erfindungsgemäß hergestellten hydrierten Nitrilkautschuke **(Beispiele 1*, 2*, 3* und 4*)** ein höheres Modulniveau und einen niedrigeren Compression Set (sowohl nach Lagerung bei 70h/23°C als auch nach 70h/150°C) als die Vulkanisate auf Basis der **nicht erfindungsgemäß hergestellten Kautschuke 5, 6, 7 und 8** aufweisen. Ein besonders günstiges Niveau von Modul und Compression Set wird bei den Vulkanisaten auf Basis der **hydrierten Nitrilkautschuke 1* und 4*** gefunden, bei denen der NBR-Feedstock als Alterungsschutzmiattel 2,6-Di-tert.butyl-p-kresol (und kein 2,2-Methylen-bis-(4-methyl-6-tert.butylphenol)) enthält.

## Patentansprüche

1. **Hydrierter Nitrilkautschuk** enthaltend mindestens ein substituiertes Phenol der allgemeinen Formel (I) 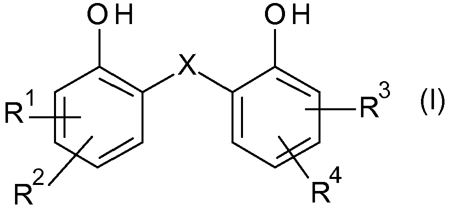 worin
X Schwefel, eine divalente, geradkettige oder verzweigte, acyclische oder cyclische Kohlenwasserstoffgruppe, bevorzugt ein divalenter C₁-C₈ Alkylenrest, besonders bevorzugt Methylen, Ethylen, oder n-Propylen, oder ein Rest der Formel (II), worin n = 0 bis 9 bedeutet, ist, 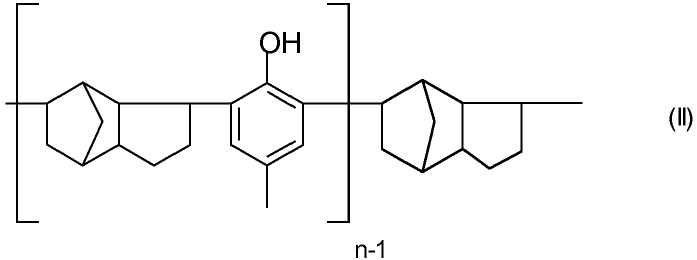
R¹, R², R³ und R⁴ gleich oder verschieden sind und geradkettige oder verzweigte, unsubstituierte oder substituierte C₁-C₈ Alkylgruppen, bevorzugt geradkettige oder verzweigte, unsubstituierte oder substituierte C₁-C₆ Alkylgruppen bedeuten,
in einer Menge im Bereich von 0,01 bis 0,25 Gew.-%, bevorzugt von 0,05 bis 0,2 Gew.-%, besonders bevorzugt von 0,05 bis 0,19 Gew.% und insbesondere bevorzugt 0,05 bis 0,18 Gew.%, bezogen auf den hydrierten Nitrilkautschuk, herstellbar durch Hydrierung von Nitrilkautschuken in Lösung, **dadurch gekennzeichnet, dass** die Hydrierung in Gegenwart von mindestens einem Phenol der allgemeinen Formel (I) durchgeführt wird, wobei das Phenol der allgemeinen Formel (I) in einer Menge von 0,01 bis 0,25 Gew.-%, vorzugsweise 0,05 bis 0,2 Gew.-%, besonders bevorzugt 0,05 bis 0,19 Gew.-%, insbesondere bevorzugt von 0,05 bis 0,18 Gew.-%, jeweils bezogen auf den eingesetzten Nitrilkautschuk zugegen ist.

2. **Hydrierter Nitrilkautschuk** gemäß Anspruch 1, **dadurch gekennzeichnet, dass** das Phenol der allgemeinen Formel (I) ausgewählt ist aus der Gruppe bestehend aus 2,2-Methylen-bis-(4-methyl-6-tert.butylphenol), 2,2-Thio-bis(6-tert-butyl-p-kresol) und einem butylierten Reaktionsprodukt von p-Kresol und Dicyclopentadien gemäß folgender Formel.

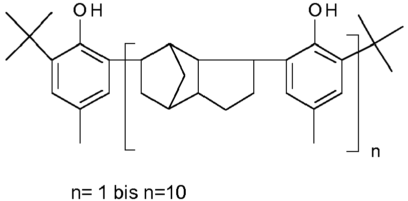

3. **Hydrierter Nitrilkautschuk** gemäß Anspruch 1 oder 2, **dadurch gekennzeichnet, dass** er Wiederholungseinheiten abgeleitet von mindestens Acrylnitril und 1,3-Butadien aufweist, bevorzugt entweder ausschließlich abgeleitet von Acrylnitril und 1,3-Butadien oder abgeleitet von Acrylnitril, 1,3-Butadien und einer oder mehreren α,β-ungesättigten Mono- oder Dicarbonsäure(n), deren Estern oder Amiden aufweist, insbesondere ausschließlich abgeleitet von Acrylnitril und 1,3-Butadien oder abgeleitet von Acrylnitril, 1,3-Butadien und einem oder mehreren Alkylestern einer α,β-ungesättigten Carbonsäure ausgewählt aus der Gruppe Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat und Lauryl(meth)acrylat.

4. **Hydrierter Nitrilkautschuk** gemäß einem der Ansprüche 1 bis 3, **dadurch gekennzeichnet, dass** er das Phenol der allgemeinen Formel (I) in einer Menge im Bereich von 0,01 bis 0,19 Gew.%, bezogen auf den hydrierten Nitrilkautschuk enthält.

5. **Hydrierter Nitrilkautschuk** gemäß Anspruch 4, **dadurch gekennzeichnet, dass** er das Phenol der allgemeinen Formel (I) in einer Menge im Bereich von 0,01 bis 0,18 Gew.%, bezogen auf den hydrierten Nitrilkautschuk enthält.

6. **Hydrierter Nitrilkautschuk** gemäß einem der Ansprüche 1 bis 3, **dadurch gekennzeichnet, dass** er einen Hydriergrad im Bereich von 95 bis 100%, bevorzugt im Bereich von 96% bis 100% besitzt oder besonders bevorzugt einen vollhydrierten Typ mit einem Hydriergrad von größer gleich 99,1% darstellt und mindestens ein Phenol der allgemeinen Formel (I) in einer Menge im Bereich von 0,01 bis 0,19 Gew.%, bevorzugt im Bereich von 0,01 bis 0,18 Gew.% und besonders bevorzugt im Bereich von 0,05 bis 0,18 Gew.%, bezogen auf den hydrierten Nitrilkautschuk, enthält.

7. **Hydrierter Nitrilkautschuk** gemäß einem der Ansprüche 1 bis 3, der ausschließlich Wiederholungseinheiten abgeleitet von Acrylnitril und 1,3-Butadien aufweist und mindestens ein Phenol der allgemeinen Formel (I) in einer Menge im Bereich von 0,01 bis 0,19 Gew.%, bevorzugt im Bereich von 0,01 bis 0,18 Gew.% und besonders bevorzugt im Bereich von 0,05 bis 0,18 Gew.% enthält, jeweils bezogen auf den hydrierten Nitrilkautschuk.

8. **Verfahren** zur Herstellung von hydrierten Nitrilkautschuken gemäß einem der Ansprüche 1 bis 7
durch Hydrierung von Nitrilkautschuken in Lösung, **dadurch gekennzeichnet, dass** die Hydrierung in Gegenwart von mindestens einem Phenol der allgemeinen Formel (I) durchgeführt wird, 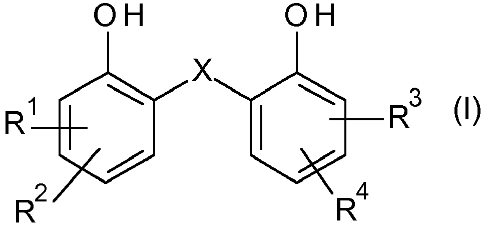 worin
X Schwefel, eine divalente, geradkettige oder verzweigte, acyclische oder cyclische Kohlenwasserstoffgruppe, bevorzugt ein divalenter C₁-C₈ Alkylenrest, besonders bevorzugt Methylen, Ethylen, oder n-Propylen, oder ein Rest der Formel (II), worin n = 0 bis 9 bedeutet, ist, 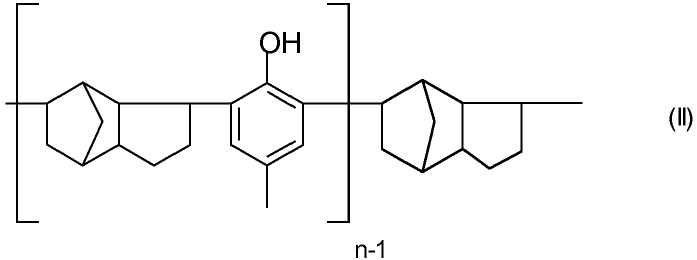
R¹, R², R³ und R⁴ gleich oder verschieden sind und geradkettige oder verzweigte, unsubstituierte oder substituierte C₁-C₈ Alkylgruppen, bevorzugt geradkettige oder verzweigte, unsubstituierte oder substituierte C₁-C₆ Alkylgruppen bedeuten,
wobei das Phenol der allgemeinen Formel (I) in einer Menge von 0,01 bis 0,25 Gew %, vorzugsweise 0,05 bis 0,2 Gew.%, besonders bevorzugt 0,05 bis 0,19 Gew.%, insbesondere bevorzugt 0,05 bis 0,18 Gew.% jeweils bezogen auf den eingesetzten Nitrilkautschuk zugegen ist.

9. **Verfahren** zur Herstellung von hydrierten Nitrilkautschuken gemäß Anspruch 8, **dadurch gekennzeichnet, dass** ein Nitrilkautschuk eingesetzt wird, der mindestens ein Phenol der allgemeinen Formel (I) in einer Menge von 0,01 bis 0,25 Gew. %, vorzugsweise 0,05 bis 0,2 Gew.%, besonders bevorzugt 0,05 bis 0,19 Gew.%, insbesondere bevorzugt 0,05 bis 0,18 Gew.% jeweils bezogen auf den eingesetzten Nitrilkautschuk enthält.

10. **Verfahren** zur Herstellung von hydrierten Nitrilkautschuken gemäß Anspruch 8, **dadurch gekennzeichnet, dass** das Phenol der allgemeinen Formel (I) in einer Menge von 0,01 bis 0,25 Gew. %, vorzugsweise 0,05 bis 0,2 Gew.%, besonders bevorzugt 0,05 bis 0,19 Gew.%, insbesondere bevorzugt 0,05 bis 0,18 Gew.%, jeweils bezogen auf den eingesetzten Nitrilkautschuk erst in den Hydrieransatz eingebracht wird.

11. **Verfahren** zur Herstellung von hydrierten Nitrilkautschuken gemäß einem der Ansprüche 8 bis 10, **dadurch gekennzeichnet, dass** während der Hydrierung Triphenylphosphan in Mengen von 0 bis 1 Gew. %, bezogen auf den eingesetzten Nitrilkautschuk anwesend sein.

12. **Verfahren** zur Herstellung von hydrierten Nitrilkautschuken gemäß einem der Ansprüche 8 bis 11, **dadurch gekennzeichnet, dass** man im Anschluss an die Hydrierung das Lösungsmittel entfernt und den hydrierten Nitrilkautschuk isoliert und entwässert.

13. **Vulkanisierbare Mischungen** enthaltend mindestens einen hydrierten Nitrilkautschuk gemäß einem der Ansprüche 1 bis 7 und mindestens ein Vernetzungssystem enthaltend mindestens einen Vernetzer und optional ein oder mehrere Vernetzungsbeschleuniger.

14. **Verfahren zur Herstellung von Vulkanisaten,** insbesondere als Formkörper, **dadurch gekennzeichnet, dass** man eine vulkanisierbare Mischung gemäß Anspruch 13 vulkanisiert, bevorzugt bei einer Temperatur im Bereich von 100°C bis 200°C, bevorzugt von 120°C bis 190°C und ganz besonders bevorzugt von 130°C bis 180°C.

15. **Vulkanisate** erhältlich nach dem Verfahren gemäß Anspruch 14.

16. **Vulkanisate** gemäß Anspruch 15, **dadurch gekennzeichnet, dass** sie die Form von Riemen, von Walzenbelägen, einer Dichtung, einer Kappe, eines Stopfens, eines Schlauchs, von Bodenbelag, von Dichtungsmatten oder -platten, Profilen oder Membranen aufweisen.

17. **Vulkanisate** gemäß Anspruch 16, **dadurch gekennzeichnet, dass** sie die Form einer O-Ringdichtung, einer Flachdichtung, eines Wellendichtrings, einer Dichtmanschette, einer Dichtkappe, einer Staubschutzkappe, einer Steckerdichtung, eines Thermoisolierschlauchs (mit oder ohne PVC-Zusatz), eines Ölkühlerschlauchs, eines Luftansaugschlauchs, eines Servolenkschlauchs, einer Schuhsohle oder - teilen davon oder einer Pumpenmembran aufweisen.

18. Verwendung von mindestens einem substituierten Phenol der allgemeinen Formel (I) 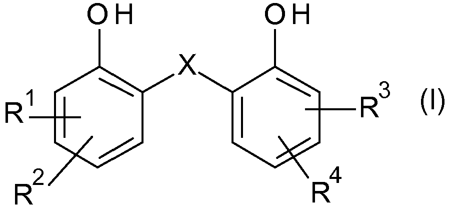 worin
X Schwefel, eine divalente, geradkettige oder verzweigte, acyclische oder cyclische Kohlenwasserstoffgruppe, bevorzugt ein divalenter C₁-C₈ Alkylenrest, besonders bevorzugt Methylen, Ethylen, oder n-Propylen, oder ein Rest der Formel (II), worin n = 0 bis 9 bedeutet, ist, 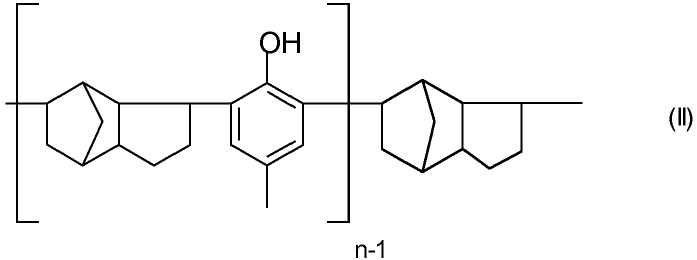
R¹, R², R³ und R⁴ gleich oder verschieden sind und geradkettige oder verzweigte, unsubstituierte oder substituierte C₁-C₈ Alkylgruppen, bevorzugt geradkettige oder verzweigte, unsubstituierte oder substituierte C₁-C₆ Alkylgruppen bedeuten,
in einer Menge im Bereich von 0,01 bis 0,25 Gew.-%, bevorzugt von 0,05 bis 0,2 Gew.-%, besonders bevorzugt von 0,05 bis 0,19 Gew.% und insbesondere bevorzugt 0,05 bis 0,18 Gew.%, bezogen auf den Nitrilkautschuk, zur Beschleunigung der Hydrierung von Nitrilkautschuken.

## Claims

1. **Hydrogenated nitrile rubber** containing at least one substituted phenol of the general formula (I) 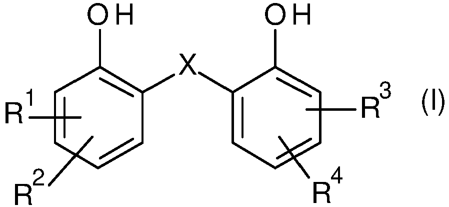 in which
X is sulphur, a divalent, straight-chain or branched, acyclic or cyclic hydrocarbyl group, preferably a divalent C₁-C₈ alkylene radical, more preferably methylene, ethylene or n-propylene, or a radical of the formula (II) in which n = 0 to 9 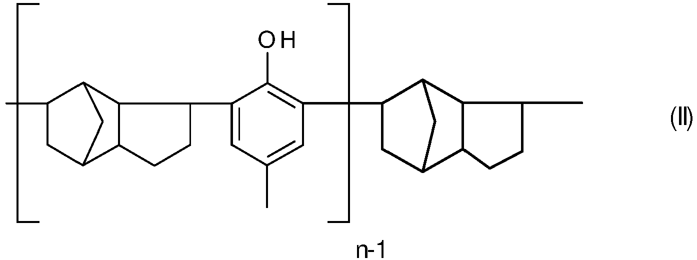
R¹, R², R³ and R⁴ are the same or different and are each straight-chain or branched, unsubstituted or substituted C₁-C₈ alkyl groups, preferably straight-chain or branched, unsubstituted or substituted C₁-C₆ alkyl groups,
in an amount in the range from 0.01 to 0.25% by weight, preferably from 0.05 to 0.2% by weight, more preferably from 0.05 to 0.19% by weight, and especially preferably 0.05 to 0.18% by weight, based on the hydrogenated nitrile rubber, producible by hydrogenation of nitrile rubbers in solution, **characterized in that** the hydrogenation is conducted in the presence of at least one phenol of the general formula (I), where the phenol of the general formula (I) is present in an amount of 0.01 to 0.25% by weight, preferably 0.05 to 0.2% by weight, more preferably 0.05 to 0.19% by weight, especially preferably 0.05 to 0.18% by weight, based in each case on the nitrile rubber used.

2. **Hydrogenated nitrile rubber** according to Claim 1, **characterized in that** the phenol of the general formula (I) is selected from the group consisting of 2,2-methylenebis(4-methyl-6-tert-butylphenol), 2,2-thiobis(6-tert-butyl-p-cresol) and a butylated reaction product of p-cresol and dicyclopentadiene of the following formula:

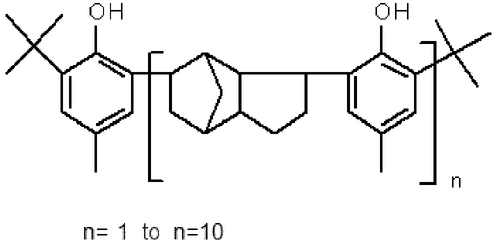

3. **Hydrogenated nitrile rubber** according to Claim 1 or 2, **characterized in that** it has repeat units derived from at least acrylonitrile and 1,3-butadiene, preferably either exclusively derived from acrylonitrile and 1,3-butadiene or derived from acrylonitrile, 1,3-butadiene and one or more α,β-unsaturated mono- or dicarboxylic acid(s), or esters or amides thereof, especially exclusively derived from acrylonitrile and 1,3-butadiene or derived from acrylonitrile, 1,3-butadiene and one or more alkyl esters of an α,β-unsaturated carboxylic acid selected from the group of methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate and lauryl (meth)acrylate.

4. **Hydrogenated nitrile rubber** according to any of Claims 1 to 3, **characterized in that** it contains the phenol of the general formula (I) in an amount in the range from 0.01% to 0.19% by weight, based on the hydrogenated nitrile rubber.

5. **Hydrogenated nitrile rubber** according to Claim 4, **characterized in that** it contains the phenol of the general formula (I) in an amount in the range from 0.01% to 0.18% by weight, based on the hydrogenated nitrile rubber.

6. **Hydrogenated nitrile rubber** according to any of Claims 1 to 3, **characterized in that** it has a degree of hydrogenation in the range from 95% to 100%, preferably in the range from 96% to 100%, or more preferably is a fully hydrogenated type having a degree of hydrogenation of not less than 99.1% and contains at least one phenol of the general formula (I) in an amount in the range from 0.01% to 0.19% by weight, preferably in the range from 0.01% to 0.18% by weight and more preferably in the range from 0.05% to 0.18% by weight, based on the hydrogenated nitrile rubber.

7. **Hydrogenated nitrile rubber** according to any of Claims 1 to 3, having exclusively repeat units derived from acrylonitrile and 1,3-butadiene and containing at least one phenol of the general formula (I) in an amount in the range from 0.01% to 0.19% by weight, preferably in the range from 0.01% to 0.18% by weight and more preferably in the range from 0.05% to 0.18% by weight, based in each case on the hydrogenated nitrile rubber.

8. **Process** for producing hydrogenated nitrile rubbers according to any of Claims 1 to 7 by hydrogenation of nitrile rubbers in solution, **characterized in that** the hydrogenation is conducted in the presence of at least one phenol of the general formula (I) 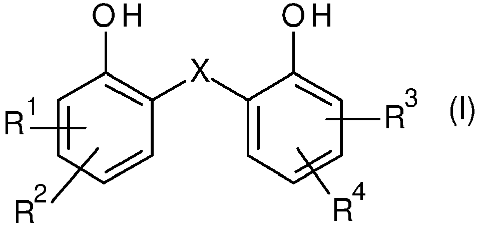 in which
X is sulphur, a divalent, straight-chain or branched, acyclic or cyclic hydrocarbyl group, preferably a divalent C₁-C₈ alkylene radical, more preferably methylene, ethylene or n-propylene, or a radical of the formula (II) in which n = 0 to 9 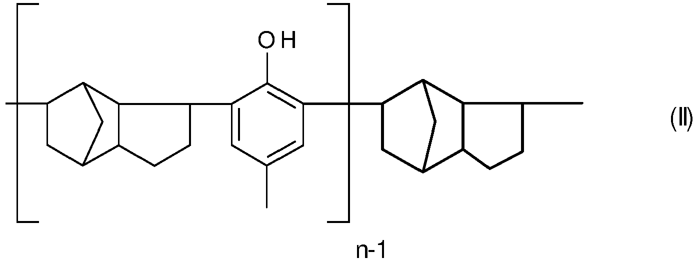
R¹, R², R³ and R⁴ are the same or different and are each straight-chain or branched, unsubstituted or substituted C₁-C₈ alkyl groups, preferably straight-chain or branched, unsubstituted or substituted C₁-C₆ alkyl groups,
where the phenol of the general formula (I) is present in an amount of 0.01 to 0.25% by weight, preferably 0.05 to 0.2% by weight, more preferably 0.05 to 0.19% by weight, especially preferably 0.05 to 0.18% by weight, based in each case on the hydrogenated nitrile rubber used.

9. **Process** for producing hydrogenated nitrile rubbers according to Claim 8, **characterized in that** a nitrile rubber containing at least one phenol of the general formula (I) in an amount of 0.01 to 0.25% by weight, preferably 0.05 to 0.2% by weight, more preferably 0.05 to 0.19% by weight, especially preferably 0.05 to 0.18% by weight, based in each case on the nitrile rubber used, is used.

10. **Process** for producing hydrogenated nitrile rubbers according to Claim 8, **characterized in that** the phenol of the general formula (I) is only introduced into the hydrogenation mixture in an amount of 0.01 to 0.25% by weight, preferably 0.05 to 0.2% by weight, more preferably 0.05 to 0.19% by weight, especially preferably 0.05 to 0.18% by weight, based in each case on the nitrile rubber used.

11. **Process** for producing hydrogenated nitrile rubbers according to any of Claims 8 to 10, **characterized in that** triphenylphosphine be present during the hydrogenation in amounts of 0 to 1% by weight, based on the nitrile rubber used.

12. **Process** for producing hydrogenated nitrile rubbers according to any of Claims 8 to 11, **characterized in that**, after the hydrogenation, the solvent is removed and the hydrogenated nitrile rubber is isolated and dewatered.

13. **Vulcanizable mixtures** comprising at least one hydrogenated nitrile rubber according to any of Claims 1 to 7 and at least one crosslinking system comprising at least one crosslinker and optionally one or more crosslinking accelerators.

14. **Process for producing vulcanizates,** especially in the form of shaped bodies, **characterized in that** a vulcanizable mixture according to Claim 13 is vulcanized, preferably at a temperature in the range from 100°C to 200°C, more preferably from 120°C to 190°C and especially preferably from 130°C to 180°C.

15. **Vulcanizates** obtainable by the process according to Claim 14.

16. **Vulcanizates** according to Claim 15, **characterized in that** they have the form of drive belts, of roller coverings, of a seal, of a cap, of a stopper, of a hose, of floor covering, of sealing mats or sheets, profiles or membranes.

17. **Vulcanizates** according to Claim 16, **characterized in that** they have the form of an O-ring seal, a flat seal, a shaft sealing ring, a gasket sleeve, a sealing cap, a dust protection cap, a connector seal, a thermal insulation hose (with or without added PVC), an oil cooler hose, an air suction hose, a power steering hose, a shoe sole or parts thereof, or a pump membrane.

18. Use of at least one substituted phenol of the general formula (I) 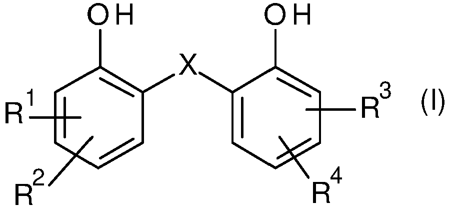 in which
X is sulphur, a divalent, straight-chain or branched, acyclic or cyclic hydrocarbyl group, preferably a divalent C₁-C₈ alkylene radical, more preferably methylene, ethylene or n-propylene, or a radical of the formula (II) in which n = 0 to 9 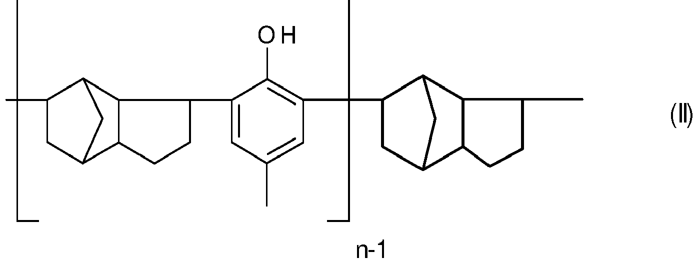
R¹, R², R³ and R⁴ are the same or different and are each straight-chain or branched, unsubstituted or substituted C₁-C₈ alkyl groups, preferably straight-chain or branched, unsubstituted or substituted C₁-C₆ alkyl groups,
in an amount in the range from 0.01 to 0.25% by weight, preferably from 0.05 to 0.2% by weight, more preferably from 0.05 to 0.19% by weight, and especially preferably 0.05 to 0.18% by weight, based on the nitrile rubber, for accelerating the hydrogenation of nitrile rubbers.

## Revendications

1. Caoutchouc de nitrile hydrogéné contenant au moins un phénol substitué de formule générale (I) 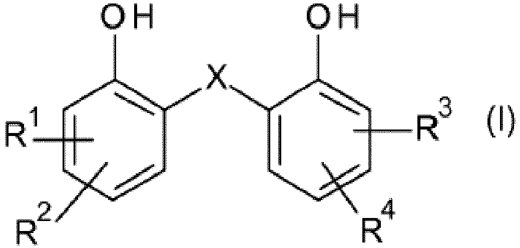 dans laquelle
X est soufre, un groupe hydrocarboné divalent, linéaire ou ramifié, acyclique ou cyclique, préférablement un radical divalent C₁₋₈-alkylène, particulièrement préférablement méthylène, éthylène ou n-propylène, ou un radical de formule (II), dans laquelle n = 0 à 9, 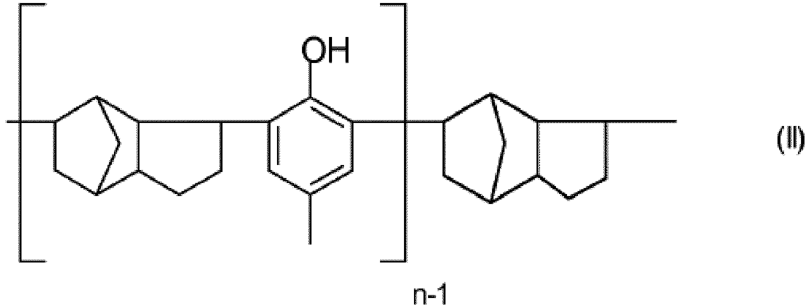
R¹, R², R³ et R⁴ étant identiques ou différents et signifiant des groupes C₁₋₈-alkyle linéaires ou ramifiés, non substitués ou substitués, préférablement des groupes C₁₋₆-alkyle linéaires ou ramifiés, non substitués ou substitués,
en une quantité dans la plage de 0,01 à 0,25 % en poids, préférablement de 0,05 à 0,2 % en poids, particulièrement préférablement de 0,05 à 0,19 % en poids et en particulier préférablement de 0,05 à 0,18 % en poids, par rapport au caoutchouc de nitrile hydrogéné, pouvant être préparé par l'hydrogénation de caoutchoucs de nitrile en solution, **caractérisé en ce que** l'hydrogénation est mise en œuvre en présence d'au moins un phénol de formule générale (I), le phénol de formule générale (I) étant ajouté en une quantité de 0,01 à 0,25 % en poids, de préférence de 0,05 à 0,2 % en poids, particulièrement préférablement de 0,05 à 0,19 % en poids et en particulier préférablement de 0,05 à 0,18 % en poids, à chaque fois par rapport au caoutchouc de nitrile utilisé.

2. Caoutchouc de nitrile hydrogéné selon la revendication 1, **caractérisé en ce que** le phénol de formule générale (I) est choisi dans le groupe constitué par le 2,2-méthylène-bis-(4-méthyl-6-tert-butylphénol), le 2,2-thio-bis(6-tert-butyl-p-crésol) et un produit de réaction butylé de p-crésol et de dicyclopentadiène selon la formule suivante

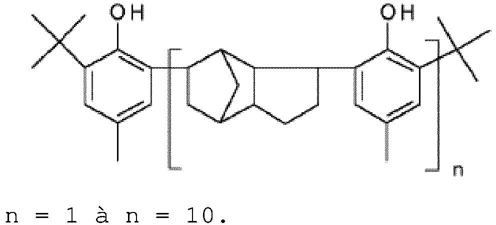

3. Caoutchouc de nitrile hydrogéné selon la revendication 1 ou 2, **caractérisé en ce qu'**il présente des motifs répétitifs issus au moins de l'acrylonitrile et du 1,3-butadiène, préférablement soit exclusivement issus de l'acrylonitrile et du 1,3-butadiène, soit issus de l'acrylonitrile, du 1,3-butadiène et d'un ou plusieurs acide(s) monocarboxylique(s) ou dicarboxylique(s) α,β-insaturé(s), de leurs esters ou de leurs amides, en particulier exclusivement issus de l'acrylonitrile et du 1,3-butadiène ou issus de l'acrylonitrile, du 1,3-butadiène et d'un ou plusieurs esters d'alkyle d'un acide carboxylique α,β-insaturé choisi dans le groupe du (méth)acrylate de méthyle, du (méth)acrylate d'éthyle, du (méth)acrylate de propyle, du (méth)acrylate de n-butyle, du (méth)acrylate de t-butyle, du (méth)acrylate d'hexyle, du (méth)acrylate de 2-éthylhexyle, du (méth)acrylate d'octyle et du (méth)acrylate de lauryle.

4. Caoutchouc de nitrile hydrogéné selon l'une quelconque des revendications 1 à 3, **caractérisé en ce qu'**il contient le phénol de formule générale (I) en une quantité dans la plage de 0,01 à 0,19 % en poids, par rapport au caoutchouc de nitrile hydrogéné.

5. Caoutchouc de nitrile hydrogéné selon la revendication 4, **caractérisé en ce qu'**il contient le phénol de formule générale (I) en une quantité dans la plage de 0,01 à 0,18 % en poids, par rapport au caoutchouc de nitrile hydrogéné.

6. Caoutchouc de nitrile hydrogéné selon l'une quelconque des revendications 1 à 3, **caractérisé en ce qu'**il possède un degré d'hydrogénation dans la plage de 95 à 100 %, préférablement dans la plage de 96 % à 100 % ou particulièrement préférablement il représente un type totalement hydrogéné doté d'un degré d'hydrogénation supérieur ou égal à 99,1 % et contient au moins un phénol de formule générale (I) en une quantité dans la plage de 0,01 à 0,19 % en poids, préférablement dans la plage de 0,01 à 0,18 % en poids et particulièrement préférablement dans la plage de 0,05 à 0,18 % en poids, par rapport au caoutchouc de nitrile hydrogéné.

7. Caoutchouc de nitrile hydrogéné selon l'une quelconque des revendications 1 à 3, qui présente exclusivement des motifs répétitifs issus de l'acrylonitrile et du 1,3-butadiène et contient au moins un phénol de formule générale (I) en une quantité dans la plage de 0,01 à 0,19 % en poids, préférablement dans la plage de 0,01 à 0,18 % en poids et particulièrement préférablement dans la plage de 0,05 à 0,18 % en poids, à chaque fois par rapport au caoutchouc de nitrile hydrogéné.

8. Procédé pour la préparation de caoutchoucs de nitrile hydrogénés selon l'une quelconque des revendications 1 à 7
par hydrogénation de caoutchoucs de nitrile en solution, **caractérisé en ce que** l'hydrogénation est mise en œuvre en présence d'au moins un phénol de formule générale (I), 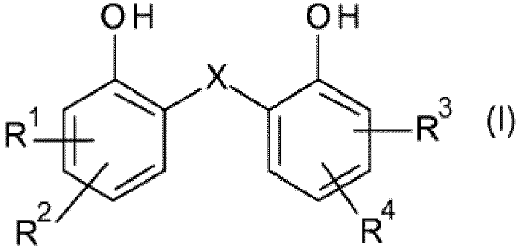 dans laquelle
X est soufre, un groupe hydrocarboné divalent, linéaire ou ramifié, acyclique ou cyclique, préférablement un radical divalent C₁₋₈-alkylène, particulièrement préférablement méthylène, éthylène ou n-propylène, ou un radical de formule (II), dans laquelle n = 0 à 9, 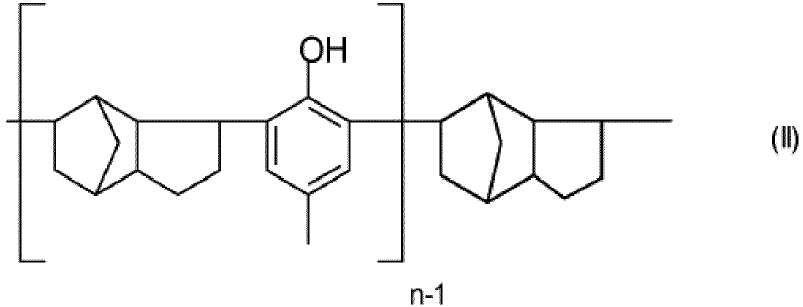
R¹, R², R³ et R⁴ étant identiques ou différents et signifiant des groupes C₁₋₈-alkyle linéaires ou ramifiés, non substitués ou substitués, préférablement des groupes C₁₋₆-alkyle linéaires ou ramifiés, non substitués ou substitués,
le phénol de formule générale (I) étant ajouté en une quantité de 0,01 à 0,25 % en poids, de préférence de 0,05 à 0,2 % en poids, particulièrement préférablement de 0,05 à 0,19 % en poids et en particulier préférablement de 0,05 à 0,18 % en poids, à chaque fois par rapport au caoutchouc de nitrile utilisé.

9. Procédé pour la préparation de caoutchoucs de nitrile hydrogénés selon la revendication 8, **caractérisé en ce qu'**un caoutchouc de nitrile est utilisé, qui contient au moins un phénol de formule générale (I) en une quantité de 0,01 à 0,25 % en poids, de préférence de 0,05 à 0,2 % en poids, particulièrement préférablement de 0,05 à 0,19 % en poids et en particulier préférablement de 0,05 à 0,18 % en poids, à chaque fois par rapport au caoutchouc de nitrile utilisé.

10. Procédé pour la préparation de caoutchoucs de nitrile hydrogénés selon la revendication 8, **caractérisé en ce que** le phénol de formule générale (I) est d'abord introduit dans la réaction d'hydrogénation, en une quantité de 0,01 à 0,25 % en poids, de préférence de 0,05 à 0,2 % en poids, particulièrement préférablement de 0,05 à 0,19 % en poids et en particulier préférablement de 0,05 à 0,18 % en poids, à chaque fois par rapport au caoutchouc de nitrile utilisé.

11. Procédé pour la préparation de caoutchoucs de nitrile hydrogénés selon l'une quelconque des revendications 8 à 10, **caractérisé en ce que** pendant l'hydrogénation, de la triphénylphosphine est présente en des quantités de 0 à 1 % en poids, par rapport au caoutchouc de nitrile utilisé.

12. Procédé pour la préparation de caoutchoucs de nitrile hydrogénés selon l'une quelconque des revendications 8 à 11, **caractérisé en ce qu'**on élimine le solvant à l'issue de l'hydrogénation et on isole et on déshydrate le caoutchouc de nitrile hydrogéné.

13. Mélanges vulcanisables contenant au moins un caoutchouc de nitrile hydrogéné selon l'une quelconque des revendications 1 à 7 et au moins un système de réticulation contenant au moins un agent de réticulation et éventuellement un ou plusieurs accélérateurs de réticulation.

14. Procédé pour la préparation de vulcanisats, en particulier sous forme de corps moulés, **caractérisé en ce qu'**on vulcanise un mélange vulcanisable selon la revendication 13, préférablement à une température dans la plage de 100 °C à 200 °C, préférablement de 120 °C à 190 °C et tout particulièrement préférablement de 130 °C à 180 °C.

15. Vulcanisats pouvant être obtenus par le procédé selon la revendication 14.

16. Vulcanisats selon la revendication 15, **caractérisés en ce qu'**ils présentent la forme de courroies, de revêtements de cylindres, d'un joint, d'un capuchon, d'un bouchon, d'un tuyau, d'un revêtement de sol, de matelas d'étanchéité ou de plaques d'étanchéité, de profilés ou de membranes.

17. Vulcanisats selon la revendication 16, **caractérisés en ce qu'**ils présentent la forme d'un joint torique, d'un joint plat, d'une bague d'étanchéité pour arbre, d'une manchette d'étanchéité, d'un capuchon d'étanchéité, d'un capuchon antipoussière, d'un joint de prise, d'un tuyau thermoisolant (avec ou sans ajout de PVC), d'un tuyau de refroidisseur d'huile, d'un tuyau d'admission d'air, d'un tuyau de direction assistée, d'une semelle de chaussure ou de parties de chaussure ou d'une membrane de pompe.

18. Utilisation d'au moins un phénol substitué de formule générale (I) 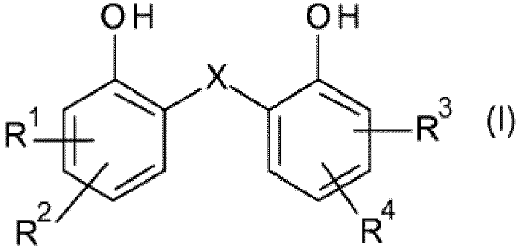 dans laquelle
X est soufre, un groupe hydrocarboné divalent, linéaire ou ramifié, acyclique ou cyclique, préférablement un radical divalent C₁₋₈-alkylène, particulièrement préférablement méthylène, éthylène ou n-propylène, ou un radical de formule (II), dans laquelle n = 0 à 9, 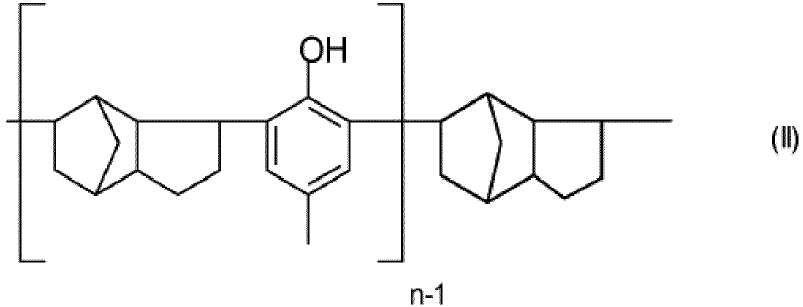
R¹, R², R³ et R⁴ étant identiques ou différents et signifiant des groupes C₁₋₈-alkyle linéaires ou ramifiés, non substitués ou substitués, préférablement des groupes C₁₋₆-alkyle linéaires ou ramifiés, non substitués ou substitués,
en une quantité dans la plage de 0,01 à 0,25 % en poids, préférablement de 0,05 à 0,2 % en poids, particulièrement préférablement de 0,05 à 0,19 % en poids et en particulier préférablement de 0,05 à 0,18 % en poids, par rapport au caoutchouc de nitrile, pour l'accélération de l'hydrogénation de caoutchoucs de nitrile.
